# EUROPÄISCHE PATENTSCHRIFT

(11) **EP 1 436 358 B1**
(45) Veröffentlichungstag und Bekanntmachung des Hinweises auf die Patenterteilung: **19.12.2007**
(21) Anmeldenummer: 02782900.1
(22) Anmeldetag: 14.10.2002
(51) Int. Cl.: C09K 19/20, C09K 19/42, C09K 19/44, C09K 19/46

(54) **FLÜSSIGKRISTALLINE VERBINDUNGEN**
LIQUID CRYSTAL COMPOUNDS
COMPOSES A CRISTAUX LIQUIDES

(30) Priorität: 17.10.2001 DE 10151300
(43) Veröffentlichungstag der Anmeldung: 14.07.2004
(73) Patentinhaber: Merck Patent GmbH, 64293 Darmstadt (DE)
(72) Erfinder: KIRSCH, Peer, 64342 Seeheim-Jugenheim (DE); PAULUTH, Detlef, 64372 Ober-Ramstadt (DE); RUHL, Andreas, 64380 Rossdorf (DE); KRAUSE, Joachim, 64807 Dieburg (DE); TARUMI, Kazuaki, 64342 Seeheim-Jugenheim (DE); HECKMEIER, Michael, 69502 Hemsbach (DE)
(86) Internationale Anmeldenummer: PCT/EP2002/011463
(87) Internationale Veröffentlichungsnummer: WO 2003/033619

(56) Entgegenhaltungen:
- EP-A- 0 786 445
- EP-A- 1 046 694
- EP-A- 1 085 073
- EP-A- 1 096 001
- EP-A- 1 245 660
- WO-A-01/12751
- WO-A-01/27221
- WO-A-01/46336
- DE-A- 10 124 480
- DE-A- 10 158 081
- DE-A- 19 531 165
- GB-A- 2 229 438

## Beschreibung

Die vorliegende Erfindung betrifft flüssigkristalline Verbindungen sowie ein flüssigkristallines Medium, dessen Verwendung für elektrooptische Zwecke und dieses Medium enthaltende Anzeigen.

Flüssige Kristalle werden vor allem als Dielektrika in Anzeigevorrichtungen verwendet, da die optischen Eigenschaften solcher Substanzen durch eine angelegte Spannung beeinflusst werden können. Elektrooptische Vorrichtungen auf der Basis von Flüssigkristallen sind dem Fachmann bestens bekannt und können auf verschiedenen Effekten beruhen. Derartige Vorrichtungen sind beispielsweise Zeilen mit dynamischer Streuung, DAP-Zellen (Deformation aufgerichteter Phasen), Gast/Wirt-Zellen, TN-Zellen mit verdrillt nematischer ("twisted nematic") Struktur, STN-Zellen ("supertwisted nematic"), SBE-Zellen ("superbirefringence effect") und OMI-Zellen ("optical mode interference"). Die gebräuchlichsten Anzeigevorrichtungen beruhen auf dem Schadt-Helfrich-Effekt und besitzen eine verdrillt nematische Struktur.

Die Flüssigkristallmaterialien müssen eine gute chemische und thermische Stabilität und eine gute Stabilität gegenüber elektrischen Feldern und elektromagnetischer Strahlung besitzen. Ferner sollten die Flüssigkristallmaterialien niedere Viskosität aufweisen und in den Zellen kurze Ansprechzeiten, tiefe Schwellenspannungen und einen hohen Kontrast ergeben.

Weiterhin sollten sie bei üblichen Betriebstemperaturen, d.h. in einem möglichst breiten Bereich unterhalb und oberhalb Raumtemperatur eine geeignete Mesophase besitzen, beispielsweise für die oben genannten Zellen eine nematische oder cholesterische Mesophase. Da Flüssigkristalle in der Regel als Mischungen mehrerer Komponenten zur Anwendung gelangen, ist es wichtig, dass die Komponenten untereinander gut mischbar sind. Weitere Eigenschaften, wie die elektrische Leitfähigkeit, die dielektrische Anisotropie und die optische Anisotropie, müssen je nach Zellentyp und Anwendungsgebiet unterschiedlichen Anforderungen genügen. Beispielsweise sollten Materialien für Zellen mit verdrillt nematischer Struktur eine positive dielektrische Anisotropie und eine geringe elektrische Leitfähigkeit aufweisen.

Beispielsweise sind für Matrix-Flüssigkristallanzeigen mit integrierten nichtlinearen Elementen zur Schaltung einzelner Bildpunkte (MFK-Anzeigen) Medien mit großer positiver dielektrischer Anisotropie, breiten nematischen Phasen, relativ niedriger Doppelbrechung, sehr hohem spezifischen Widerstand, guter UV- und Temperaturstabilität und geringem Dampfdruck erwünscht.

Derartige Matrix-Flüssigkristallanzeigen sind bekannt. Als nichtlineare Elemente zur individuellen Schaltung der einzelnen Bildpunkte können beispielsweise aktive Elemente (d.h. Transistoren) verwendet werden. Man spricht dann von einer "aktiven Matrix", wobei man zwei Typen unterscheiden kann:
1. MOS (Metal Oxide Semiconductor) oder andere Dioden auf Silizium-Wafer als Substrat.
2. Dünnfilm-Transistoren (TFT) auf einer Glasplatte als Substrat.

Die Verwendung von einkristallinem Silizium als Substratmaterial beschränkt die Displaygröße, da auch die modulartige Zusammensetzung verschiedener Teildisplays an den Stößen zu Problemen führt.

Bei dem aussichtsreicheren Typ 2, welcher bevorzugt ist, wird als elektrooptischer Effekt üblicherweise der TN-Effekt verwendet. Man unterscheidet zwei Technologien: TFT's aus Verbindungshalbleitern wie z.B. CdSe oder TFT's auf der Basis von polykristallinem oder amorphem Silizium. An letzterer Technologie wird weltweit mit großer Intensität gearbeitet.

Die TFT-Matrix ist auf der Innenseite der einen Glasplatte der Anzeige aufgebracht, während die andere Glasplatte auf der Innenseite die transparente Gegenelektrode trägt. Im Vergleich zu der Größe der Bildpunkt-Elektrode ist der TFT sehr klein und stört das Bild praktisch nicht. Diese Technologie kann auch für voll farbtaugliche Bilddarstellungen erweitert werden, wobei ein Mosaik von roten, grünen und blauen Filtern derart angeordnet ist, dass je ein Filterelement einem schaltbaren Bildelement gegenüber liegt.

Die TFT-Anzeigen arbeiten üblicherweise als TN-Zellen mit gekreuzten Polarisatoren in Transmission und sind von hinten beleuchtet.

Der Begriff MFK-Anzeigen umfasst hier jedes Matrix-Display mit integrierten nichtlinearen Elementen, d.h. neben der aktiven Matrix auch Anzeigen mit passiven Elementen wie Varistoren oder Dioden (MIM = Metall-Isolator-Metall).

Derartige MFK-Anzeigen eignen sich insbesondere für TV-Anwendungen (z.B. Taschenfernseher) oder für hochinformative Displays für Rechneranwendungen (Laptop) und im Automobil- oder Flugzeugbau. Neben Problemen hinsichtlich der Winkelabhängigkeit des Kontrastes und der Schaltzeiten resultieren bei MFK-Anzeigen Schwierigkeiten bedingt durch nicht ausreichend hohen spezifischen Widerstand der Flüssigkristallmischungen [TOGASHI, S., SEKIGUCHI, K., TANABE, H., YAMAMOTO, E., SORIMACHI, K., TAJIMA, E., WATANABE, H., SHIMIZU, H., Proc. Eurodisplay 84, Sept. 1984: A 210-288 Matrix LCD Controlled by Double Stage Diode Rings, p. 141 ff, Paris; STROMER, M., Proc. Eurodisplay 84, Sept. 1984: Design of Thin Film Transistors for Matrix Adressing of Television Liquid Crystal Displays, p. 145 ff, Paris]. Mit abnehmendem Widerstand verschlechtert sich der Kontrast einer MFK-Anzeige und es kann das Problem der "after image elimination" auftreten. Da der spezifische Widerstand der Flüssigkristallmischung durch Wechselwirkung mit den inneren Oberflächen der Anzeige im allgemeinen über die Lebenszeit einer MFK-Anzeige abnimmt, ist ein hoher (Anfangs)-Widerstand sehr wichtig, um akzeptable Standzeiten zu erhalten. Insbesondere bei low-volt-Mischungen war es bisher nicht möglich, sehr hohe spezifische Widerstände zu realisieren. Weiterhin ist es wichtig, dass der spezifische Widerstand eine möglichst geringe Zunahme bei steigender Temperatur sowie nach Temperatur- und/oder UV-Belastung zeigt. Besonders nachteilig sind auch die Tieftemperatureigenschaften der Mischungen aus dem Stand der Technik. Gefordert wird, dass auch bei tiefen Temperaturen keine Kristallisation und/oder smektische Phasen auftreten und die Temperaturabhängigkeit der Viskosität möglichst gering ist. Die MFK-Anzeigen aus dem Stand der Technik genügen somit nicht den heutigen Anforderungen.

Es besteht somit immer noch ein großer Bedarf nach MFK-Anzeigen mit sehr hohem spezifischen Widerstand bei gleichzeitig großem Arbeitstemperaturbereich, kurzen Schaltzeiten auch bei tiefen Temperaturen und niedriger Schwellenspannung, die diese Nachteile nicht oder nur in geringerem Maße zeigen.

Bei TN-(Schadt-Helfrich)-Zellen sind Medien erwünscht, die folgende Vorteile in den Zellen ermöglichen:
- erweiterter nematischer Phasenbereich (insbesondere zu tiefen Temperaturen)
- Schaltbarkeit bei extrem tiefen Temperaturen (out-door-use, Automobil, Avionik)
- erhöhte Beständigkeit gegenüber UV-Strahlung (längere Lebensdauer)
- hohes Δn für schnellere Schaltzeiten

Mit den aus dem Stand der Technik zur Verfügung stehenden Medien ist es nicht möglich, diese Vorteile unter gleichzeitigem Erhalt der übrigen Parameter zu realisieren.

Bei höher verdrillten Zellen (STN) sind Medien erwünscht, die eine höhere Multiplexierbarkeit und/oder kleinere Schwellenspannungen und/oder breitere nematische Phasenbereiche (insbesondere bei tiefen Temperaturen) ermöglichen. Hierzu ist eine weitere Ausdehnung des zur Verfügung stehenden Parameterraumes (Klärpunkt, Übergang smektisch-nematisch bzw. Schmelzpunkt, Viskosität, dielektrische Größen, elastische Größen) dringend erwünscht.

Aus den Druckschriften WO 01/46336 A, EP 0786445 A, EP 1046694 A, WO 01/27221 A und EP 1096001 A sind Verbindungen bekannt, die eine Gruppe -CF₂O- zwischen zwei Benzolringen besitzen und die ein- oder mehrfach an den Ringen fluoriert sind. Die Verbindungen eignen sich für flüssigkristalline Medien.

Der Erfindung liegt die Aufgabe zugrunde, Medien insbesondere für derartige MFK-, IPS-, TN- oder STN-Anzeigen bereitzustellen, die die oben angegebenen Nachteile nicht oder nur in geringerem Maße, und vorzugsweise gleichzeitig sehr hohe spezifische Widerstände und niedrige Schwellenspannungen aufweisen. Für diese Aufgabe werden flüssigkristalline Verbindungen benötigt, die einen hohen Klärpunkt und eine niedrige Rotationsvikosität besitzen.

Es wurde nun gefunden, dass diese Aufgabe gelöst werden kann, wenn man die erfindungsgemäßen flüssigkristallinen Verbindungen verwendet.

Gegenstand der Erfindung sind somit flüssigkristalline Verbindungen der Formel I, 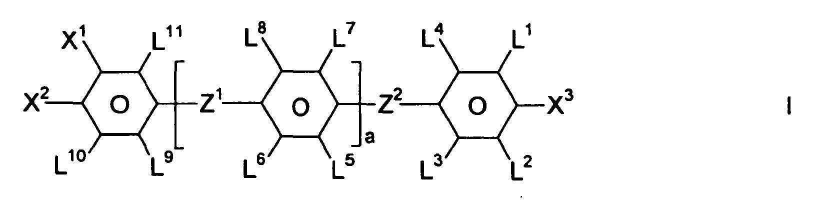 worin
- X¹ und X²: jeweils unabhängig voneinander F, Cl, Br, I, einer der Reste X¹ oder X² auch H,
- X³: F, Cl, CN, NCS, SF₅ oder OCF₃,
- Z¹ und Z²: jeweils unabhängig voneinander -CO-O-, -O-CO-, -CF₂O-, -OCF₂-, -CH₂O-, -OCH₂-, -CH₂CH₂-, -(CH₂)₄-, -C₂F₄-, -CH₂CF₂-, -CF₂CH₂-, -CF=CF-, -CH=CH-, -C≡C- oder eine Einfachbindung, mit der Maßgabe, dass mindestens einer der Brücken Z¹ und Z² -CF₂O- oder -OCF₂- bedeutet,
- a: 0, 1 oder 2, und
- L¹ bis L¹¹: jeweils unabhängig voneinander H oder F
bedeuten.

Gegenstand der Erfindung ist weiterhin die Verwendung der Verbindungen der Formel I in flüssigkristallinen Medien, als Synthesebausteine, z. B. für Flüssigkristalle, Pflanzenschutzmittel und Pharmazeutika. Besonders bevorzugt sind Verbindungen mit X¹ und/oder X² = Cl, Br, I, insbesondere mit Br und I.

Die Verbindungen der Formel I besitzen einen breiten Anwendungsbereich. In Abhängigkeit von der Auswahl der Substituenten können diese Verbindungen als Basismaterialien dienen, aus denen flüssigkristalline Medien zum überwiegenden Teil zusammengesetzt sind; es können aber auch Verbindungen der Formel I flüssigkristallinen Basismaterialien aus anderen Verbindungsklassen zugesetzt werden, um beispielsweise die dielektrische und/oder optische Anisotropie eines solchen Dielektrikums zu beeinflussen und/oder um dessen Schwellenspannung und/oder dessen Viskosität zu optimieren.

Die Verbindungen der Formel I sind in reinem Zustand farblos und bilden flüssigkristalline Mesophasen in einem für die elektrooptische Verwendung günstig gelegenen Temperaturbereich. Insbesondere zeichnen sich die erfindungsgemäßen Verbindungen durch ihren breiten nematischen Phasenbereich aus. In flüssigkristallinen Mischungen unterdrücken die erfindungsgemäßen Substanzen die smektischen Phasen und führen zu einer deutlichen Verbesserung der Tieftemperatur-Lagerstabilität. Chemisch, thermisch und gegen Licht sind sie stabil.

Gegenstand der Erfindung sind insbesondere die Verbindungen der Formel I, worin X¹ F oder Cl, X² = H und X³ = F oder OCF₃ bedeutet.

Insbesondere bevorzugt sind Verbindungen der Formel I, worin a = 1, ferner a = 2, ist. Z¹ oder Z² ist vorzugsweise eine Einfachbindung, ferner -CF₂O-, -OCF₂-, -C₂F₄-, -CH₂O-, -OCH₂- oder -COO-.

L¹ bedeutet vorzugsweise F und L² ist vorzugsweise H oder F. Insbesondere bevorzugt bedeuten L¹ und L² Fluor. Ferner bevorzugt sind Verbindungen, worin L² und L³ Fluor bedeuten.

Besonders bevorzugte Verbindungen der Formel I sind die Verbindungen I1 bis I120:

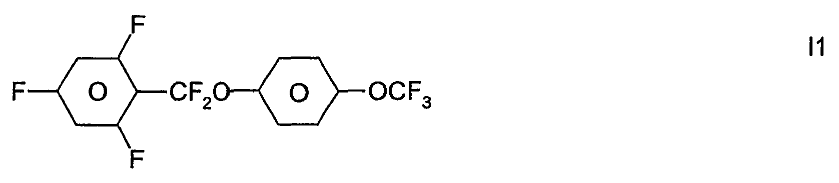

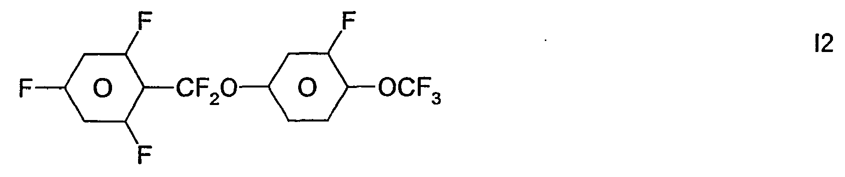

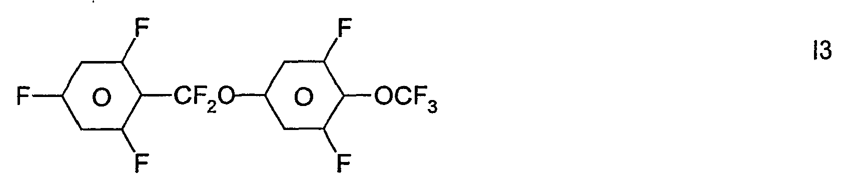

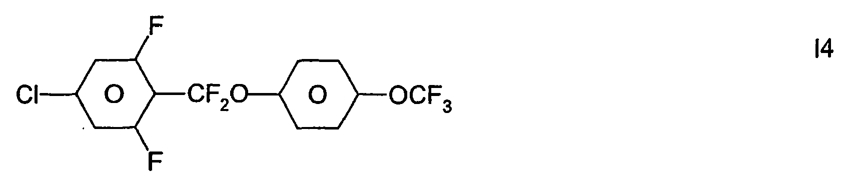

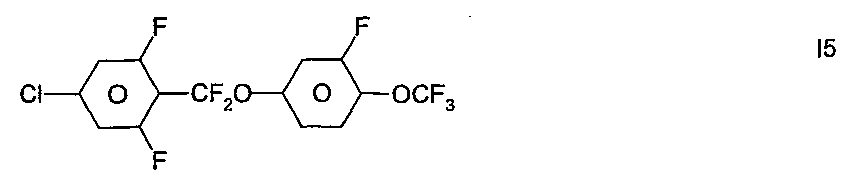

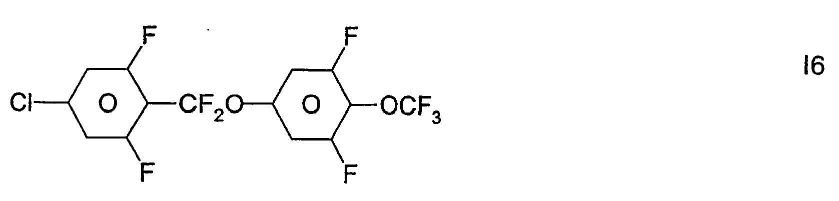

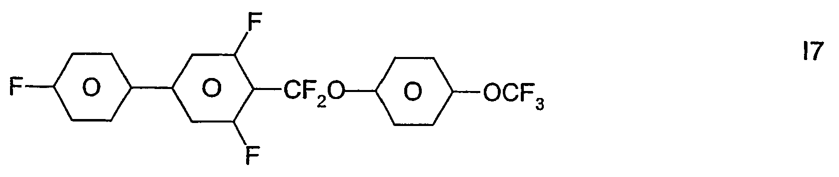

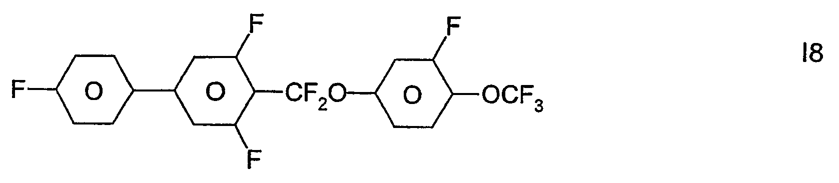

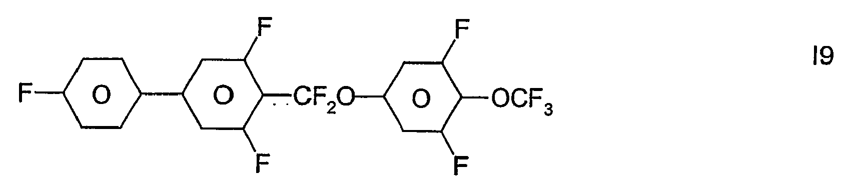

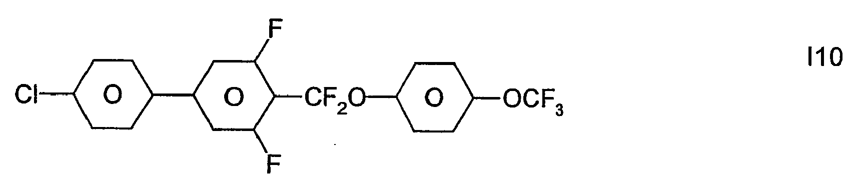

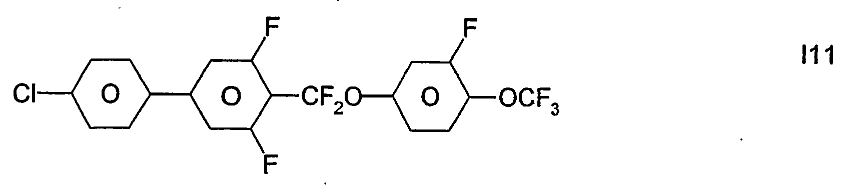

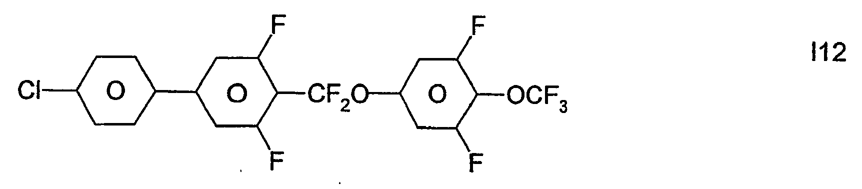

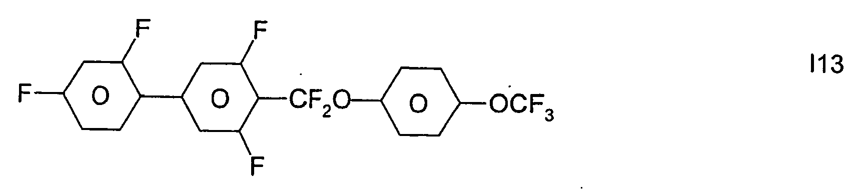

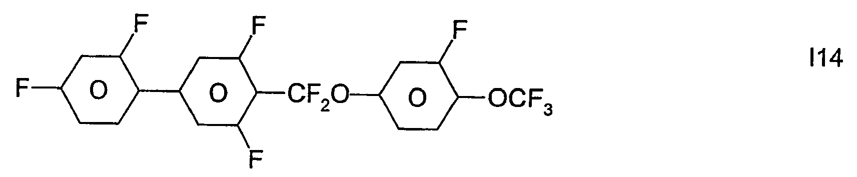

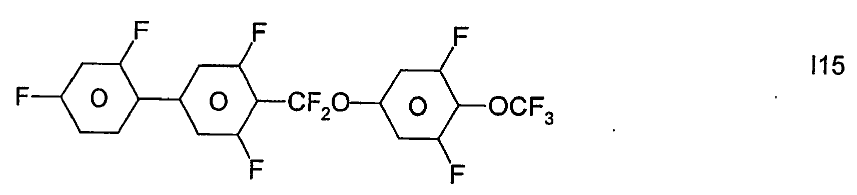

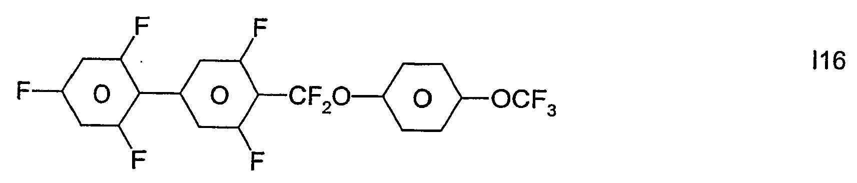

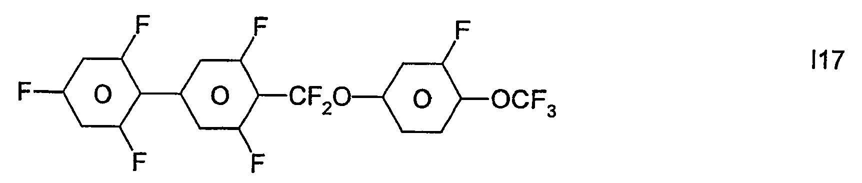

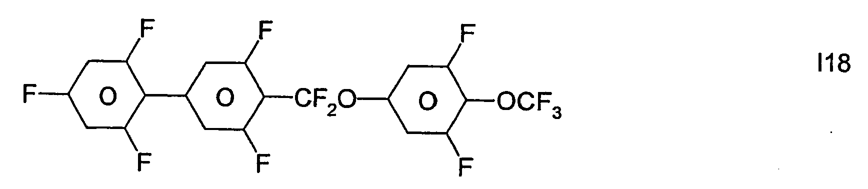

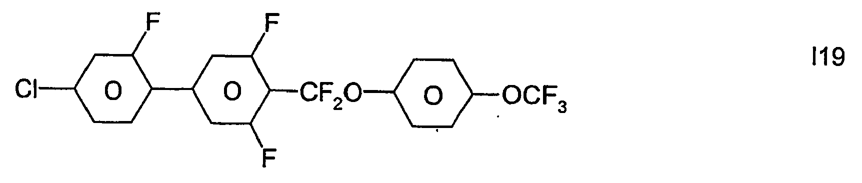

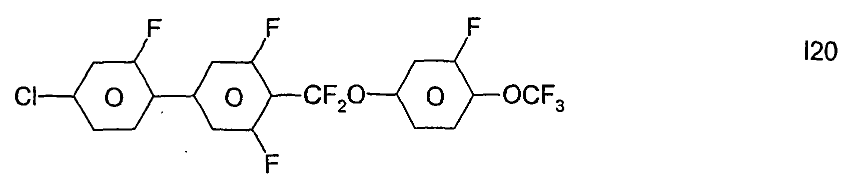

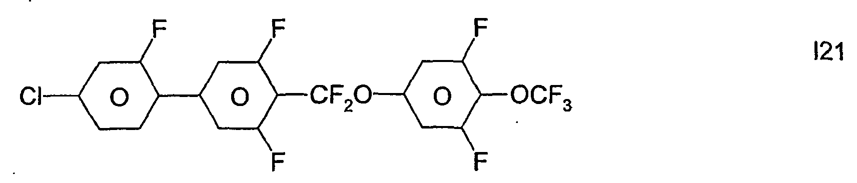

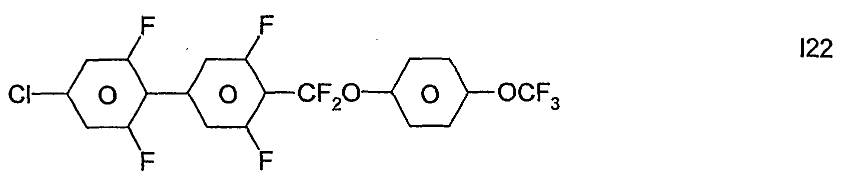

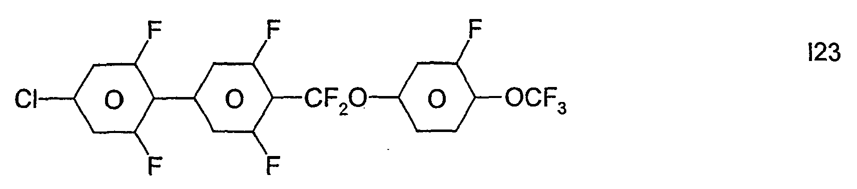

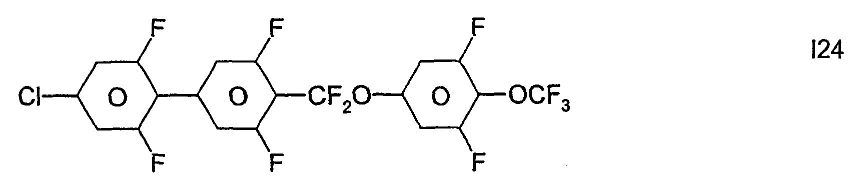

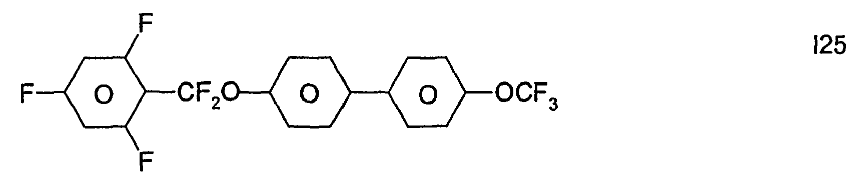

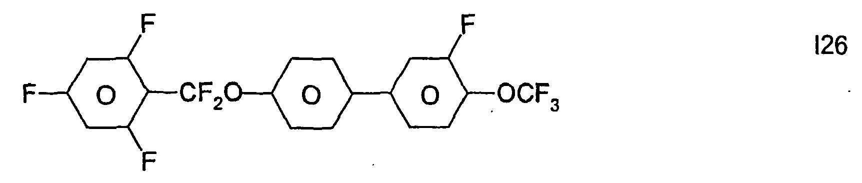

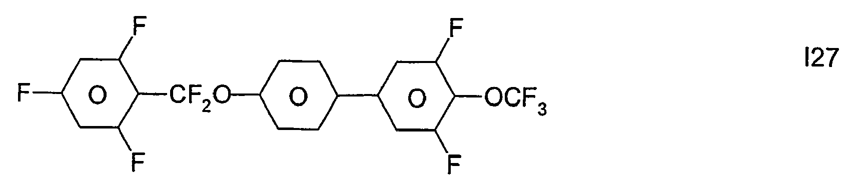

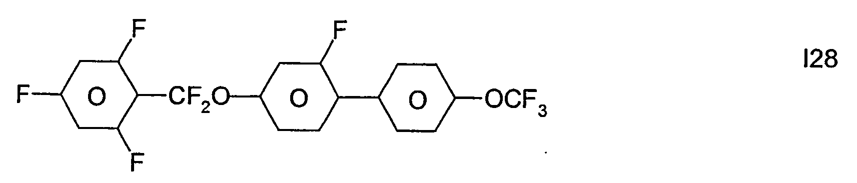

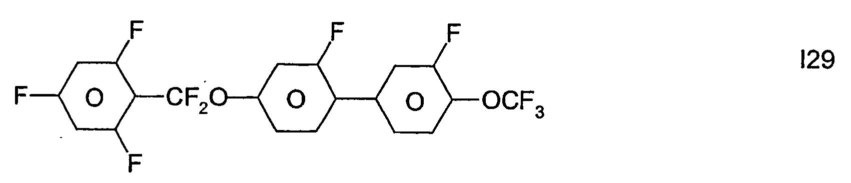

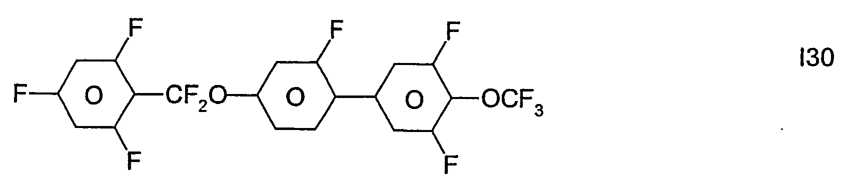

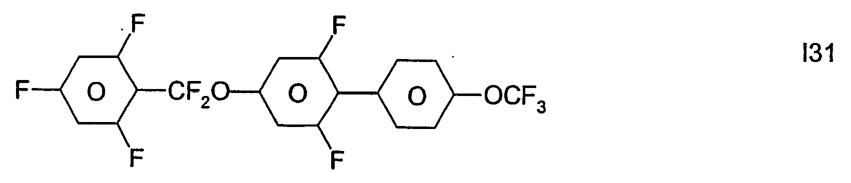

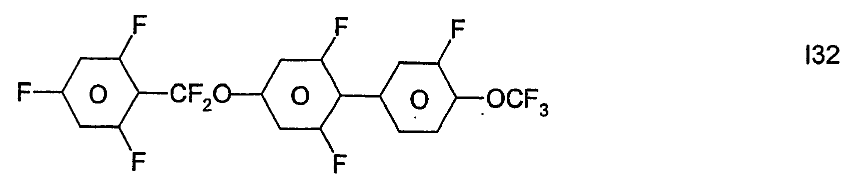

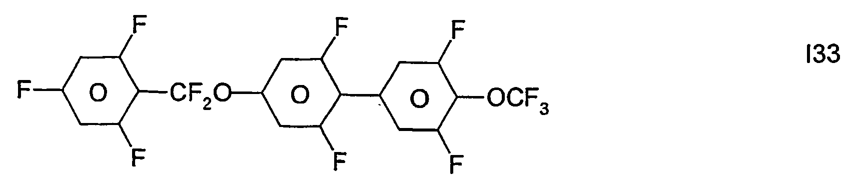

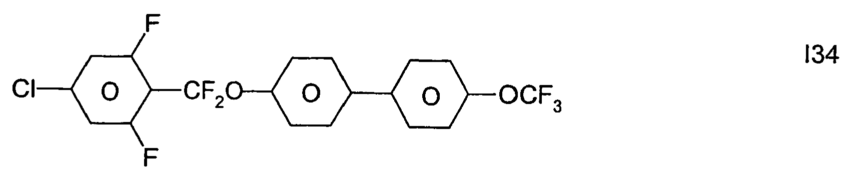

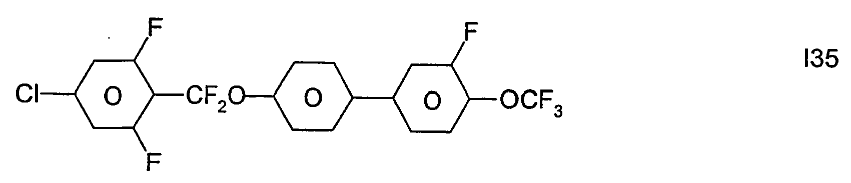

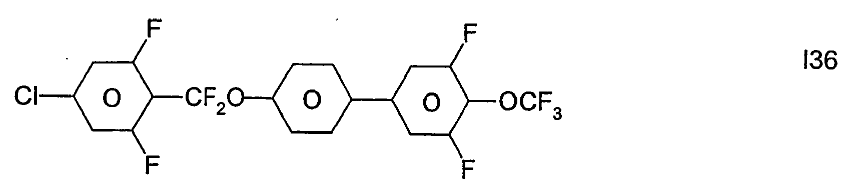

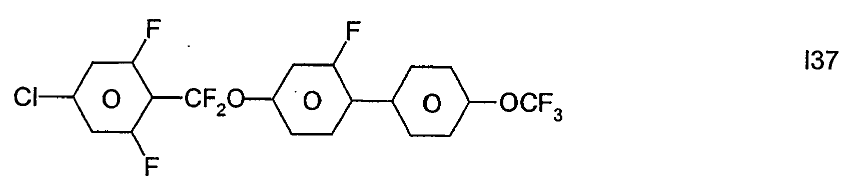

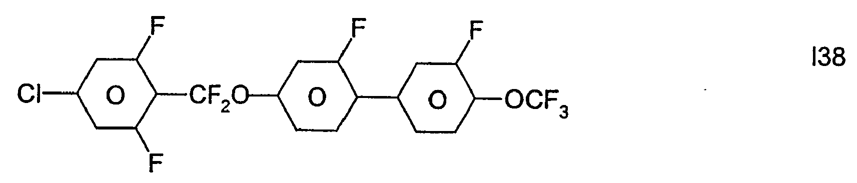

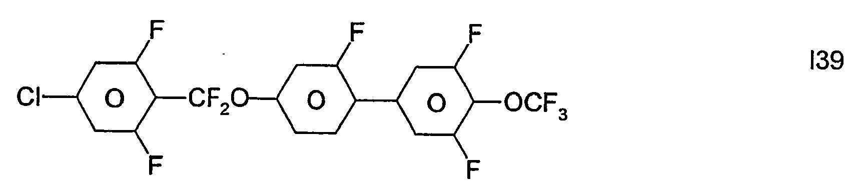

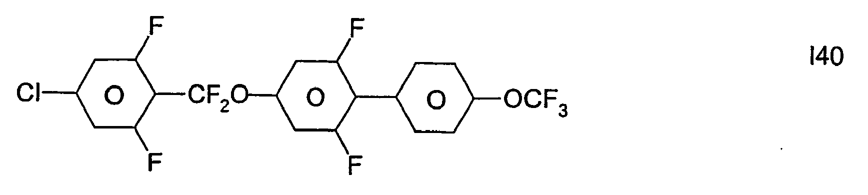

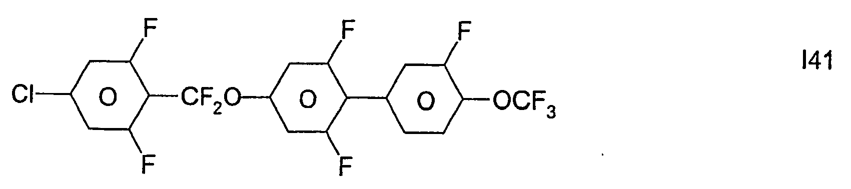

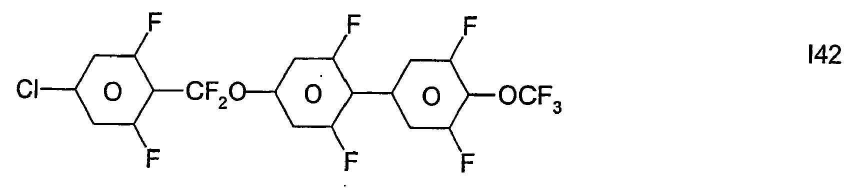

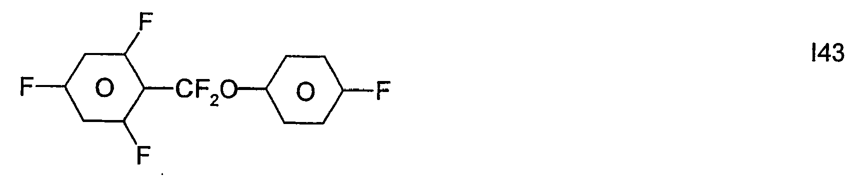

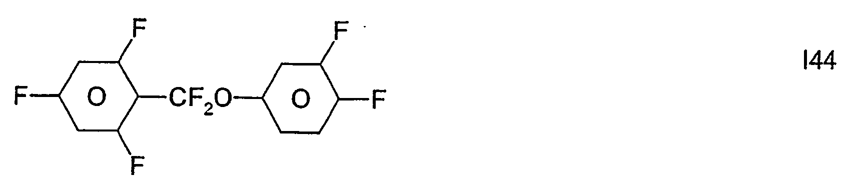

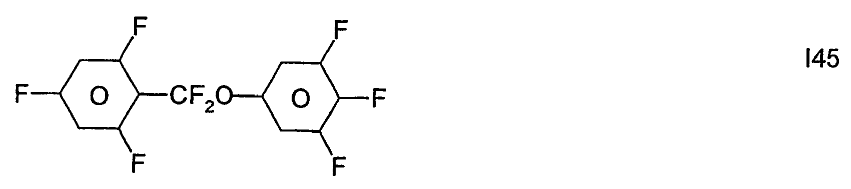

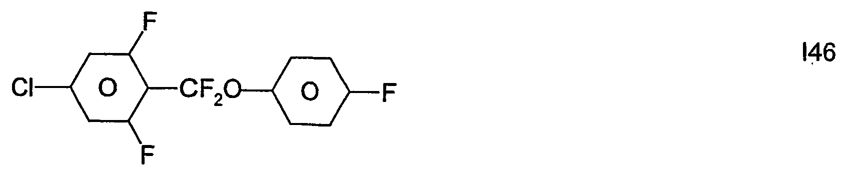

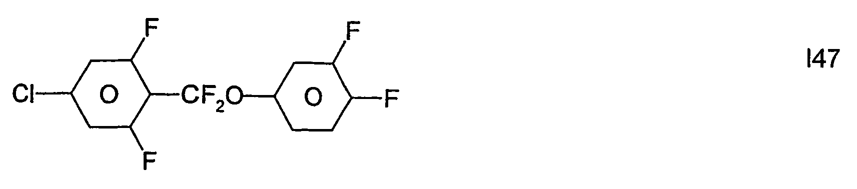

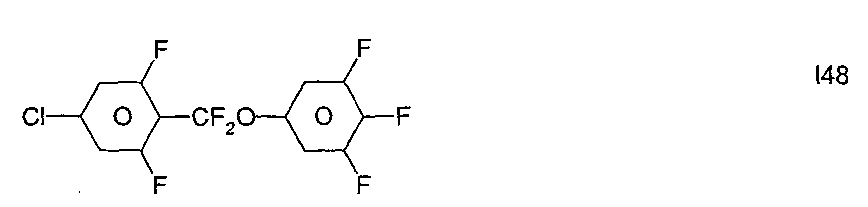

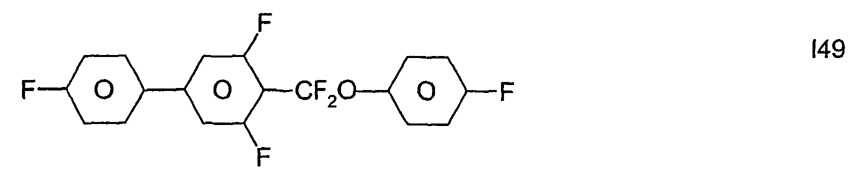

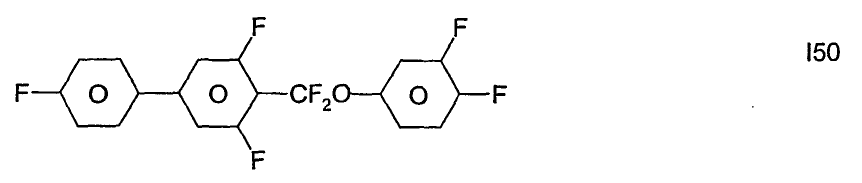

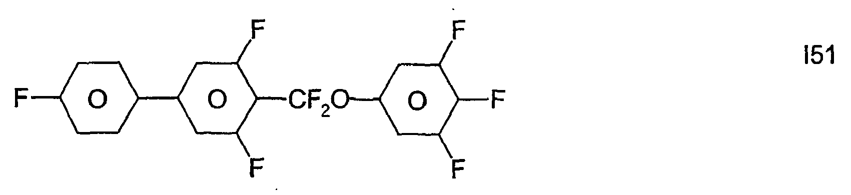

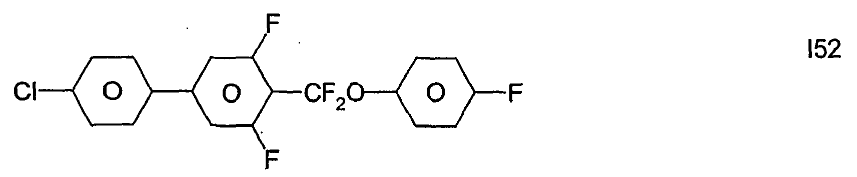

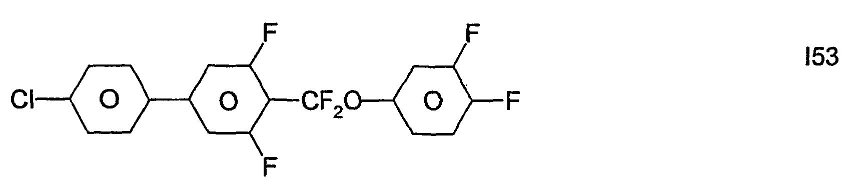

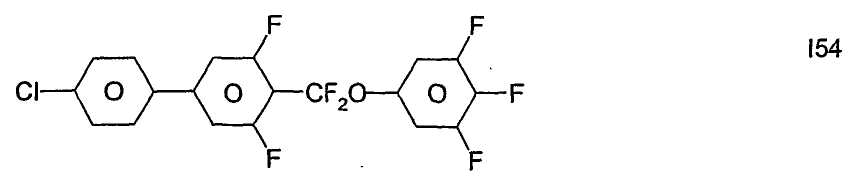

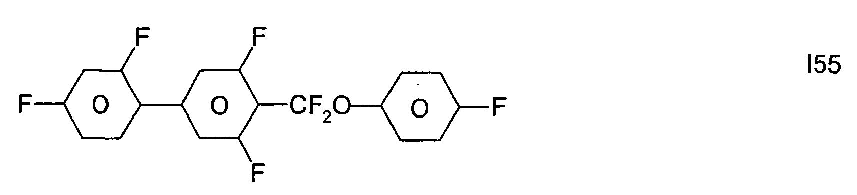

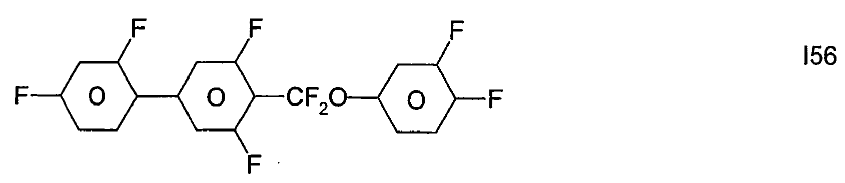

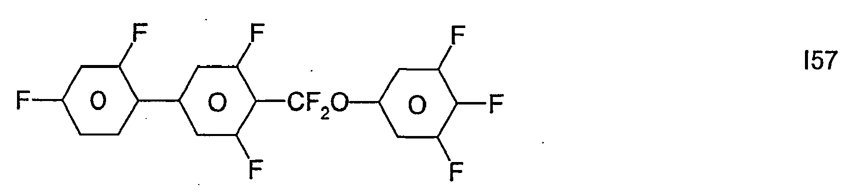

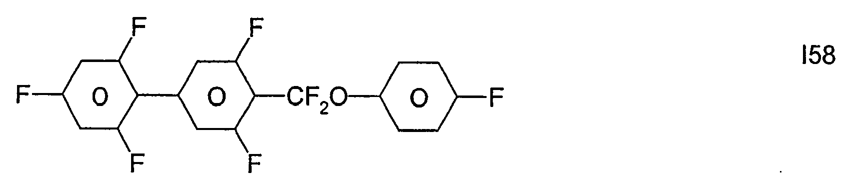

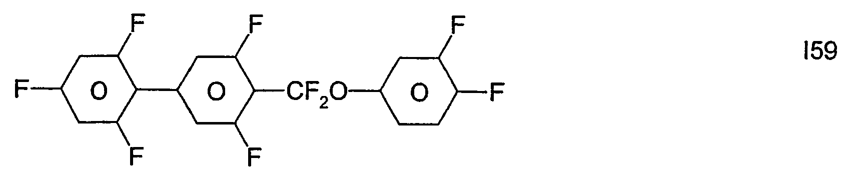

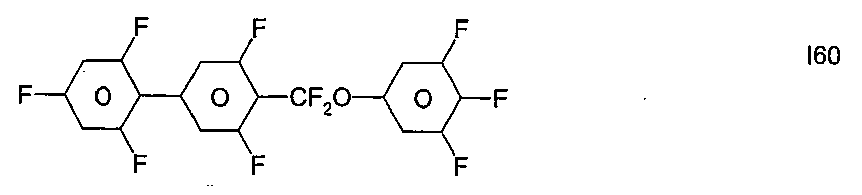

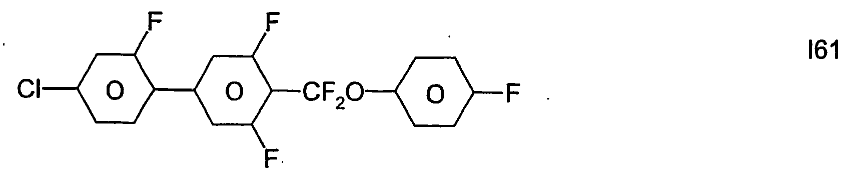

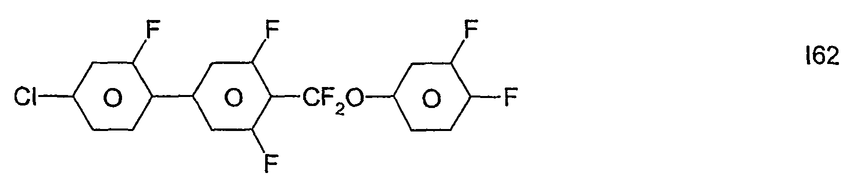

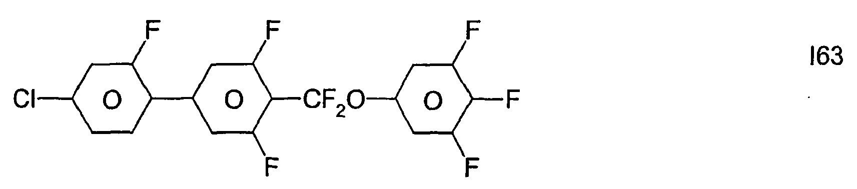

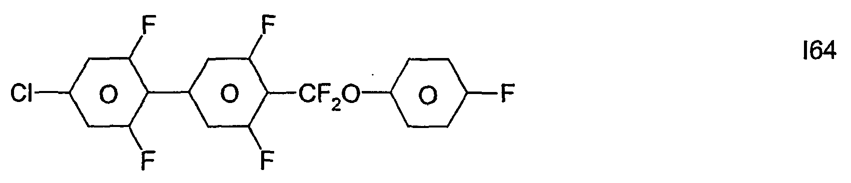

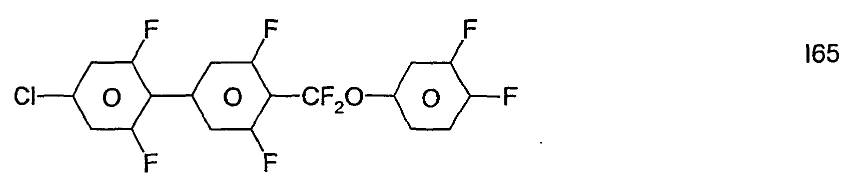

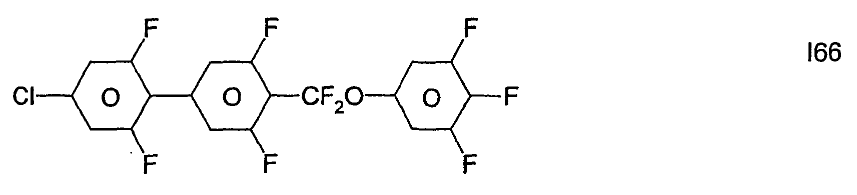

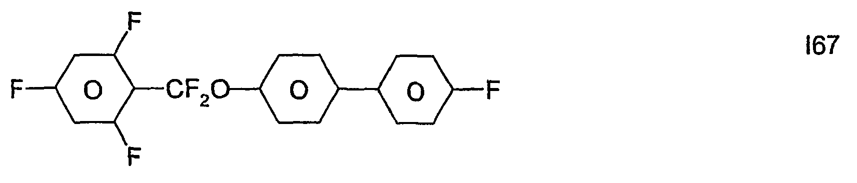

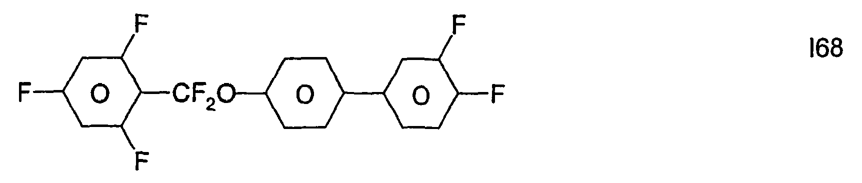

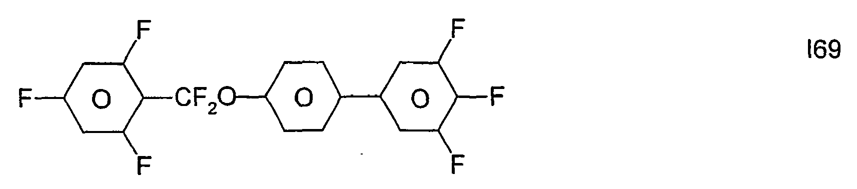

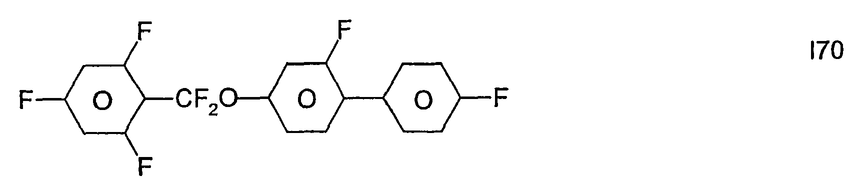

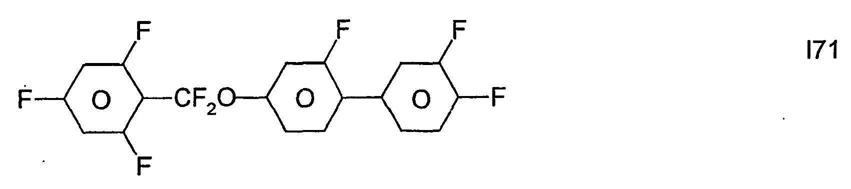

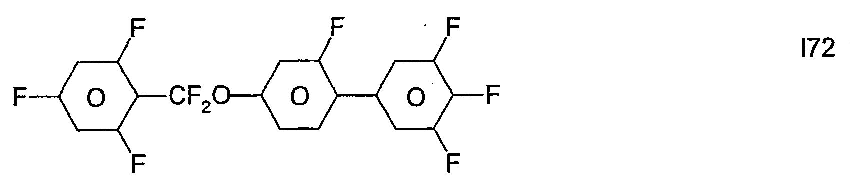

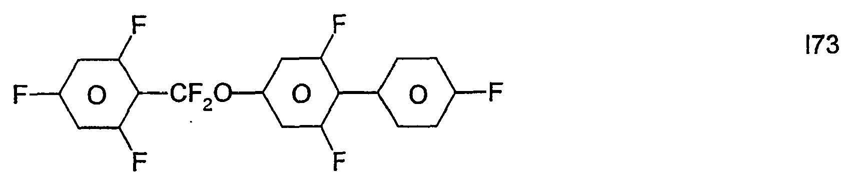

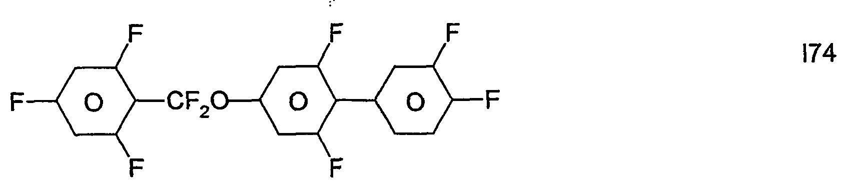

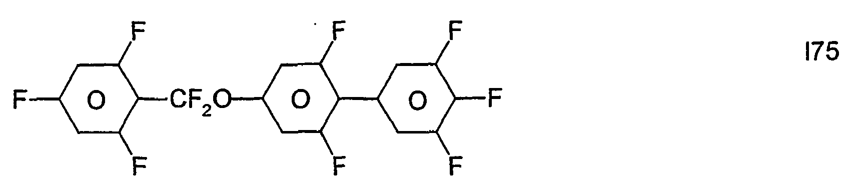

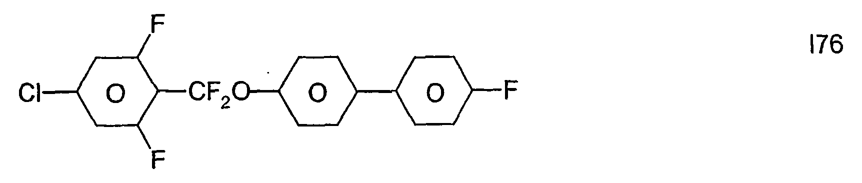

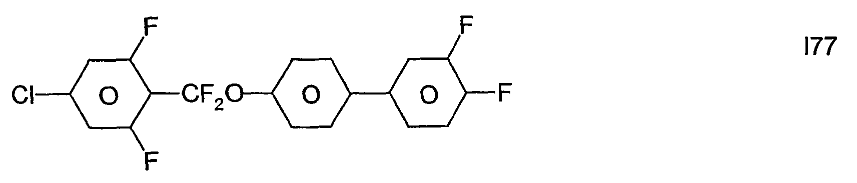

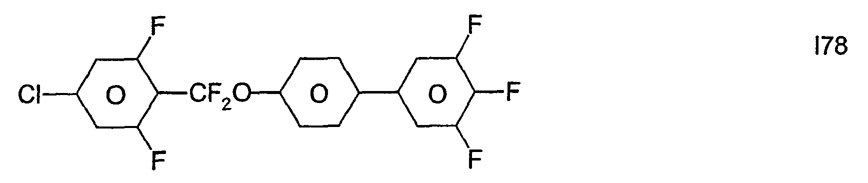

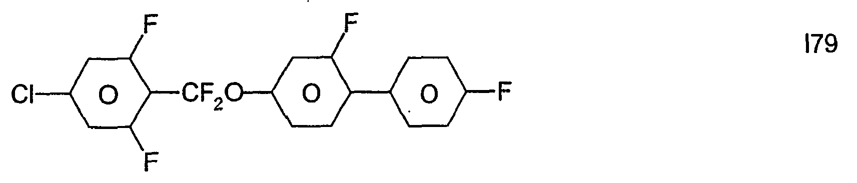

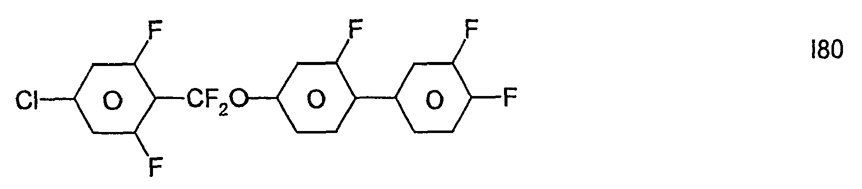

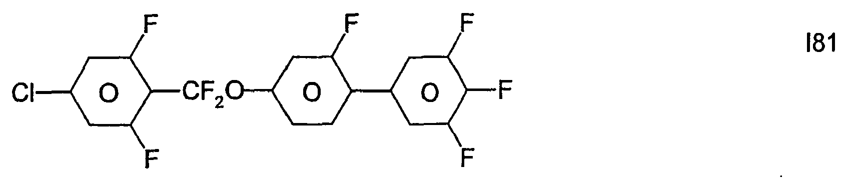

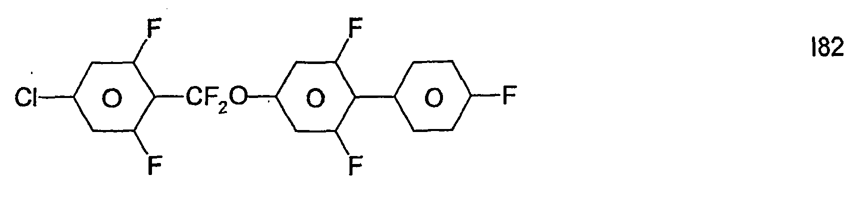

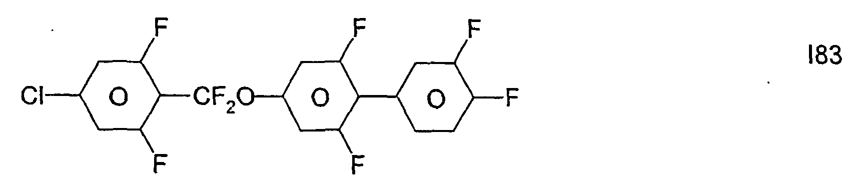

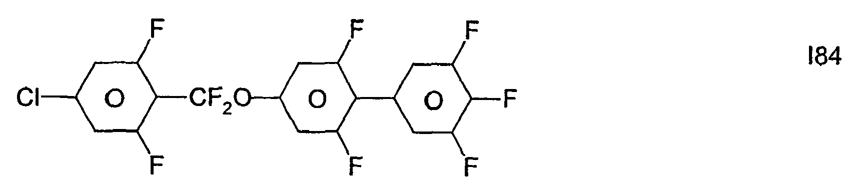

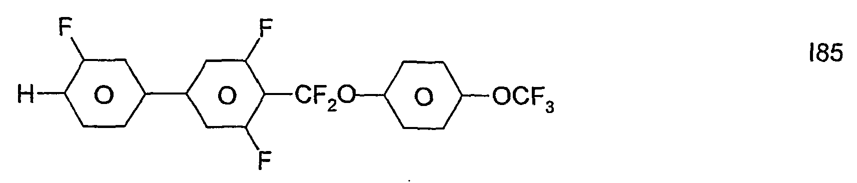

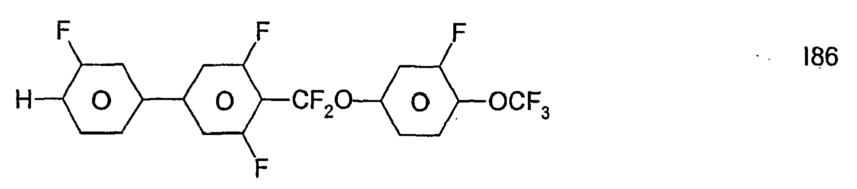

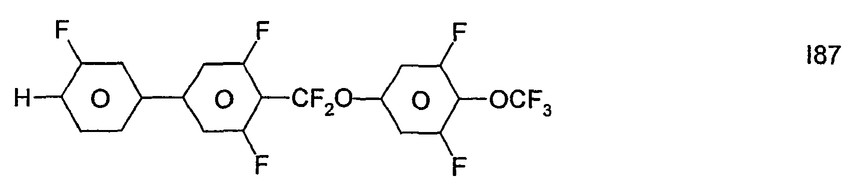

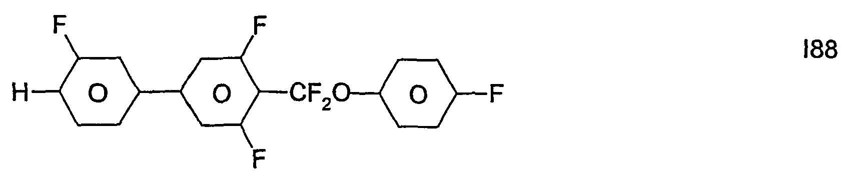

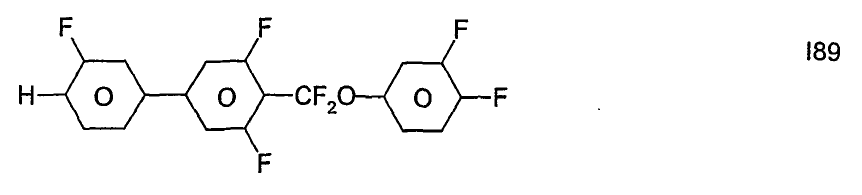

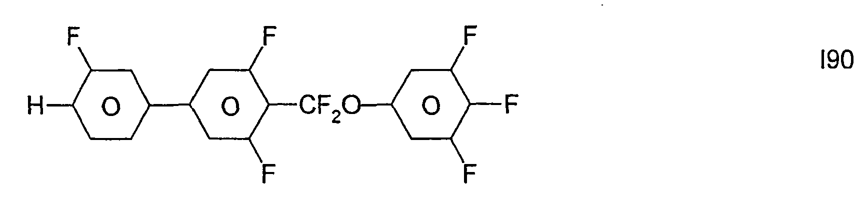

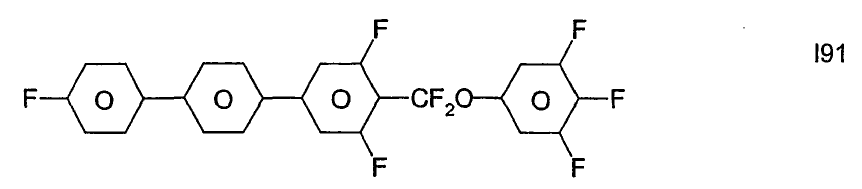

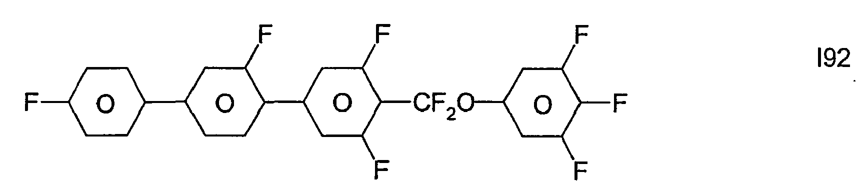

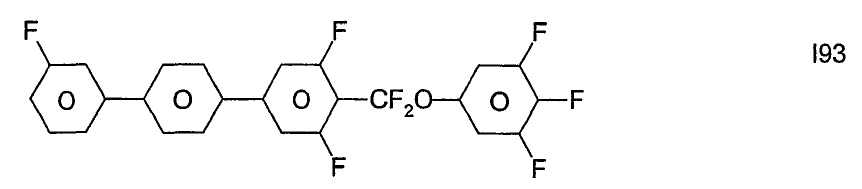

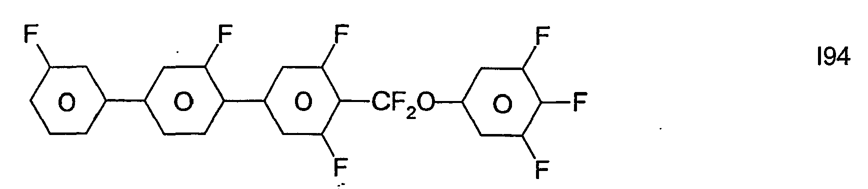

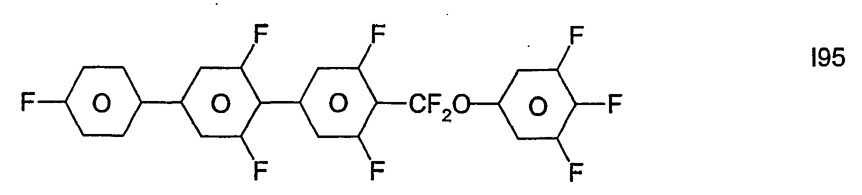

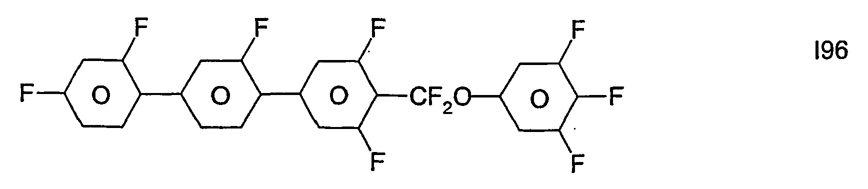

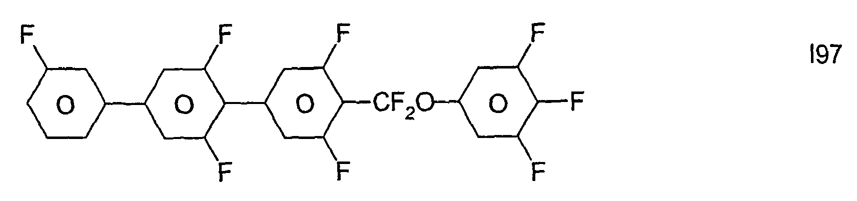

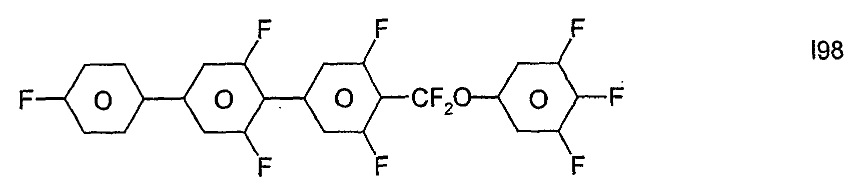

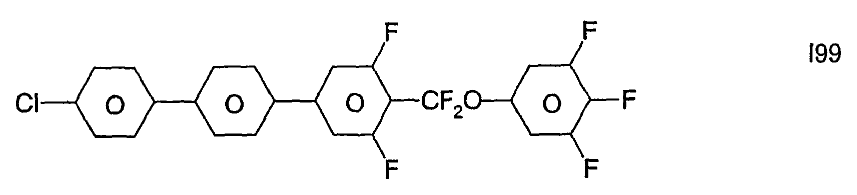

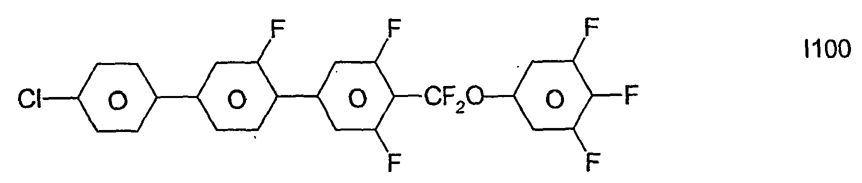

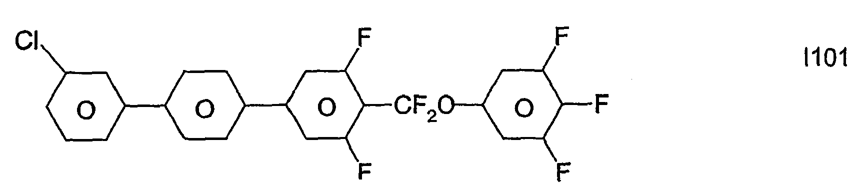

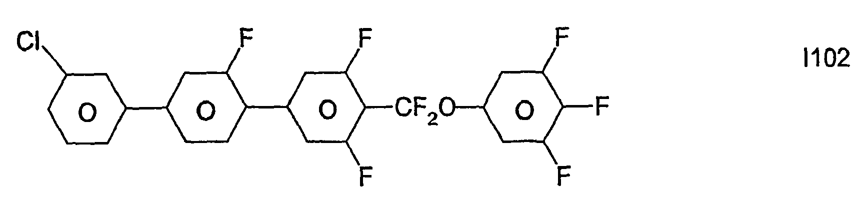

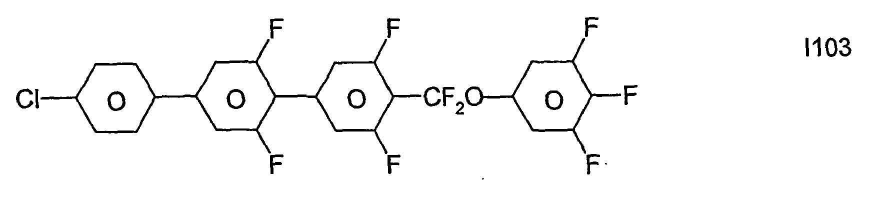

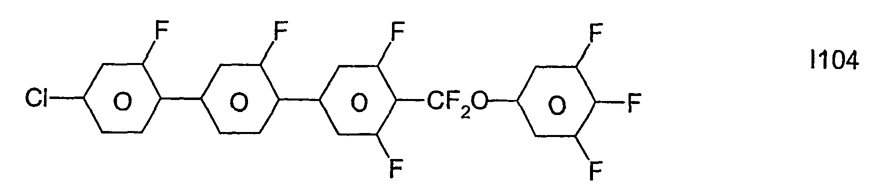

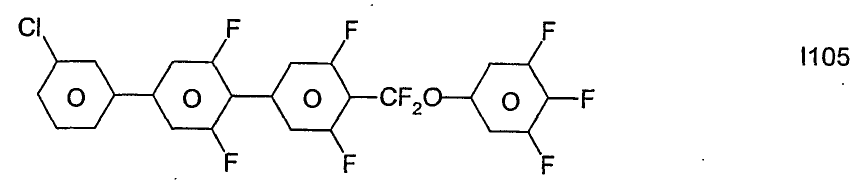

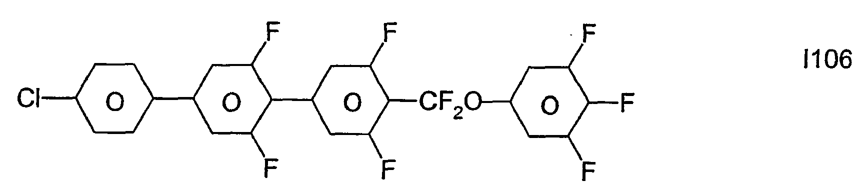

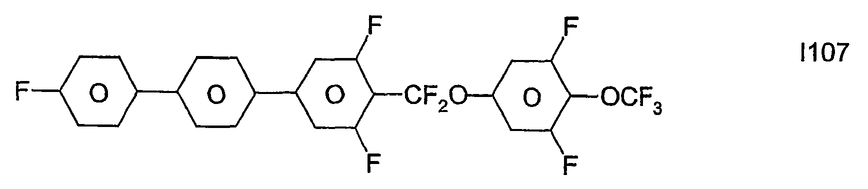

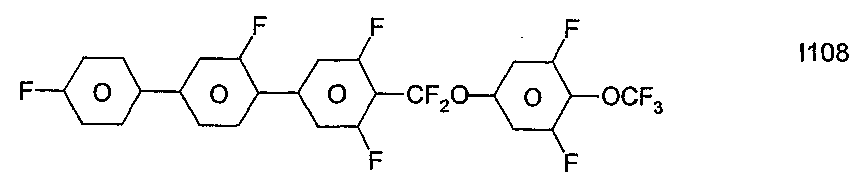

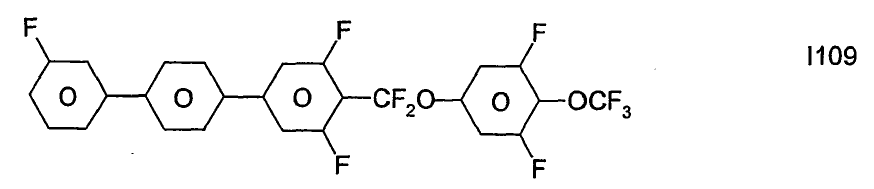

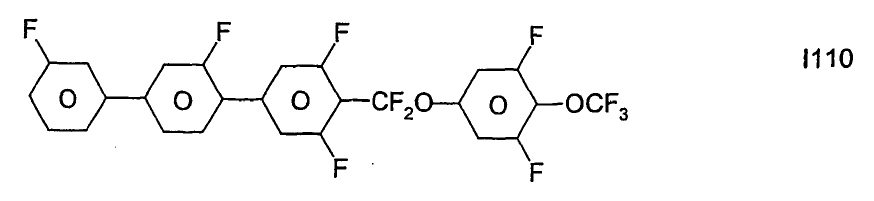

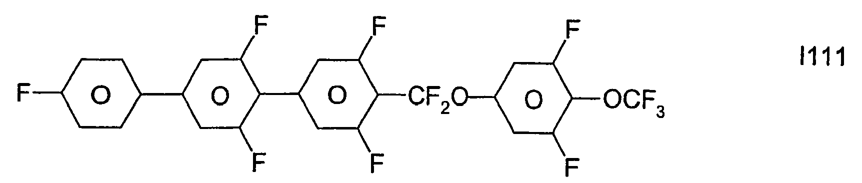

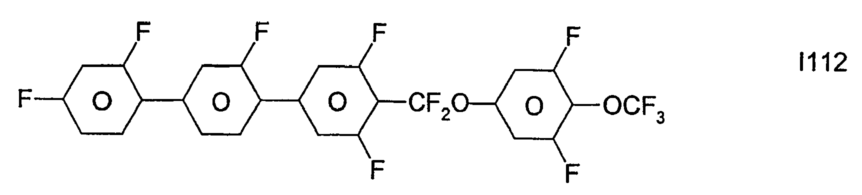

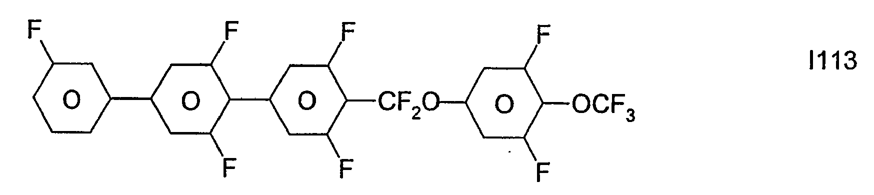

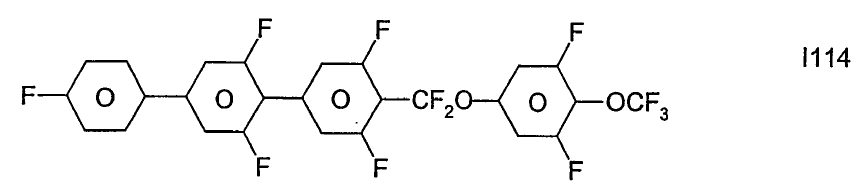

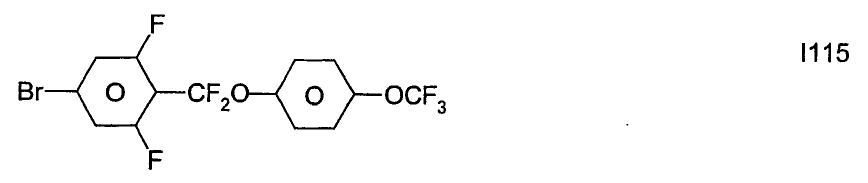

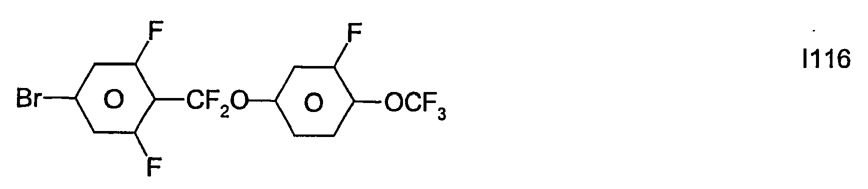

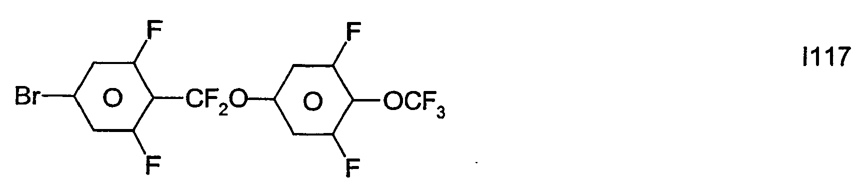

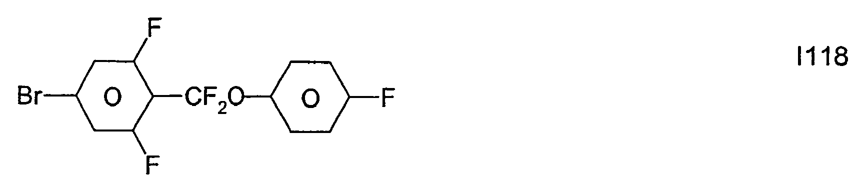

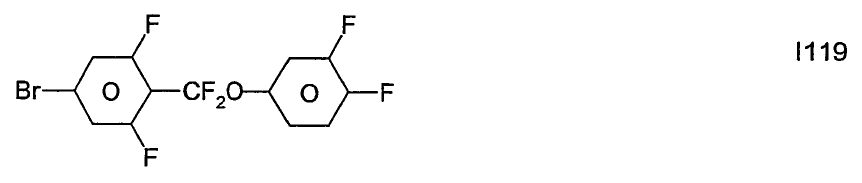

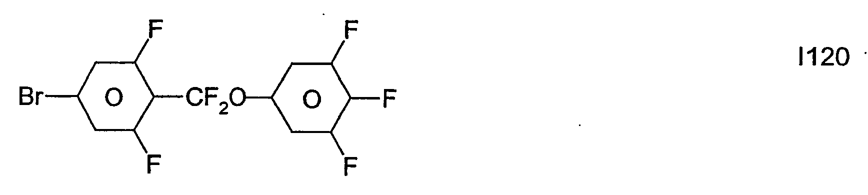

Die Verbindungen der Formel I werden nach an sich bekannten Methoden dargestellt, wie sie in der Literatur (z.B. in den Standardwerken wie Houben-Weyl, Methoden der Organischen Chemie, Georg-Thieme-Verlag, Stuttgart) beschrieben sind und zwar unter Reaktionsbedingungen, die für die genannten Umsetzungen bekannt und geeignet sind. Dabei kann man auch von an sich bekannten, hier nicht näher erwähnten Varianten Gebrauch machen.

Die erfindungsgemäßen Verbindungen können z.B. wie folgt hergestellt werden:

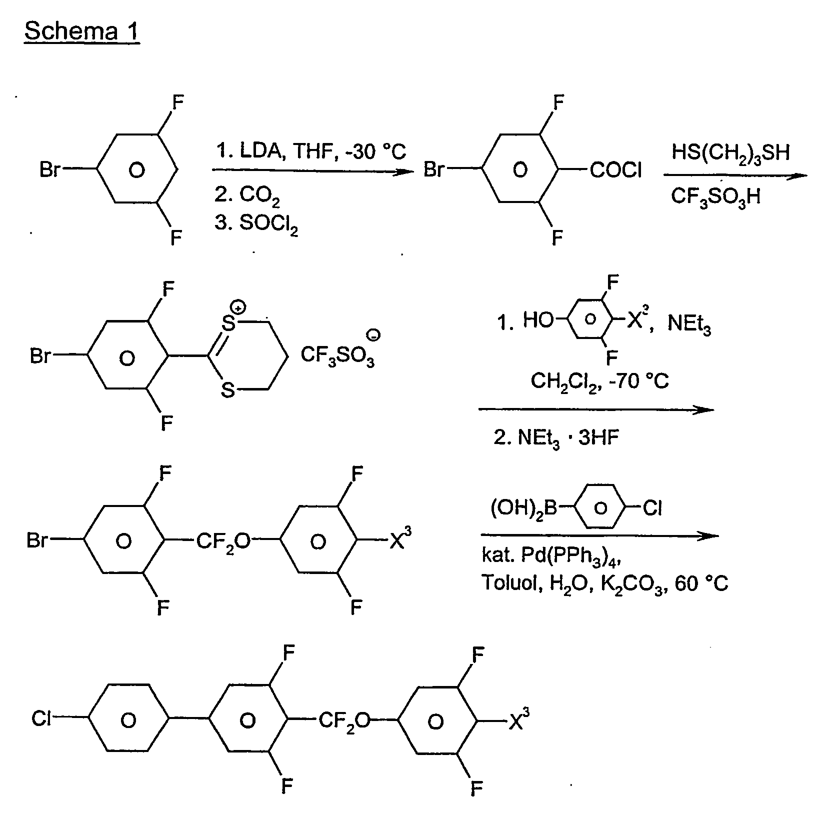

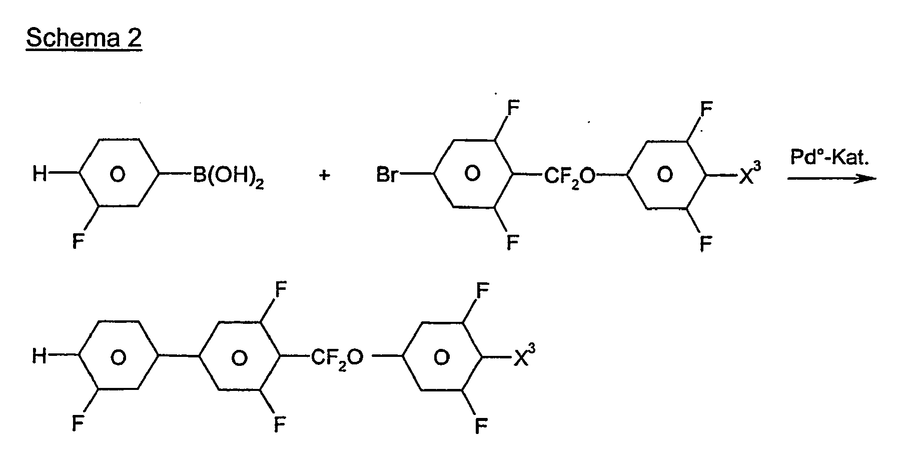

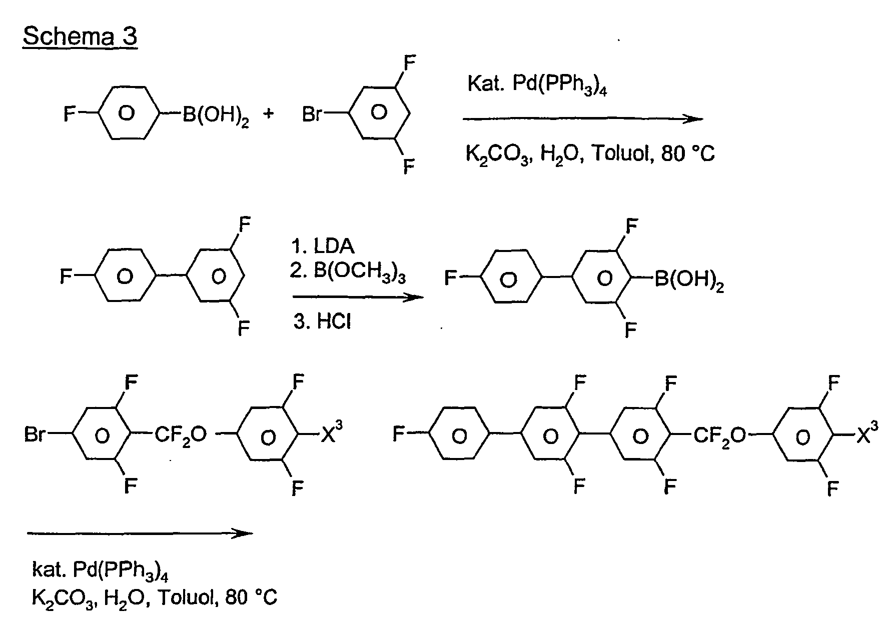

Die erfindungsgemäßen Verbindungen sind auch als Synthesebausteine für Flüssigkristalle geeignet, wie z. B. aus Schema 4 ersichtlich.

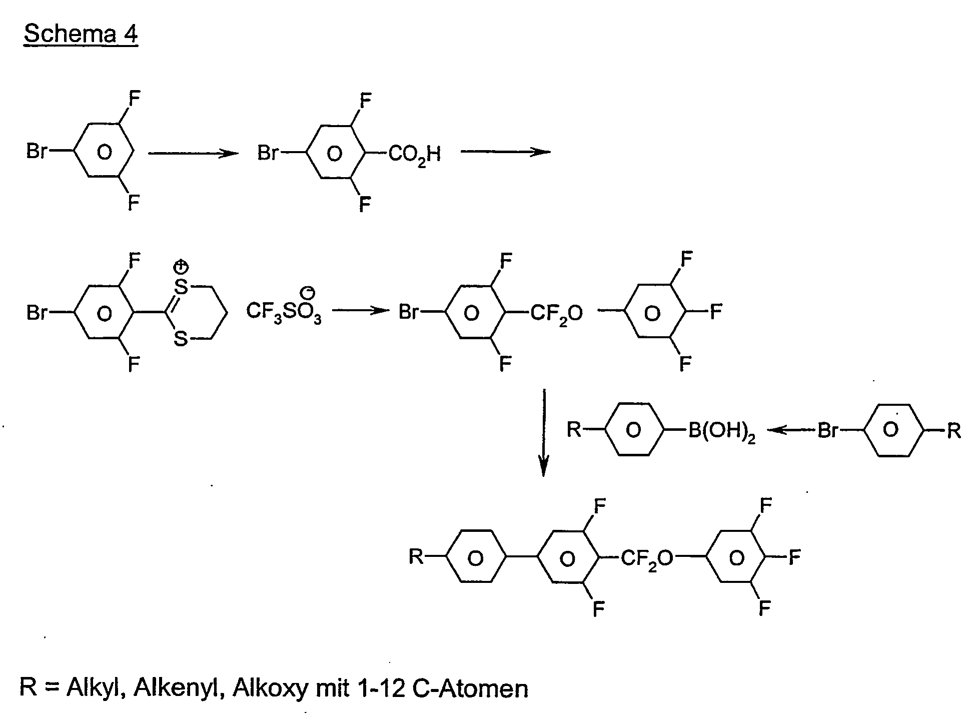

Gegenstand der Erfindung sind auch elektrooptische Anzeigen (insbesondere STN- oder MFK-Anzeigen mit zwei planparallelen Trägerplatten, die mit einer Umrandung eine Zelle bilden, integrierten nicht-linearen Elementen zur Schaltung einzelner Bildpunkte auf den Trägerplatten und einer in der Zelle befindlichen nematischen Flüssigkristallmischung mit positiver dielektrischer Anisotropie und hohem spezifischem Widerstand), die derartige Medien enthalten sowie die Verwendung dieser Medien für elektrooptische Zwecke.

Die erfindungsgemäßen Flüssigkristallmischungen ermöglichen eine bedeutende Erweiterung des zur Verfügung stehenden Parameterraumes.

Die erzielbaren Kombinationen aus Klärpunkt, Viskosität bei tiefer Temperatur, thermischer und UV-Stabilität und dielektrischer Anisotropie übertreffen bei weitem bisherige Materialien aus dem Stand der Technik.

Die Forderung nach hohem Klärpunkt, nematischer Phase bei tiefer Temperatur sowie einem hohen Δε konnte bislang nur unzureichend erfüllt werden. Flüssigkristallmischungen, wie z. B. MLC-6476 und MLC-6625 (Merck KGaA, Darmstadt, Deutschland) weisen zwar vergleichbare Klärpunkte und Tieftemperaturstabilitäten auf, sie haben jedoch relativ hohe Δn-Werte als auch höhere Schwellenspannungen von ca. ≥ 1,7 V.

Andere Mischungssysteme besitzen vergleichbare Viskositäten und Werte von Δε, weisen jedoch nur Klärpunkte in der Gegend von 60 °C auf.

Die erfindungsgemäßen Flüssigkristallmischungen ermöglichen es bei Beibehaltung der nematischen Phase bis -20°C und bevorzugt bis -30°C, besonders bevorzugt bis -40 °C, Klärpunkte oberhalb 80°, vorzugsweise oberhalb 90°, besonders bevorzugt oberhalb 100 °C, gleichzeitig dielektrische Anisotropiewerte Δε ≥ 4, vorzugsweise ≥ 6 und einen hohen Wert für den spezifischen Widerstand zu erreichen, wodurch hervorragende STN- und MKF-Anzeigen erzielt werden können. Insbesondere sind die Mischungen durch kleine Operationsspannungen gekennzeichnet. Die TN-Schwellen liegen unterhalb 1,5 V, vorzugsweise unterhalb 1,3 V.

Es versteht sich, dass durch geeignete Wahl der Komponenten der erfindungsgemäßen Mischungen auch höhere Klärpunkte (z.B. oberhalb 110°) bei höheren Schwellenspannung oder niedrigere Klärpunkte bei niedrigeren Schwellenspannungen unter Erhalt der anderen vorteilhaften Eigenschaften realisiert werden können. Ebenso können bei entsprechend wenig erhöhten Viskositäten Mischungen mit größerem Δε und somit geringeren Schwellen erhalten werden. Die erfindungsgemäßen MFK-Anzeigen arbeiten vorzugsweise im ersten Transmissionsminimum nach Gooch und Tarry [C.H. Gooch und H.A. Tarry, Electron. Lett. 10, 2-4, 1974; C.H. Gooch und H.A. Tarry, Appl. Phys., Vol. 8, 1575-1584, 1975], wobei hier neben besonders günstigen elektrooptischen Eigenschaften wie z.B. hohe Steilheit der Kennlinie und geringe Winkelabhängigkeit des Kontrastes (DE-PS 30 22 818) bei gleicher Schwellenspannung wie in einer analogen Anzeige im zweiten Minimum eine kleinerere dielektrische Anisotropie ausreichend ist. Hierdurch lassen sich unter Verwendung der erfindungsgemäßen Mischungen im ersten Minimum deutlich höhere spezifische Widerstände verwirklichen als bei Mischungen mit Cyanverbindungen. Der Fachmann kann durch geeignete Wahl der einzelnen Komponenten und deren Gewichtsanteilen mit einfachen Routinemethoden die für eine vorgegebene Schichtdicke der MFK-Anzeige erforderliche Doppelbrechung einstellen.

Die Fließviskosität ν₂₀ bei 20 °C ist vorzugsweise < 60 mm² · s⁻¹, besonders bevorzugt < 50 mm² · s⁻¹. Der nematische Phasenbereich ist vorzugsweise mindestens 90°, insbesondere mindestens 100°. Vorzugsweise erstreckt sich dieser Bereich mindestens von -30° bis +80°.

Messungen des "Capacity Holding-ratio" (HR) [S. Matsumoto et al., Liquid Crystals 5, 1320 (1989); K. Niwa et al., Proc. SID Conference, San Francisco, June 1984, p. 304 (1984); G. Weber et al., Liquid Crystals 5, 1381 (1989)] haben ergeben, dass erfindungsgemäße Mischungen enthaltend Verbindungen der Formel I eine deutlich kleinere Abnahme des HR mit steigender Temperatur aufweisen als analoge Mischungen enthaltend anstelle den Verbindungen der Formel I Cyanophenylcyclohexane der Formel 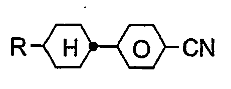 oder Ester der Formel

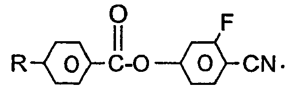

Auch die UV-Stabilität der erfindungsgemäßen Mischungen ist erheblich besser, d. h. sie zeigen eine deutlich kleinere Abnahme des HR unter UV-Belastung.

Vorzugsweise basieren die erfindungsgemäßen Medien auf mehreren (vorzugsweise zwei, drei oder mehr) Verbindungen der Formel I, d.h. der Anteil dieser Verbindungen ist 5-95 %, vorzugsweise 10-60 % und besonders bevorzugt im Bereich von 15-40 %.

Die einzelnen Verbindungen der Formeln I bis IX und deren Unterformeln, die in den erfindungsgemäßen Medien verwendet werden können, sind entweder bekannt, oder sie können analog zu den bekannten Verbindungen hergestellt werden.

Bevorzugte Ausführungsformen sind im folgenden angegeben:
- Das Medium enthält vorzugsweise ein, zwei oder drei homologe Verbindungen der Formel I, wobei jedes Homologe zu maximal 10% in der Mischung enthalten ist.
- Medium enthält zusätzlich eine oder mehrere Verbindungen ausgewählt aus der Gruppe bestehend aus den allgemeinen Formeln II bis IX: 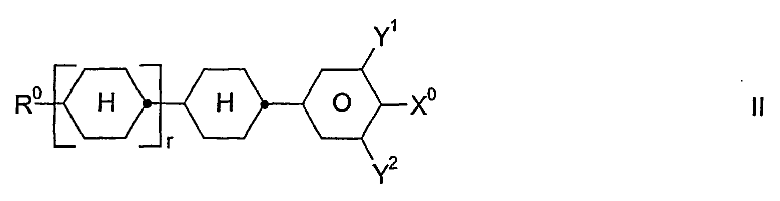 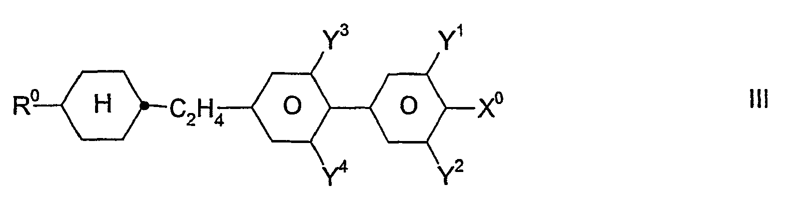 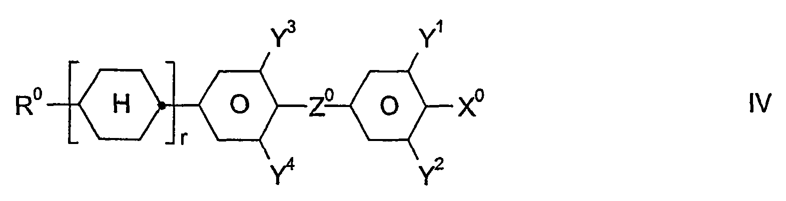 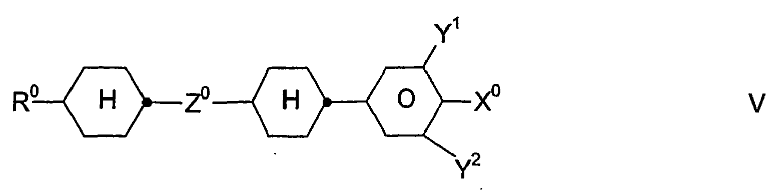 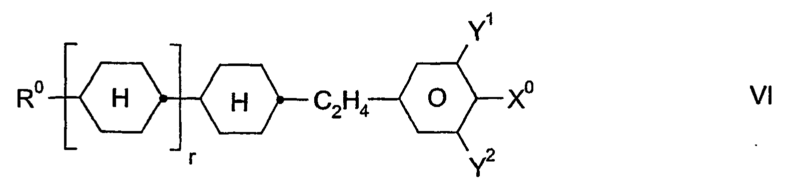 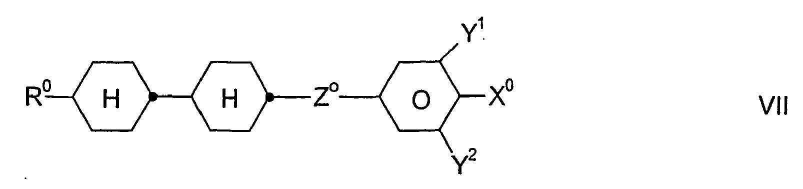 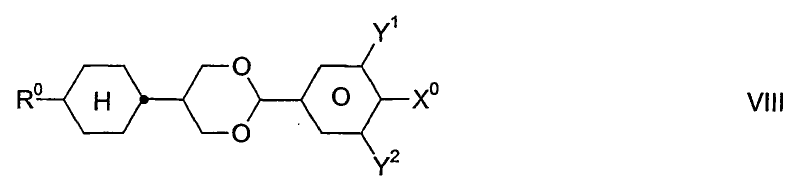 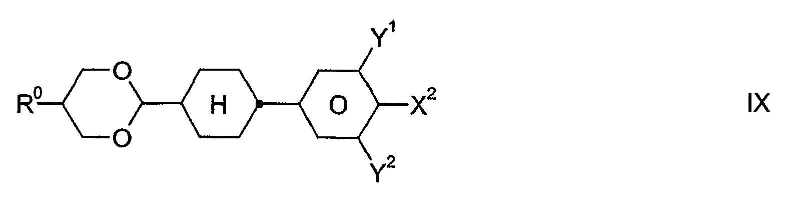
worin die einzelnen Reste die folgenden Bedeutungen haben:
- R⁰: H, n-Alkyl, Oxaalkyl, Fluoralkyl, Alkenyloxy oder Alkenyl mit jeweils bis zu 9 C-Atomen
- X⁰: F, Cl, halogeniertes Alkyl, halogeniertes Alkenyl, halogeniertes Alkenyloxy oder halogeniertes Alkoxy mit bis zu 7 C-Atomen,
- Z⁰: -CH=CH-, -C₂H₄-, -(CH₂)₄-, -C₂F₄-, -CH₂O-, -OCH₂-, -CF=CF-, -CF₂O-, -OCF₂- oder -COO-,
- Y¹,Y², Y³ und Y⁴: jeweils unabhängig voneinander H oder F, und
- r: 0 oder 1.

Die Verbindung der Formel IV ist vorzugsweise 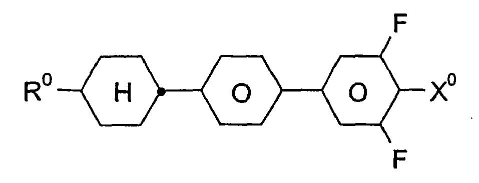 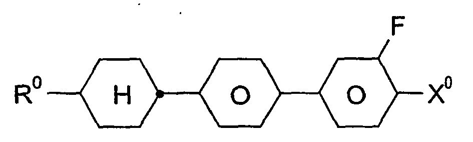 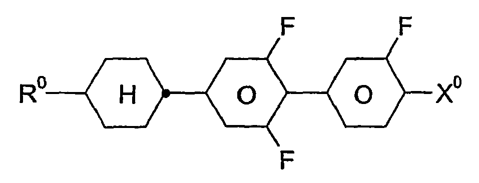 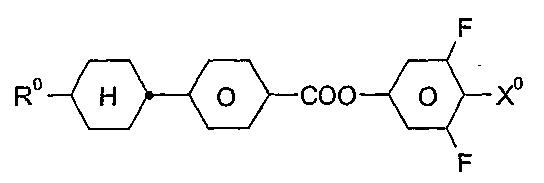 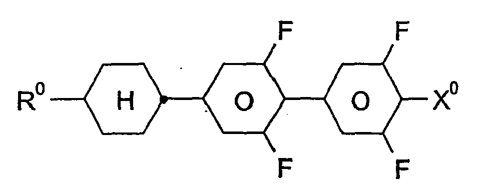 oder 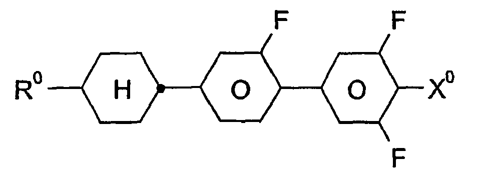
- Das Medium enthält vorzugsweise eine oder mehrere Verbindungen der Formeln 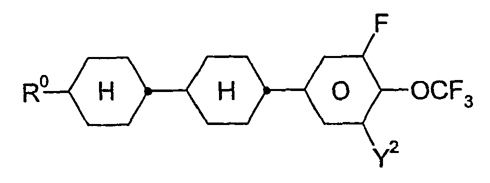 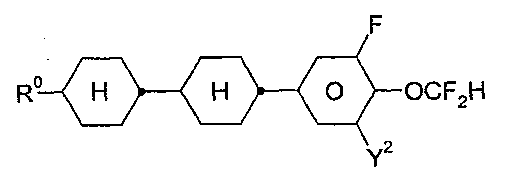 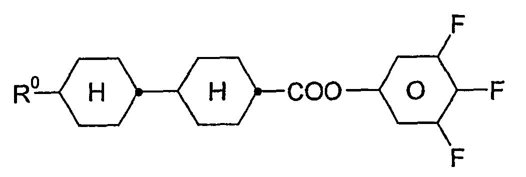 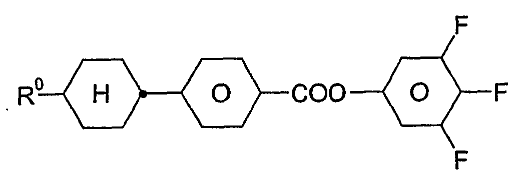 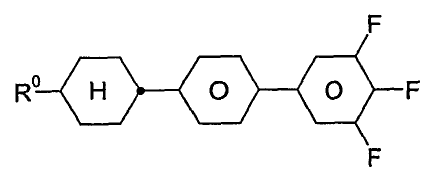 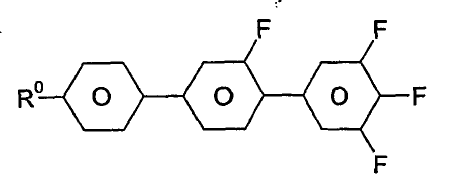 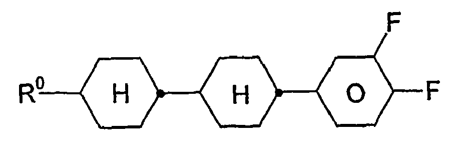 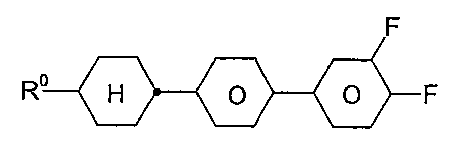 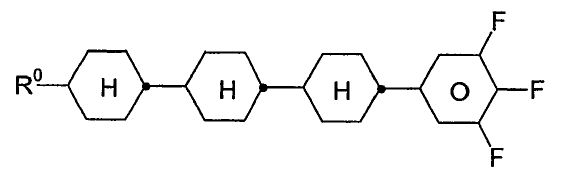 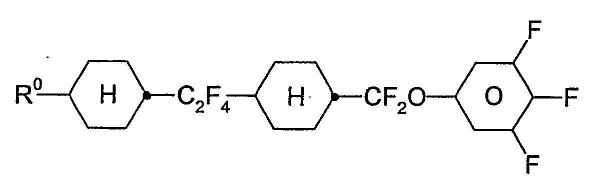 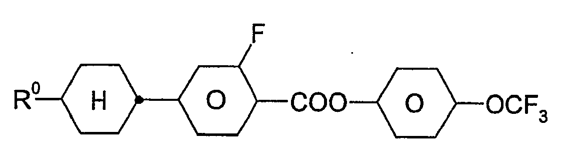 und/oder 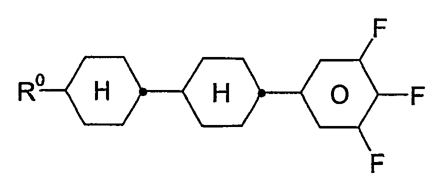
worin R⁰ und Y² die oben angegebene Bedeutung haben.
- Das Medium enthält vorzugsweise ein, zwei oder drei, ferner vier, Homologe der Verbindungen ausgewählt aus der Gruppe H1 bis H18 (n = 1-7): 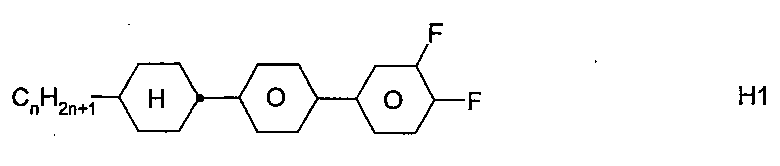 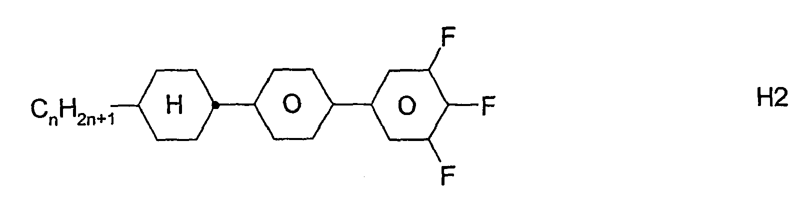 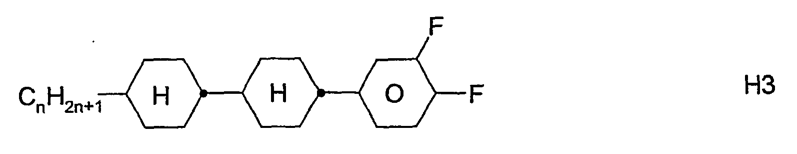 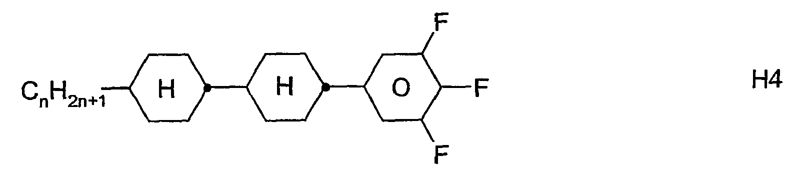 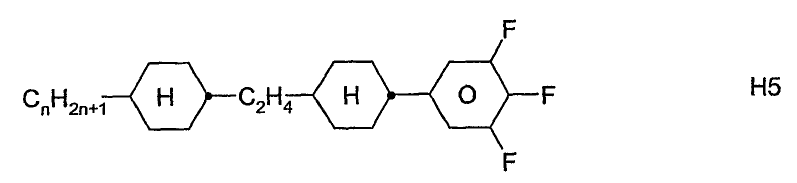 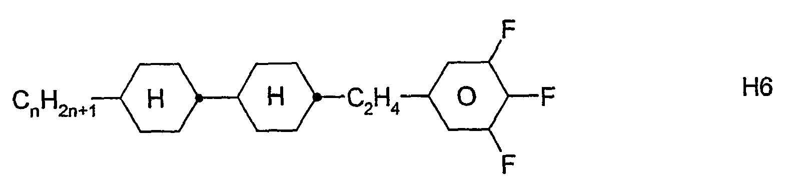 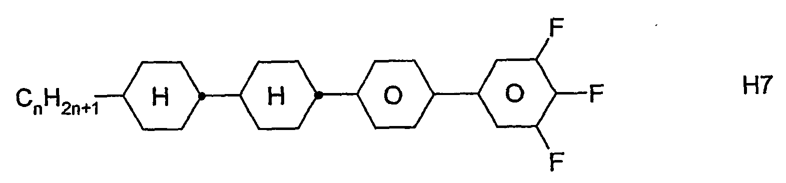 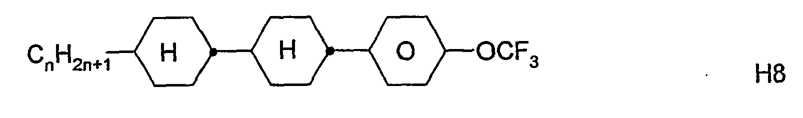 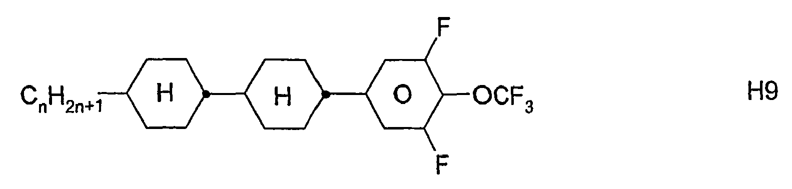 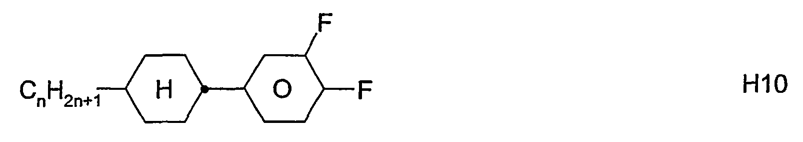 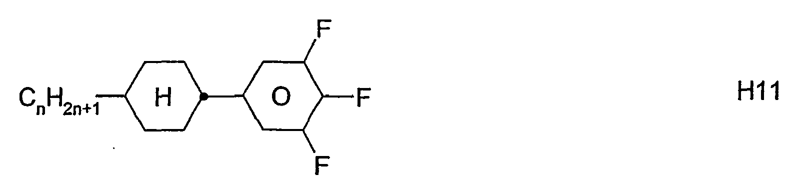 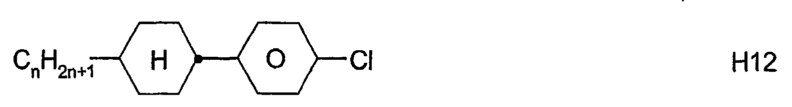 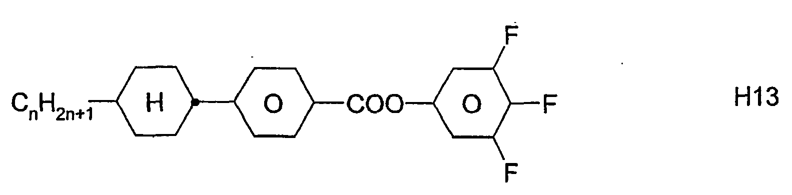 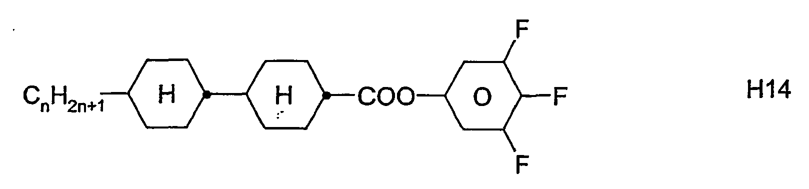 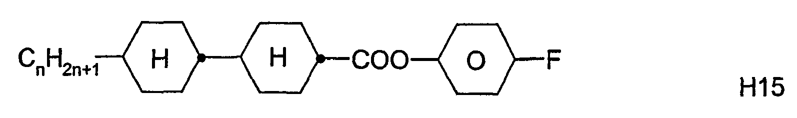 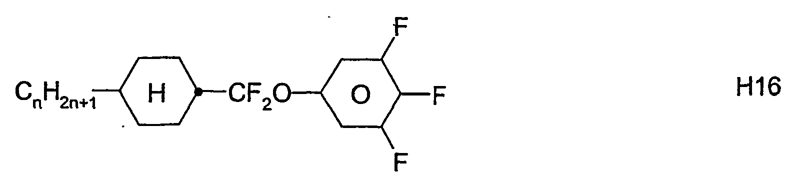 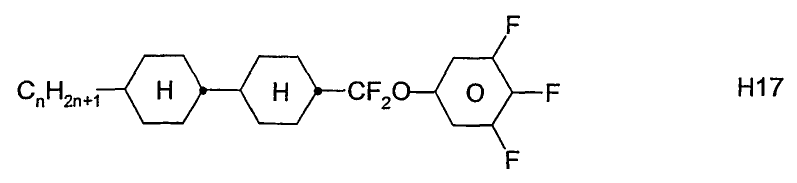 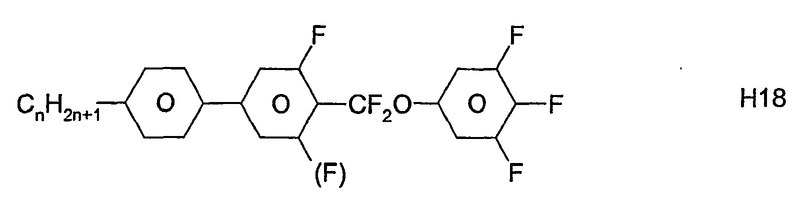
- Das Medium enthält zusätzlich eine oder mehrere Verbindungen ausgewählt aus der Gruppe bestehend aus den allgemeinen Formeln X bis XV: 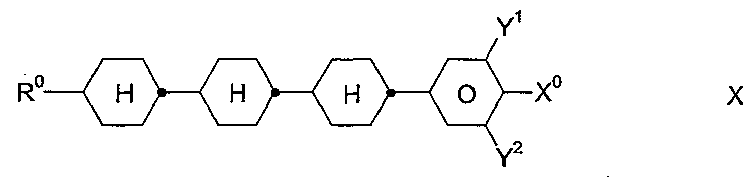 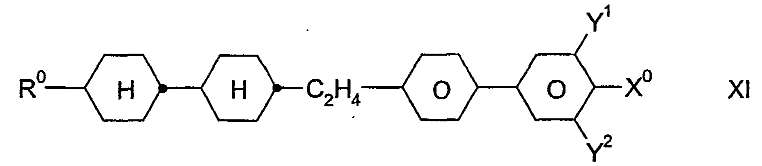 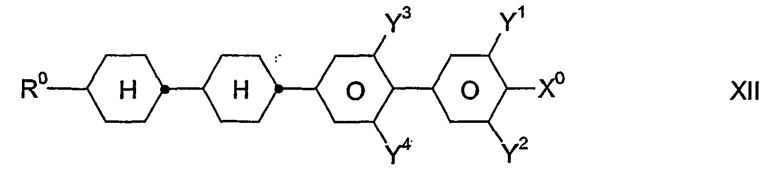 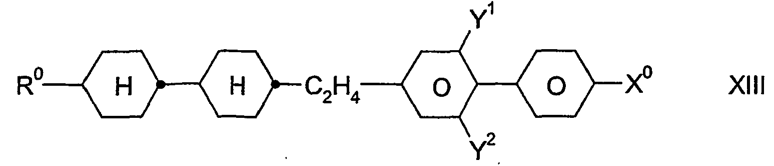 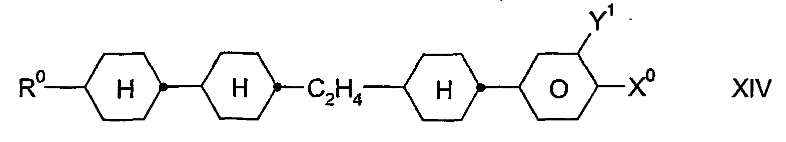 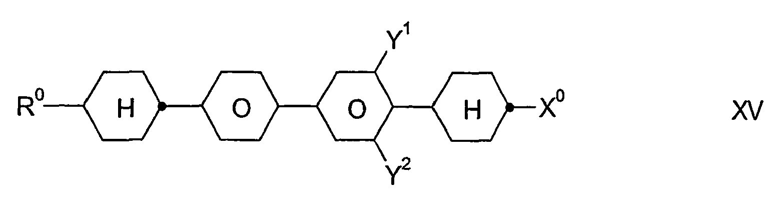 worin R⁰, X⁰, Y¹, Y², Y³ und Y⁴ jeweils unabhängig voneinander eine der in Anspruch 7 angegebene Bedeutung haben. Vorzugsweise bedeutet X⁰ F, Cl, CF₃, OCF₃, OCHF₂. R⁰ bedeutet vorzugsweise H, Alkyl, Oxaalkyl, Fluoralkyl, Alkenyl oder Alkenyloxy.
- Der Anteil an Verbindungen der Formeln I bis IX zusammen beträgt im Gesamtgemisch mindestens 50 Gew.-%.
- Der Anteil an Verbindungen der Formel I beträgt im Gesamtgemisch 5 bis 50 Gew.-%.
- Der Anteil an Verbindungen der Formeln II bis IX im Gesamtgemisch beträgt 30 bis 70 Gew.-%. 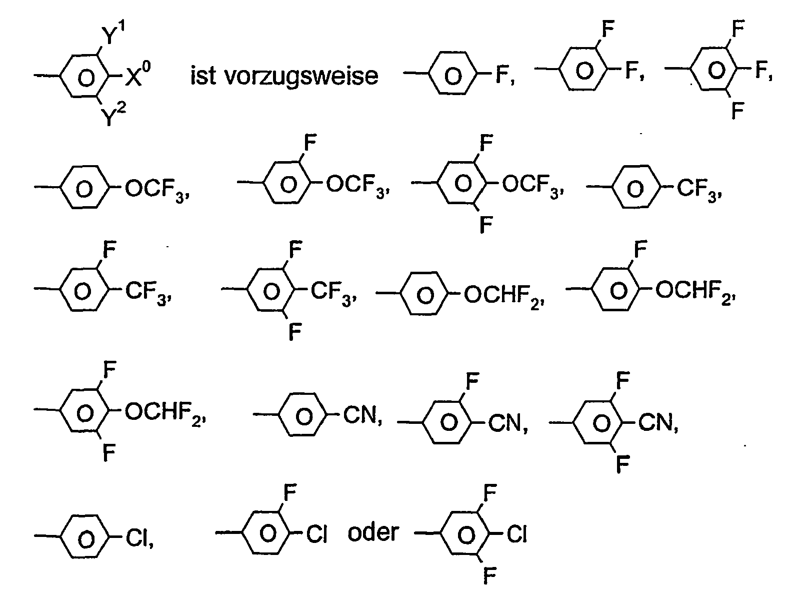
- Das Medium enthält Verbindungen der Formeln II, III, IV, V, VI, VII, VIII und/oder IX.
- R⁰ ist geradkettiges Alkyl oder Alkenyl mit 2 bis 7 C-Atomen.
- Das Medium besteht im wesentlichen aus Verbindungen der Formeln I bis XV.
- Das Medium enthält weitere Verbindungen, vorzugsweise ausgewählt aus der folgenden Gruppe bestehend aus den allgemeinen Formeln XVI bis XX: 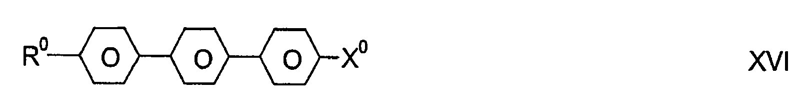 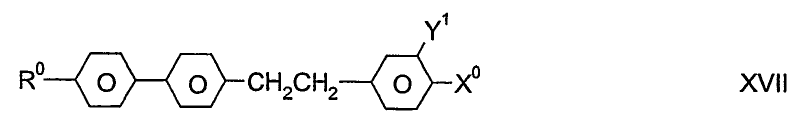 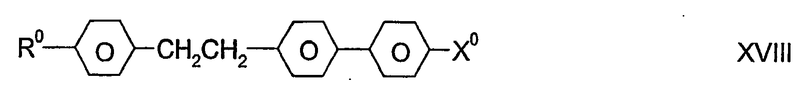 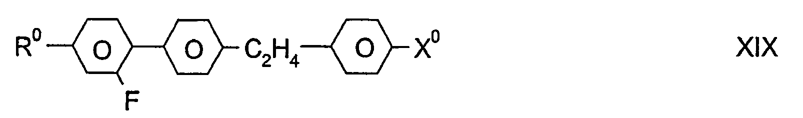 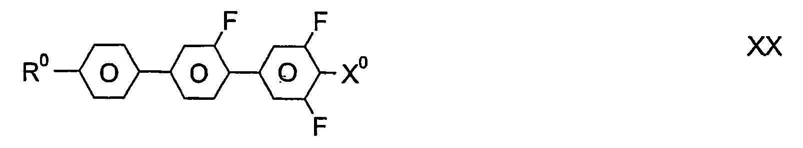
worin R⁰ und X⁰ die oben angegebene Bedeutung haben und die 1,4-Phenylenringe durch CN, Chlor oder Fluor substituiert sein können. Vorzugsweise sind die 1,4-Phenylenringe ein- oder mehrfach durch Fluoratome substituiert.
- Das Medium enthält weitere Verbindungen, vorzugsweise ausgewählt aus der folgenden Gruppe bestehend aus den Formeln RI bis RIX, 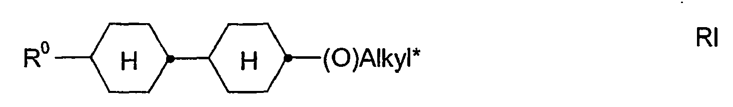 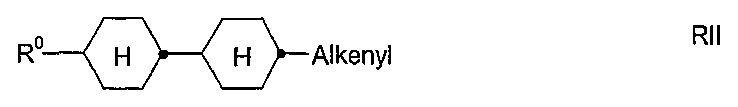 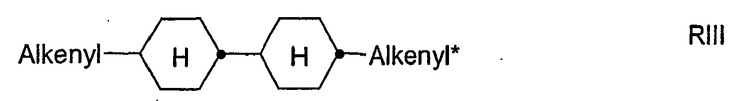 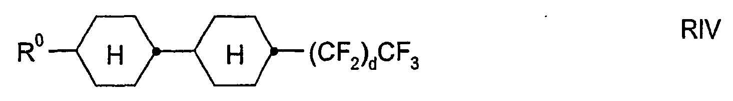 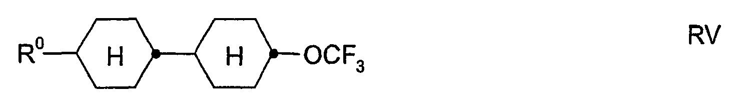 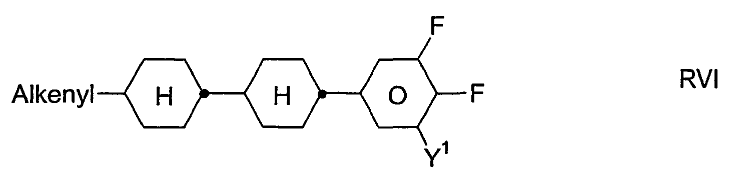 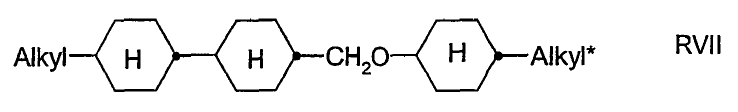 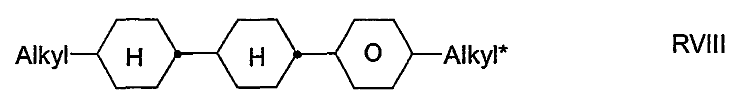 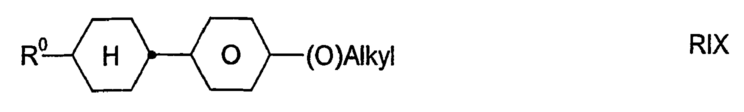
worin
- R⁰: n-Alkyl, Oxaalkyl, Fluoralkyl, Alkenyloxy oder Alkenyl mit jeweils bis zu 9 C-Atomen,
- d: 0, 1 oder 2,
- Y¹: H oder F,
- Alkyl oder Alkyl*: jeweils unabhängig voneinander ein geradkettiger oder verzweigter Alkylrest mit 1-9 C-Atomen,
- Alkenyl oder Alkenyl*: jeweils unabhängig voneinander einen geradkettigen oder verzweigten Alkenylrest mit bis zu 9 C-Atomen
bedeuten.
- Das Medium enthält vorzugsweise ein oder mehrere Verbindungen der Formeln 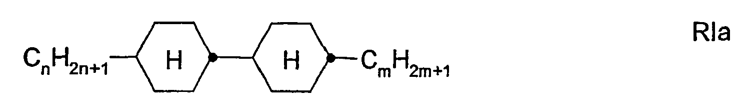 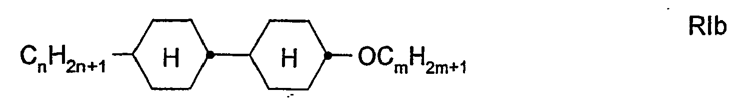 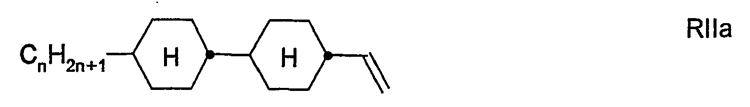 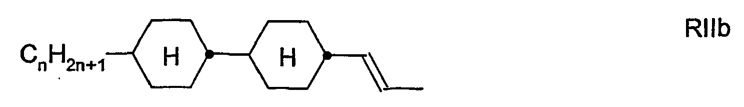 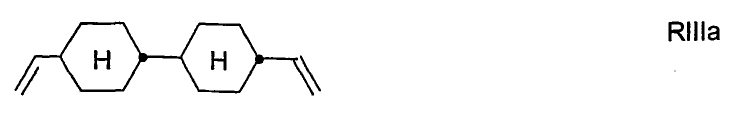 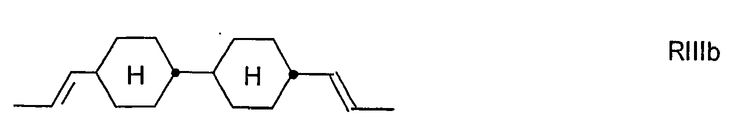 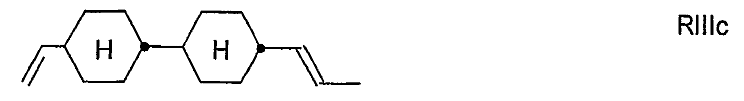 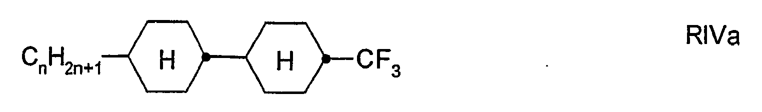
worin n und m jeweils eine ganze Zahl von 1-9 bedeuten.
- Das Gewichtsverhältnis I: (II + III + IV + V + VI + VII + VIII + IX) ist vorzugsweise 1 : 10 bis 10 : 1.
- Das Medium besteht im wesentlichen aus Verbindungen ausgewählt aus der Gruppe bestehend aus den allgemeinen Formeln I bis XV.

Es wurde gefunden, dass bereits ein relativ geringer Anteil an Verbindungen der Formel I im Gemisch mit üblichen Flüssigkristallmaterialien, insbesondere jedoch mit einer oder mehreren Verbindungen der Formel II, III, IV, V, VI, VII, VIII oder IX zu einer beträchtlichen Erniedrigung der Schwellenspannung und zu niedrigen Werten für die Doppelbrechung führt, wobei gleichzeitig breite nematische Phasen mit tiefen Übergangstemperaturen smektisch-nematisch beobachtet werden, wodurch die Lagerstabilität verbessert wird. Die Verbindungen der Formeln I bis IX sind farblos, stabil und untereinander und mit anderen Flüssigkristallmaterialien gut mischbar.

Der Ausdruck "Alkyl" oder "Alkyl*" umfasst geradkettige und verzweigte Alkylgruppen mit 1-9 Kohlenstoffatomen, insbesondere die geradkettigen Gruppen Methyl, Ethyl, Propyl, Butyl, Pentyl, Hexyl und Heptyl. Gruppen mit 2-5 Kohlenstoffatomen sind im allgemeinen bevorzugt.

Der Ausdruck "Alkenyl" oder "Alkenyl*" umfasst geradkettige und verzweigte Alkenylgruppen mit bis zu 9 Kohlenstoffatomen, insbesondere die geradkettigen Gruppen. Besonders bevorzugte Alkenylgruppen sind C₂-C₇-1E-Alkenyl, C₄-C₇-3E-Alkenyl, C₅-C₇-4-Alkenyl, C₆-C₇-5-Alkenyl und C₇-6-Alkenyl, insbesondere C₂-C₇-1 E-Alkenyl, C₄-C₇-3E-Alkenyl und C₅-C₇-4-Alkenyl. Beispiele bevorzugter Alkenylgruppen sind Vinyl, 1E-Propenyl, 1E-Butenyl, 1E-Pentenyl, 1E-Hexenyl, 1E-Heptenyl, 3-Butenyl, 3E-Pentenyl, 3E-Hexenyl, 3E-Heptenyl, 4-Pentenyl, 4Z-Hexenyl, 4E-Hexenyl, 4Z-Heptenyl, 5-Hexenyl, 6-Heptenyl und dergleichen. Gruppen mit bis zu 5 Kohlenstoffatomen sind im allgemeinen bevorzugt.

Der Ausdruck "Fluoralkyl" umfasst vorzugsweise geradkettige Gruppen mit endständigen Fluor, d.h. Fluormethyl, 2-Fluorethyl, 3-Fluorpropyl, 4-Fluorbutyl, 5-Fluorpentyl, 6-Fluorhexyl und 7-Fluorheptyl. Andere Positionen des Fluors sind jedoch nicht ausgeschlossen.

Der Ausdruck "Oxaalkyl" umfasst vorzugsweise geradkettige Reste der Formel CₙH₂ₙ₊₁-O-(CH₂)ₘ, worin n und m jeweils unabhängig voneinander 1 bis 6 bedeuten. Vorzugsweise ist n = 1 und m 1 bis 6.

Durch geeignete Wahl der Bedeutungen von R⁰ und X⁰ können die Ansprechzeiten, die Schwellenspannung, die Steilheit der Transmissionskennlinien etc. in gewünschter Weise modifiziert werden. Beispielsweise führen 1E-Alkenylreste, 3E-Alkenylreste, 2E-Alkenyloxyreste und dergleichen in der Regel zu kürzeren Ansprechzeiten, verbesserten nematischen Tendenzen und einem höheren Verhältnis der elastischen Konstanten k₃₃ (bend) und k₁₁ (splay) im Vergleich zu Alkyl- bzw. Alkoxyresten. 4-Alkenylreste, 3-Alkenylreste und dergleichen ergeben im allgemeinen tiefere Schwellenspannungen und kleinere Werte von k₃₃/k₁₁ im Vergleich zu Alkyl- und Alkoxyresten.

Eine Gruppe -CH₂CH₂- in Z¹ und/oder Z² führt im allgemeinen zu höheren Werten von k₃₃/k₁₁ im Vergleich zu einer einfachen Kovalenzbindung. Höhere Werte von k₃₃/k₁₁ ermöglichen z.B. flachere Transmissionskennlinien in TN-Zellen mit 90° Verdrillung (zur Erzielung von Grautönen und schnelleren Schaltzeiten) und steilere Transmissionskennlinien in STN-, SBE- und OMI-Zellen (höhere Multiplexierbarkeit) und umgekehrt.

Das optimale Mengenverhältnis der Verbindungen der Formeln I und II + III + IV + V + VI + VII + VII + VIII + IX hängt weitgehend von den gewünschten Eigenschaften, von der Wahl der Komponenten der Formeln I, II, III, IV, V, VI, VII, VIII und/oder IX und von der Wahl weiterer gegebenenfalls vorhandener Komponenten ab. Geeignete Mengenverhältnisse innerhalb des oben angegebenen Bereichs können von Fall zu Fall leicht ermittelt werden.

Die Gesamtmenge an Verbindungen der Formeln I bis XV in den erfindungsgemäßen Gemischen ist nicht kritisch. Die Gemische können daher eine oder mehrere weitere Komponenten enthalten zwecks Optimierung verschiedener Eigenschaften. Der beobachtete Effekt auf die Ansprechzeiten und die Schwellenspannung ist jedoch in der Regel umso größer je höher die Gesamtkonzentration an Verbindungen der Formeln I bis XV ist.

In einer besonders bevorzugten Ausführungsform enthalten die erfindungsgemäßen Medien Verbindungen der Formel II bis IX (vorzugsweise II und/oder III), worin X⁰ OCF₃, OCHF₂, F, OCH=CF₂, OCF=CF₂, OCF₂CHFCF₃, oder OCF₂-CF₂H bedeutet. Eine günstige synergistische Wirkung mit den Verbindungen der Formel I führt zu besonders vorteilhaften Eigenschaften.

Der Aufbau der erfindungsgemäßen MFK-Anzeige aus Polarisatoren, Elektrodengrundplatten und Elektroden mit Oberflächenbehandlung entspricht der für derartige Anzeigen üblichen Bauweise. Dabei ist der Begriff der üblichen Bauweise hier weit gefasst und umfasst auch alle Abwandlungen und Modifikationen der MFK-Anzeige, insbesondere auch Matrix-Anzeigeelemente auf Basis poly-Si TFT oder MIM.

Ein wesentlicher Unterschied der erfindungsgemäßen Anzeigen zu den bisher üblichen auf der Basis der verdrillten nematischen Zelle besteht jedoch in der Wahl der Flüssigkristallparameter der Flüssigkristallschicht.

Die Herstellung der erfindungsgemäß verwendbaren Flüssigkristallmischungen erfolgt in an sich üblicher Weise. In der Regel wird die gewünschte Menge der in geringerer Menge verwendeten Komponenten in der den Hauptbestandteil ausmachenden Komponenten gelöst, zweckmäßig bei erhöhter Temperatur. Es ist auch möglich, Lösungen der Komponenten in einem organischen Lösungsmittel, z.B. in Aceton, Chloroform oder Methanol, zu mischen und das Lösungsmittel nach Durchmischung wieder zu entfernen, beispielsweise durch Destillation.

Die Dielektrika können auch weitere, dem Fachmann bekannte und in der Literatur beschriebene Zusätze, wie z. B. Stabilisatoren, Antioxidation, enthalten. Beispielsweise können 0-15 % pleochroitische Farbstoffe oder chirale Dotierstoffe zugesetzt werden.

C bedeutet eine kristalline, S eine smektische, S_{C} eine smektische C, S_{B} eine smektische B, N eine nematische und I die isotrope Phase.

V₁₀ bezeichnet die Spannung für 10 % Transmission (Blickrichtung senkrecht zur Plattenoberfläche). tₒₙ bezeichnet die Einschaltzeit und t_{off} die Ausschaltzeit bei einer Betriebsspannung entsprechend dem 2fachen Wert von V₁₀. Δn bezeichnet die optische Anisotropie und nₒ den Brechungsindex. Δε bezeichnet die dielektrische Anisotropie (Δε = ε_{∥} - ε_{┴}, wobei ε_{∥} die Dielektrizitätskonstante parallel zu den Moleküllängsachsen und ε_{┴} die Dielektrizitätskonstante senkrecht dazu bedeutet). Die elektrooptischen Daten wurden in einer TN-Zelle im 1. Minimum (d.h. bei einem d · Δn-Wert von 0,5) bei 20 °C gemessen, sofern nicht ausdrücklich etwas anderes angegeben wird. Die optischen Daten wurden bei 20 °C gemessen, sofern nicht ausdrücklich etwas anderes angegeben wird.

In der vorliegenden Anmeldung und in den folgenden Beispielen sind die Strukturen der Flüssigkristallverbindungen durch Acronyme angegeben, wobei die Transformation in chemische Formeln gemäß folgender Tabellen A und B erfolgt. Alle Reste CₙH₂ₙ₊₁ und CₘH₂ₘ₊₁ sind geradkettige Alkylreste mit n bzw. m C-Atomen. n und m bedeuten jeweils unabhängig voneinander 1, 2, 3, 4, 5, 6, 7, 8, 9, 10, 11, 12, 13, 14 oder 15. Die Codierung gemäß Tabelle B versteht sich von selbst. In Tabelle A ist nur das Acronym für den Grundkörper angegeben. Im Einzelfall folgt getrennt vom Acronym für den Grundkörper mit einem Strich ein Code für die Substituenten R¹, R², L¹ und L²:

| Code für R¹, R², L¹, L² | R¹ | R² | L¹ | L² |
|---|---|---|---|---|
| nm | CₙH₂ₙ+1 | CₘH₂ₘ₊₁ | H | H |
| nOm | CₙH₂ₙ₊₁ | OCₘH₂ₘ₊₁ | H | H |
| nO.m | OCₙH₂ₙ₊₁ | CₘH₂ₘ₊₁ | H | H |
| n | CₙH₂ₙ₊₁ | CN | H | H |
| nN.F | CₙH₂ₙ₊₁ | CN | H | F |
| nF | CₙH₂ₙ₊₁ | F | H | H |
| nOF | OCₙH₂ₙ₊₁ | F | H | H |
| nCl | CnH₂ₙ₊₁ | Cl | H | H |
| nF.F | CₙH₂ₙ₊₁ | F | H | F |
| nF.F.F | CₙH₂ₙ₊₁ | F | F | F |
| nCF₃ | CₙH₂ₙ₊₁ | CF₃ | H | H |
| nOCF₃ | CₙH₂ₙ₊₁ | OCF₃ | H | H |
| nOCF₂ | CₙH₂ₙ₊₁ | OCHF₂ | H | H |
| nS | CₙH₂ₙ₊₁ | NCS | H | H |
| rVsN | CᵣH₂ᵣ₊₁-CH=CH-CₛH₂ₛ- | CN | H | H |
| rEsN | CᵣH₂ᵣ₊₁-O-C₂H₂ₛ- | CN | H | H |
| nAm | CₙH₂ₙ₊₁ | COOCₘH₂ₘ₊₁ | H | H |
| nOCCF₂.F.F | CₙH₂ₙ₊₁ | OCH₂CF₂H | F | F |

Bevorzugte Mischungskomponenten finden sich in den Tabellen A und B.

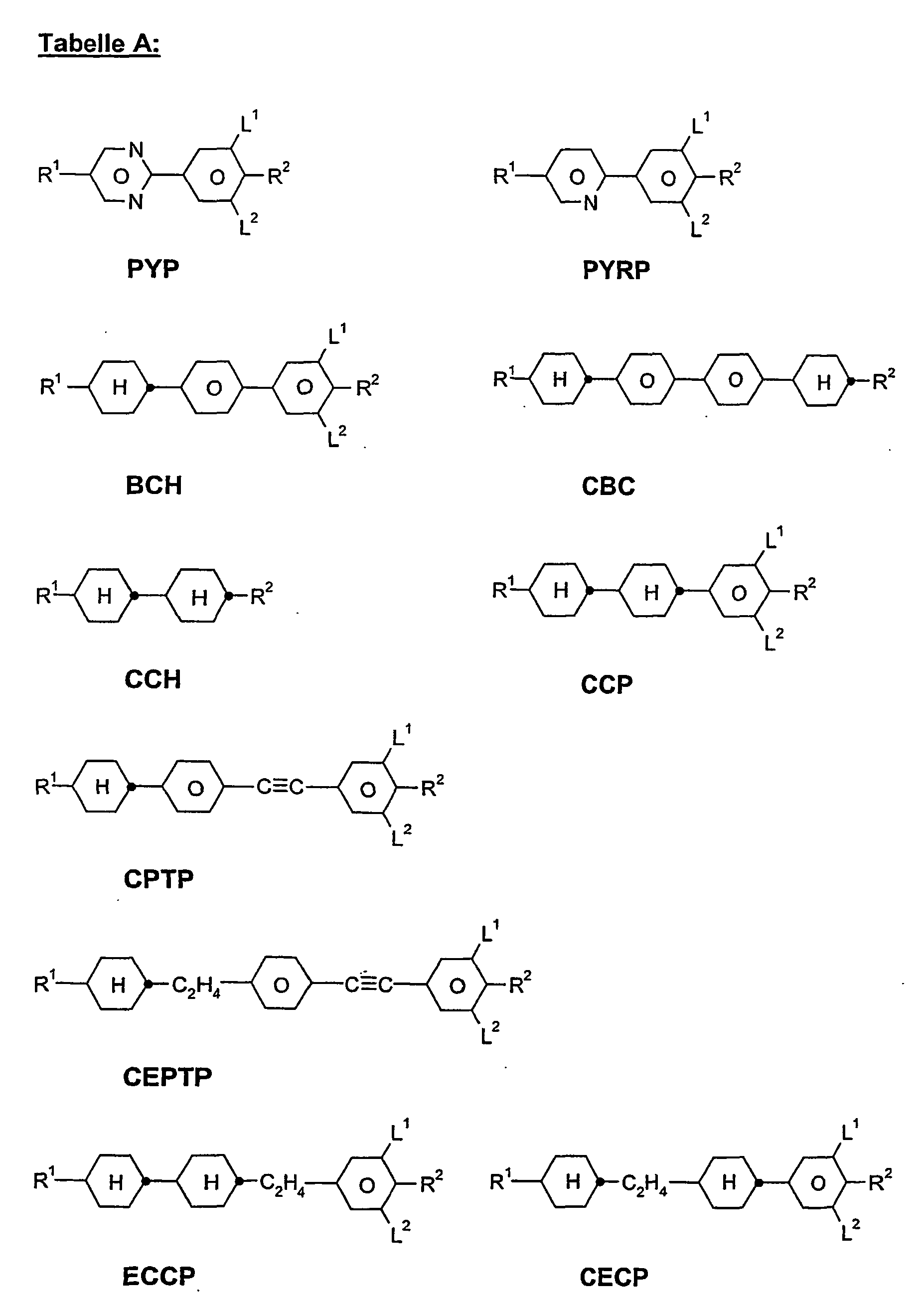

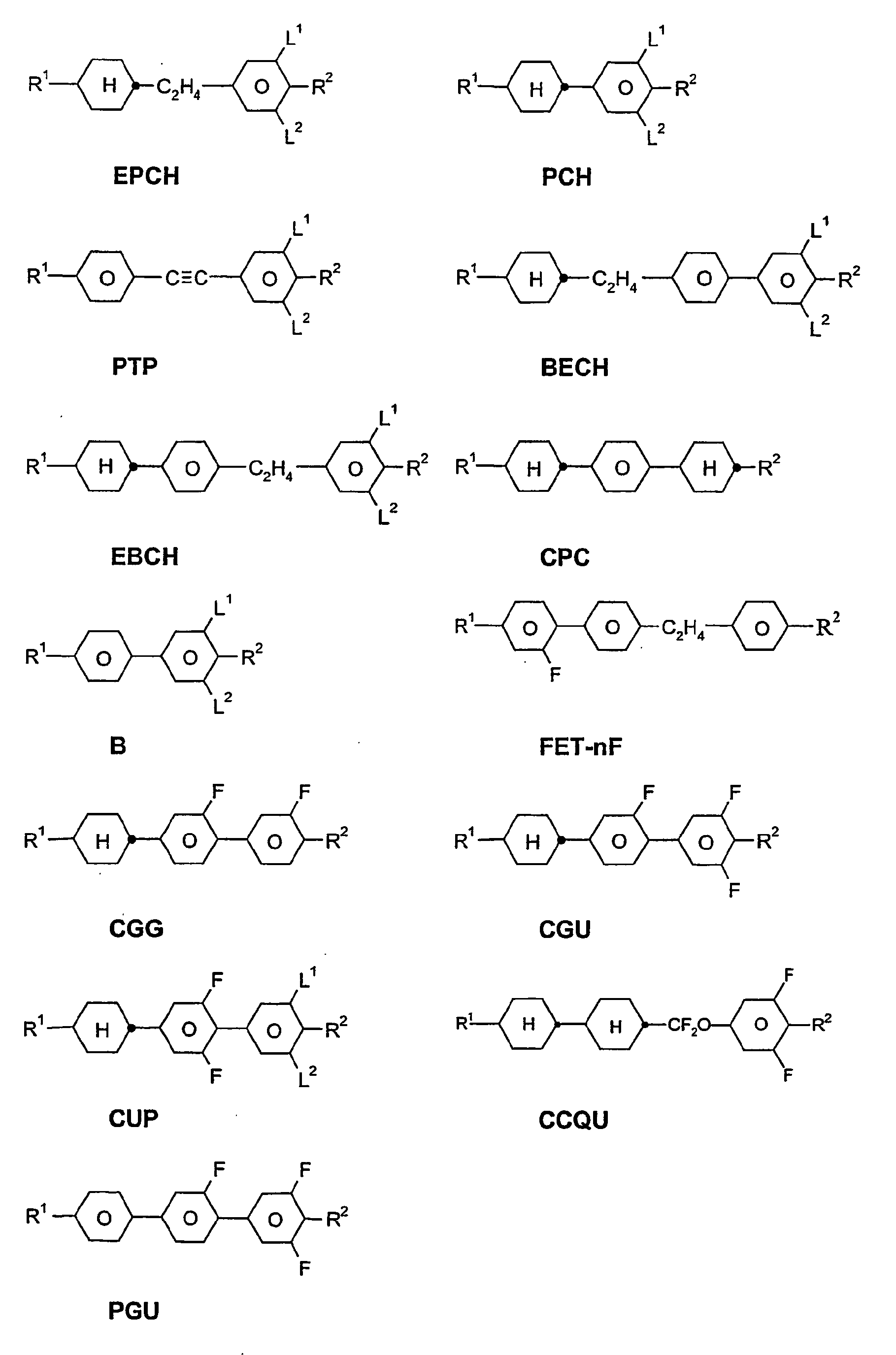

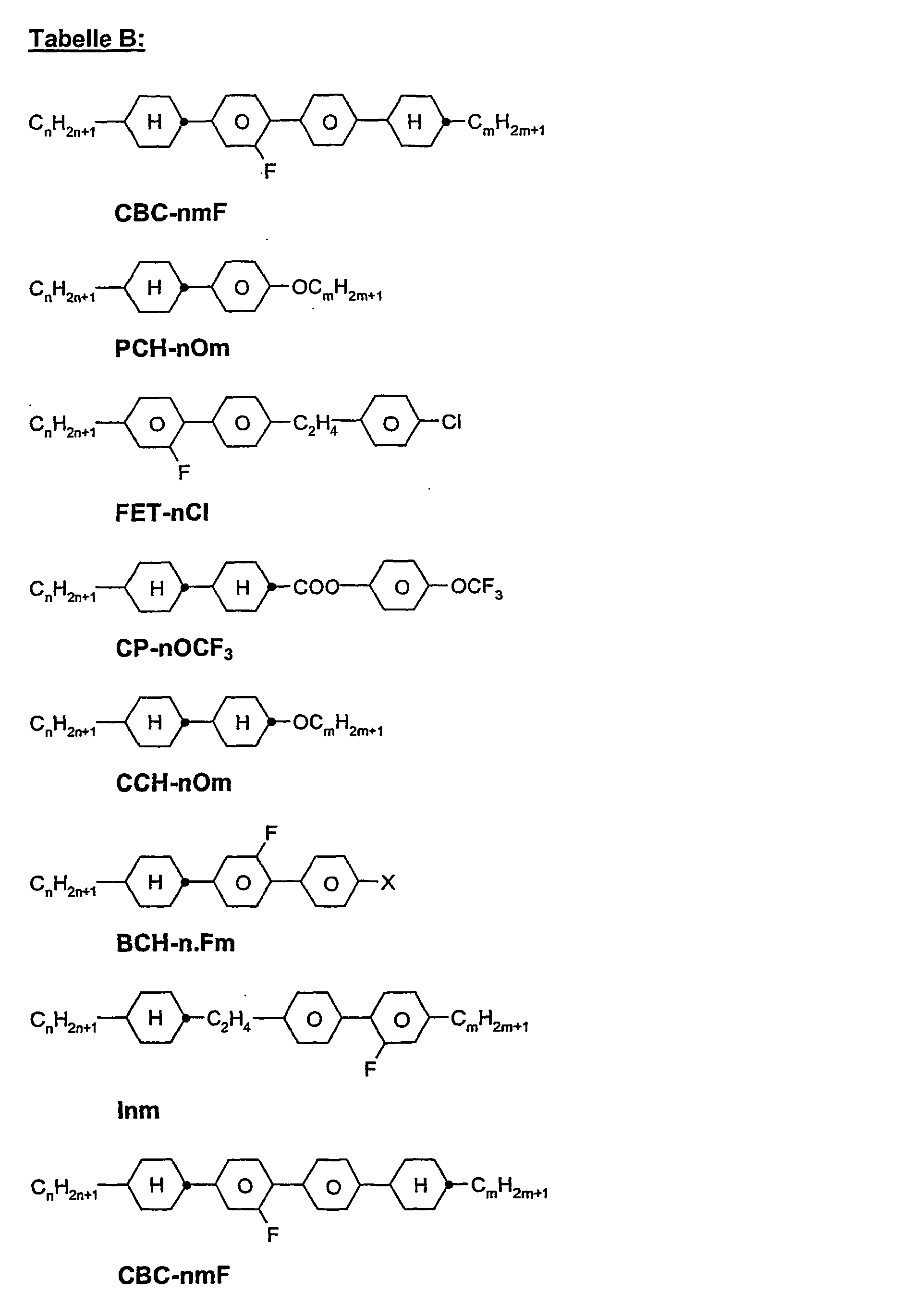

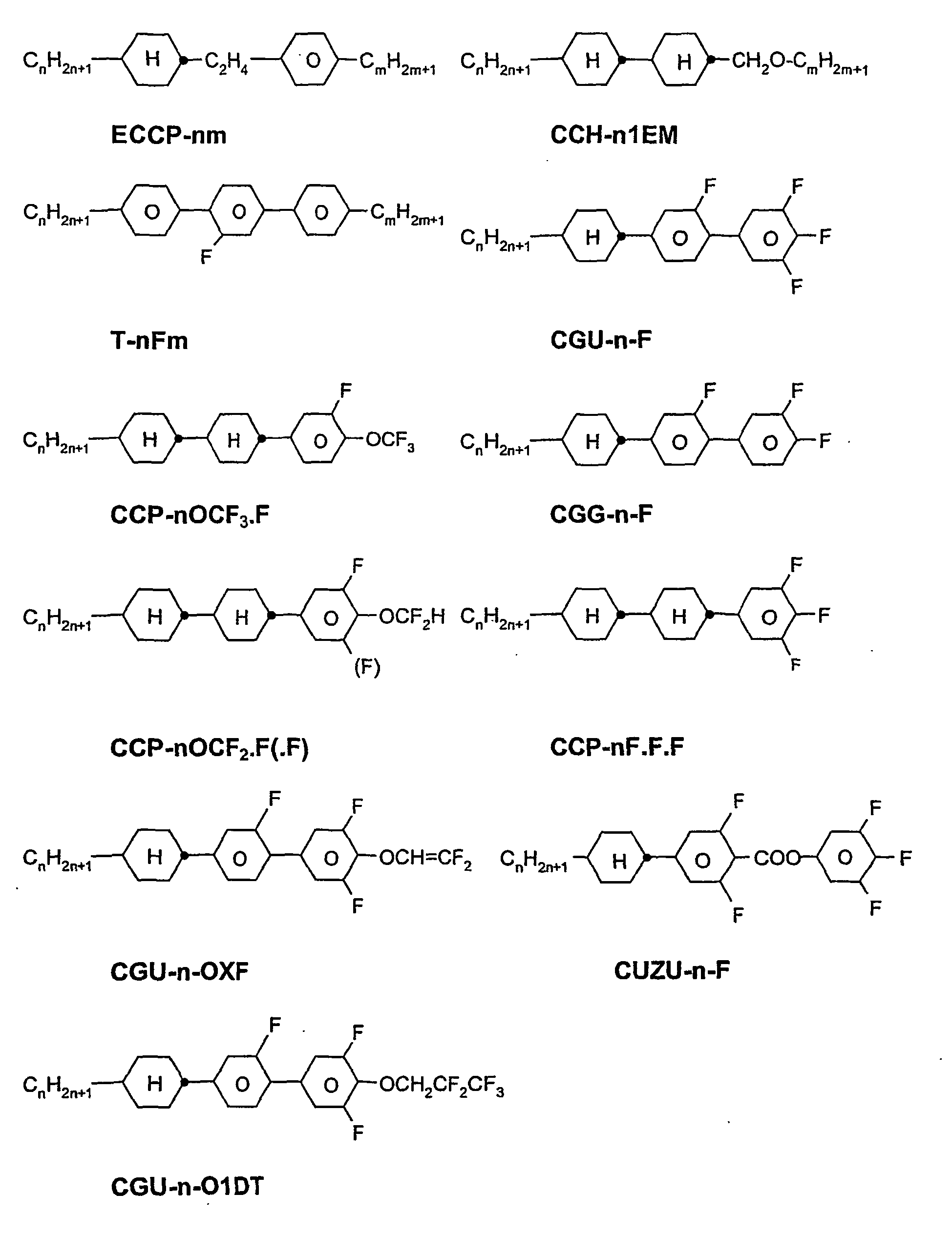

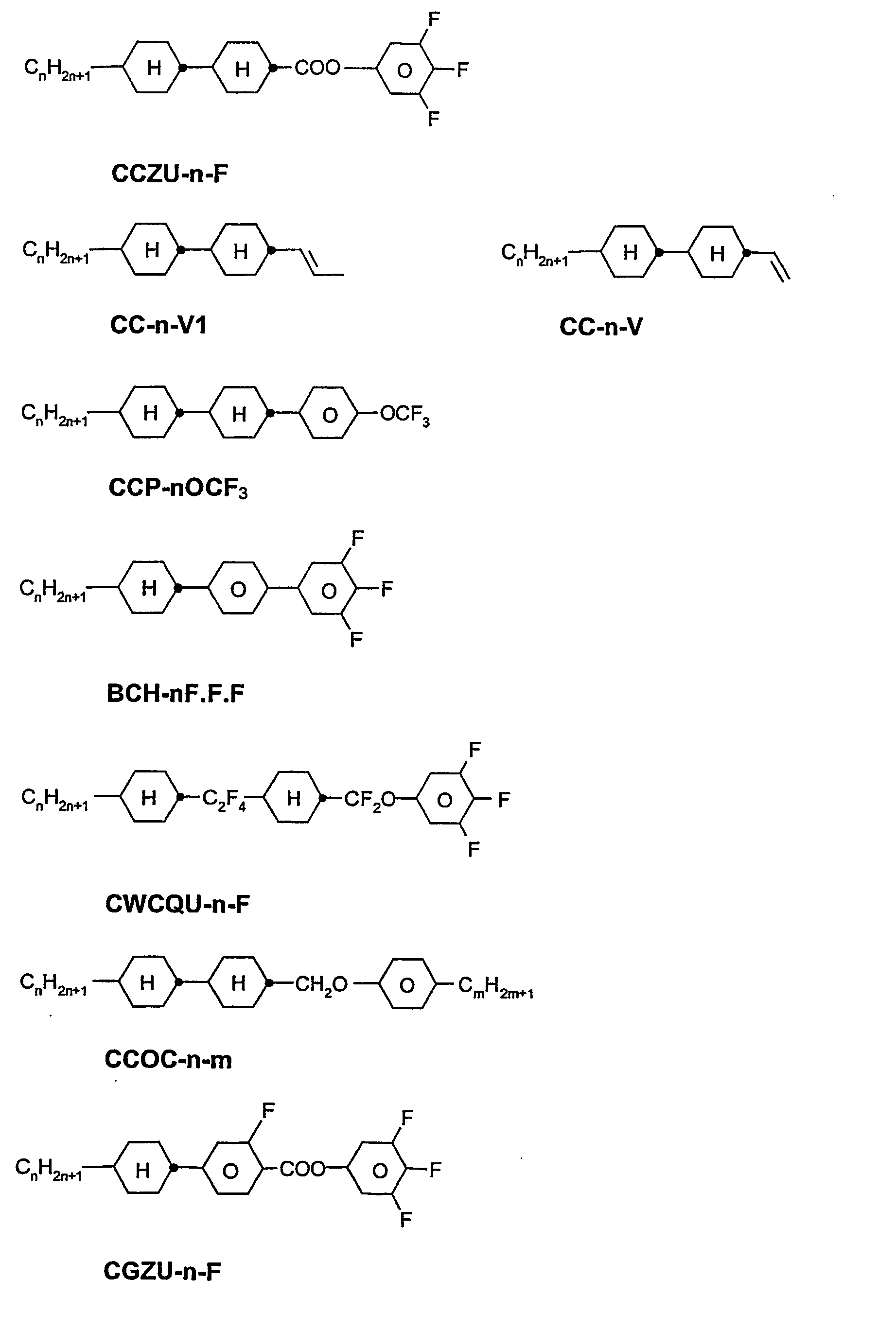

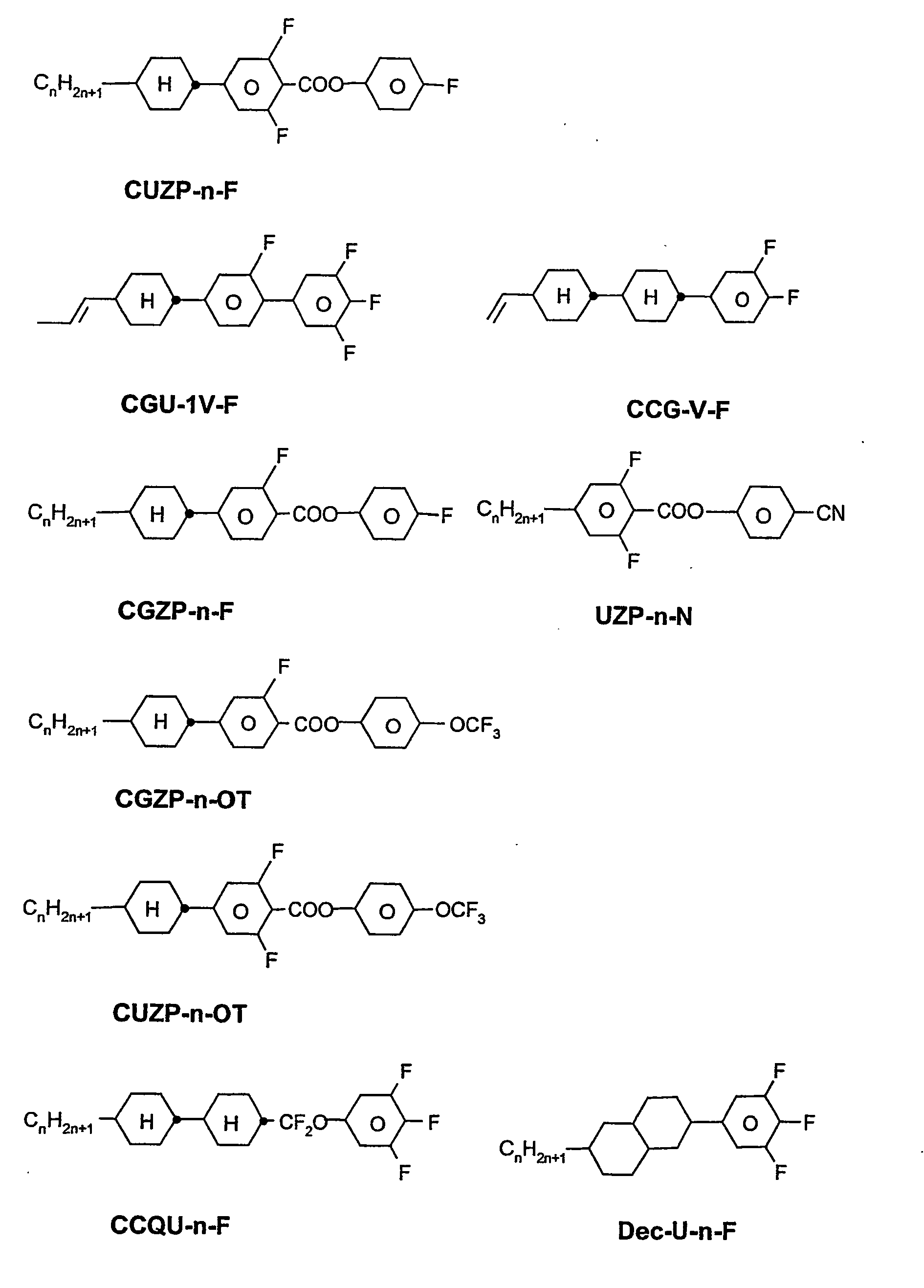

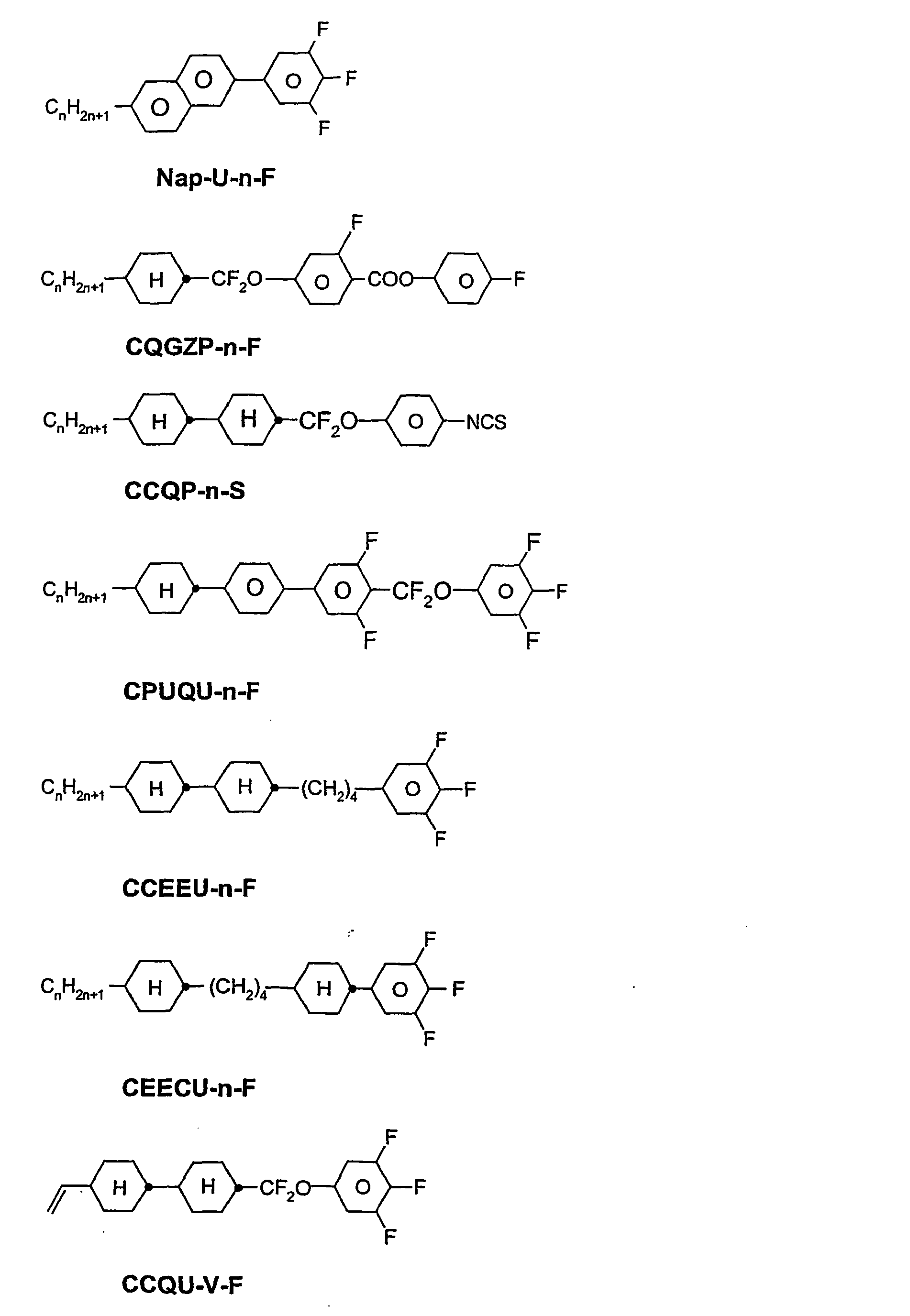

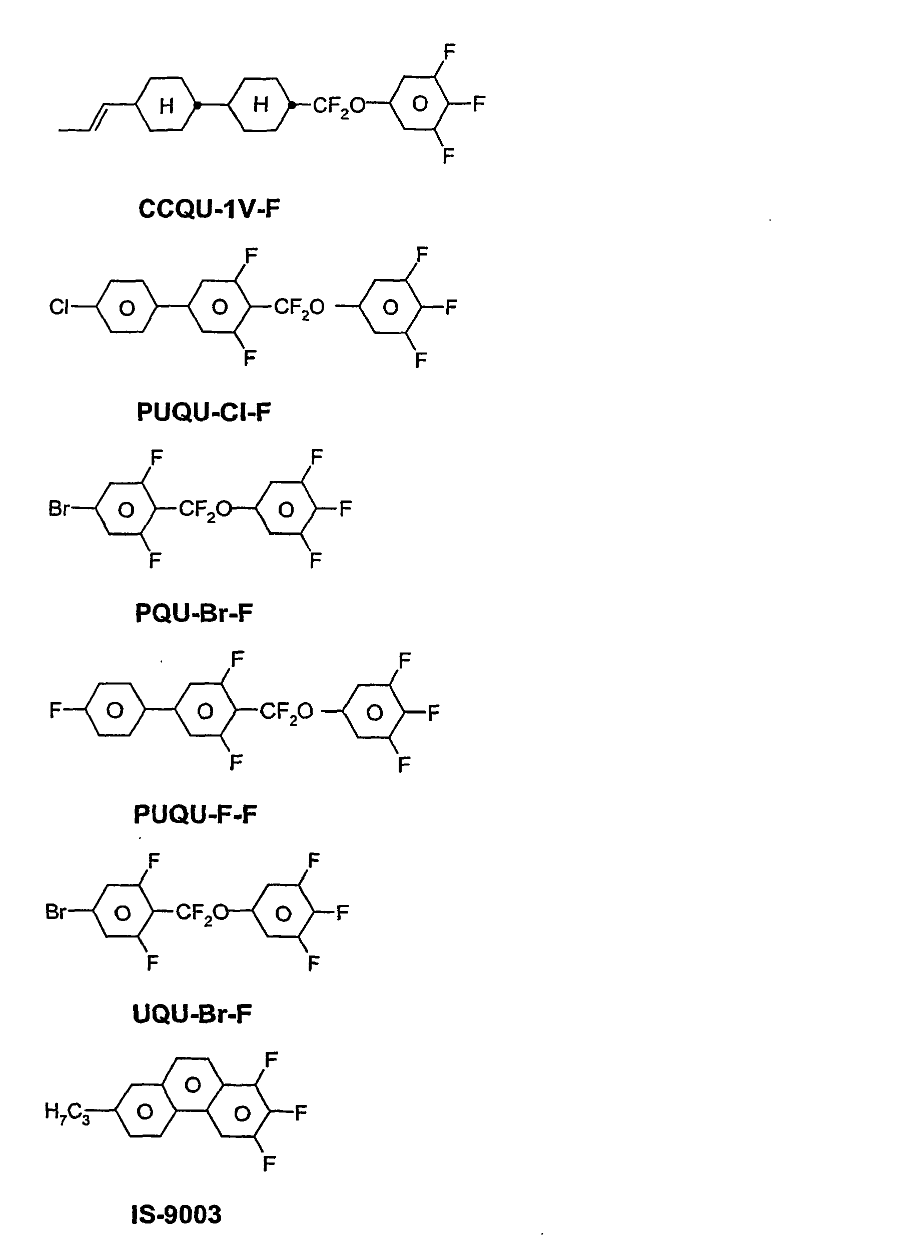

### Tabelle C:

In der Tabelle C werden mögliche Dotierstoffe angegeben, die in der Regel den erfindungsgemäßen Mischungen zugesetzt werden.

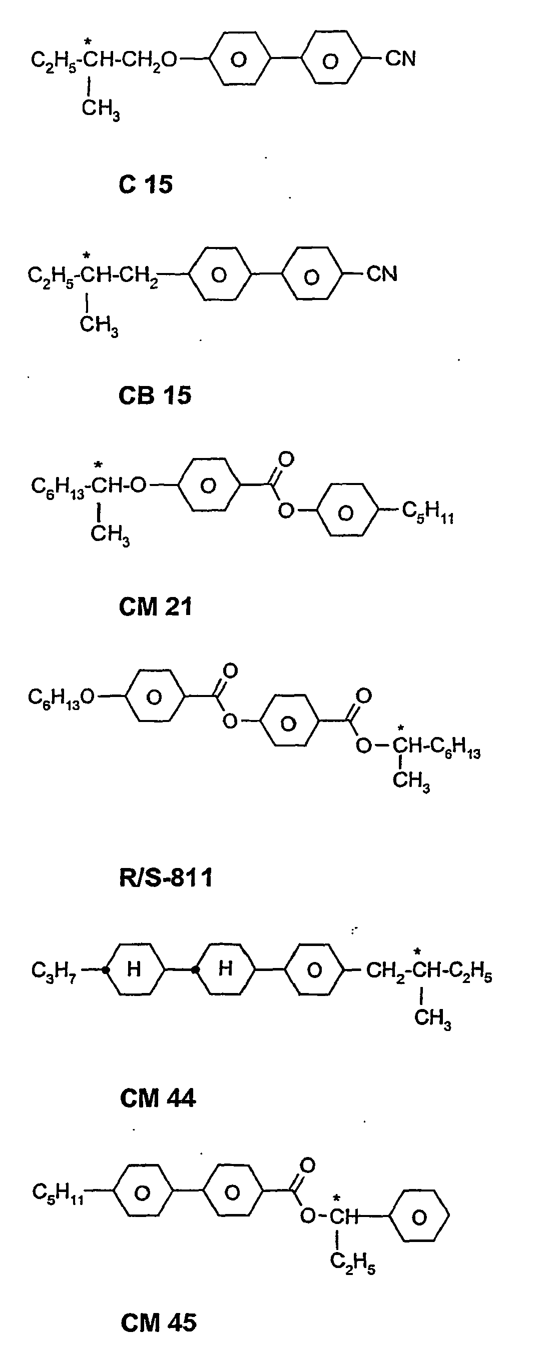

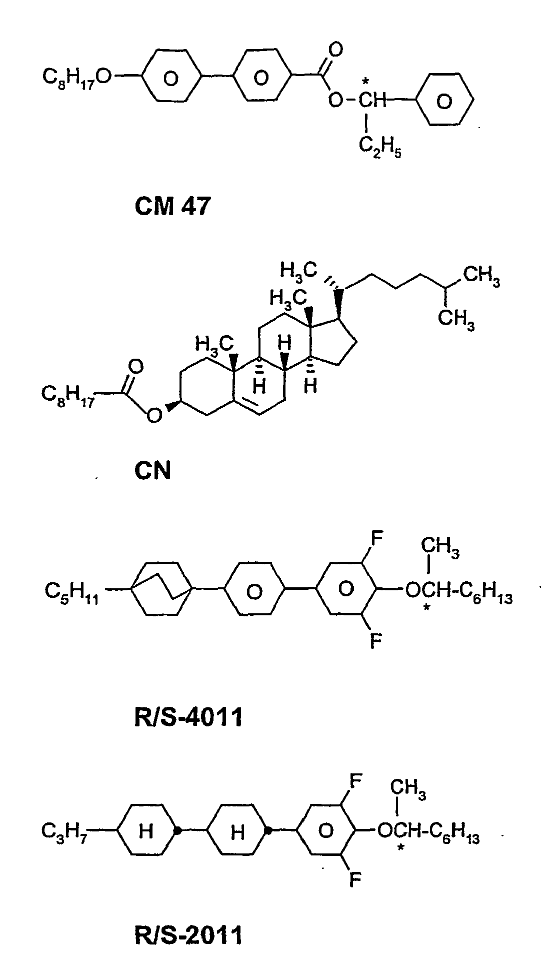

### Tabelle D

Stabilisatoren, die beispielsweise den erfindungsgemäßen Mischungen zugesetzt werden können, werden nachfolgend genannt.

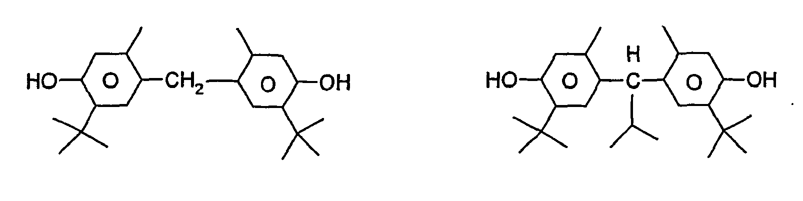

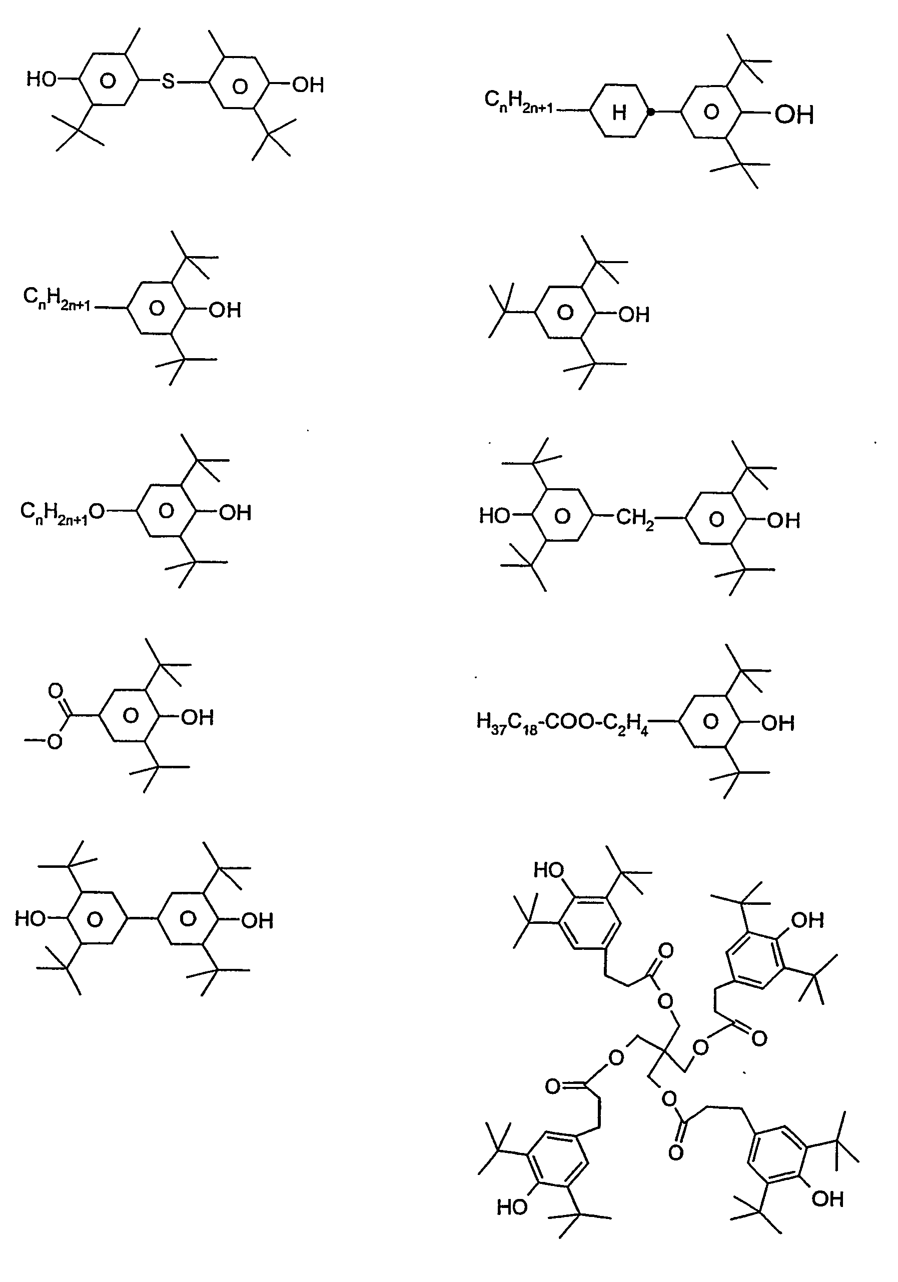

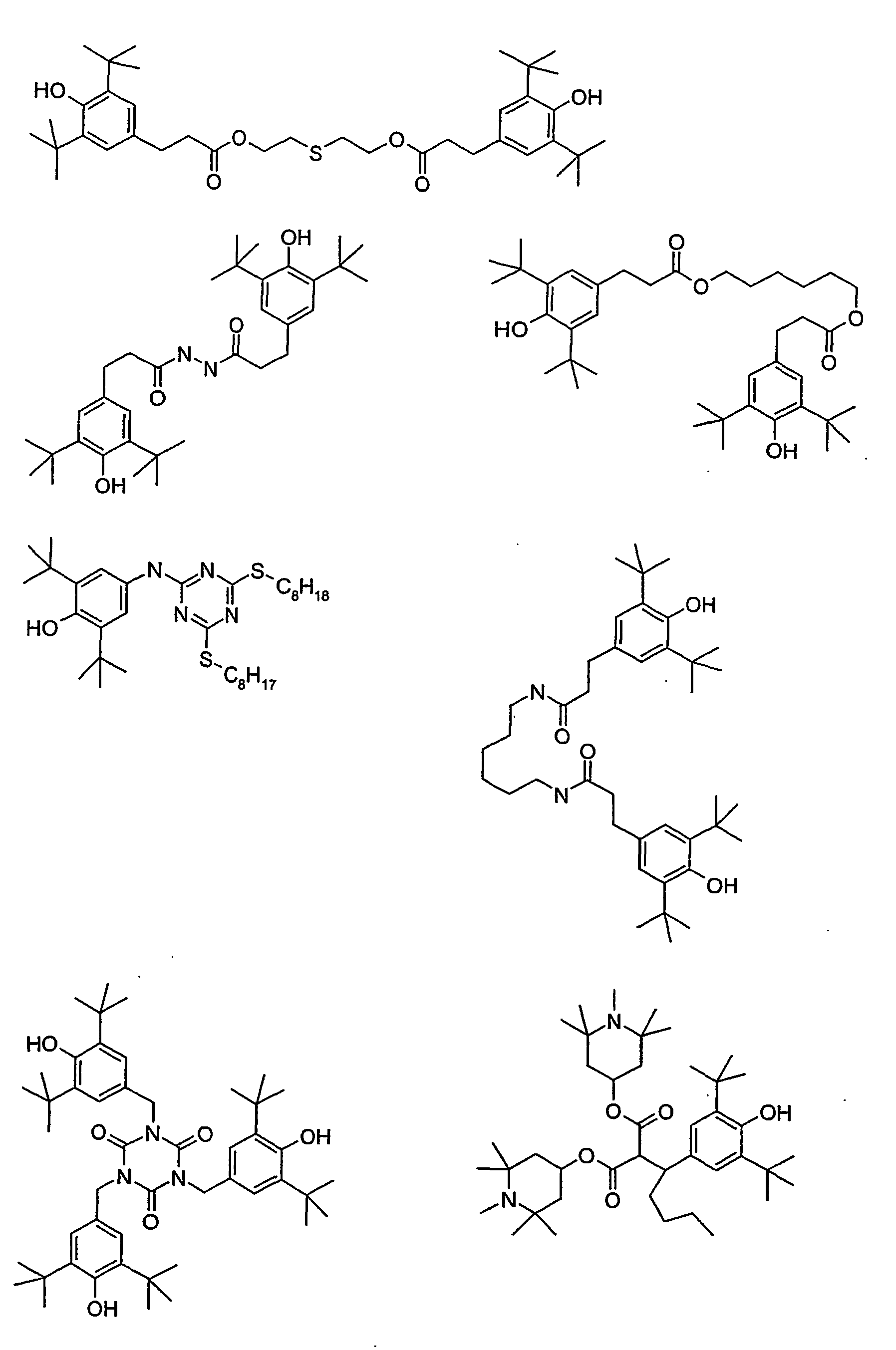

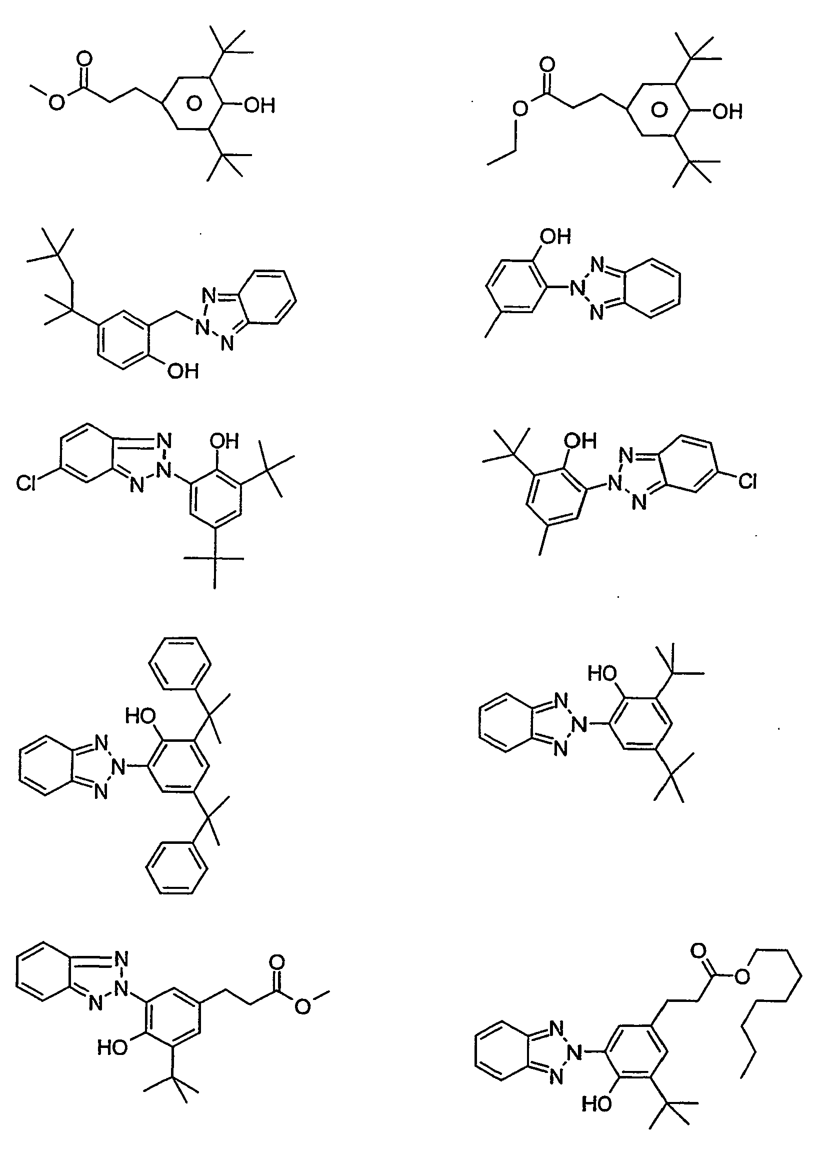

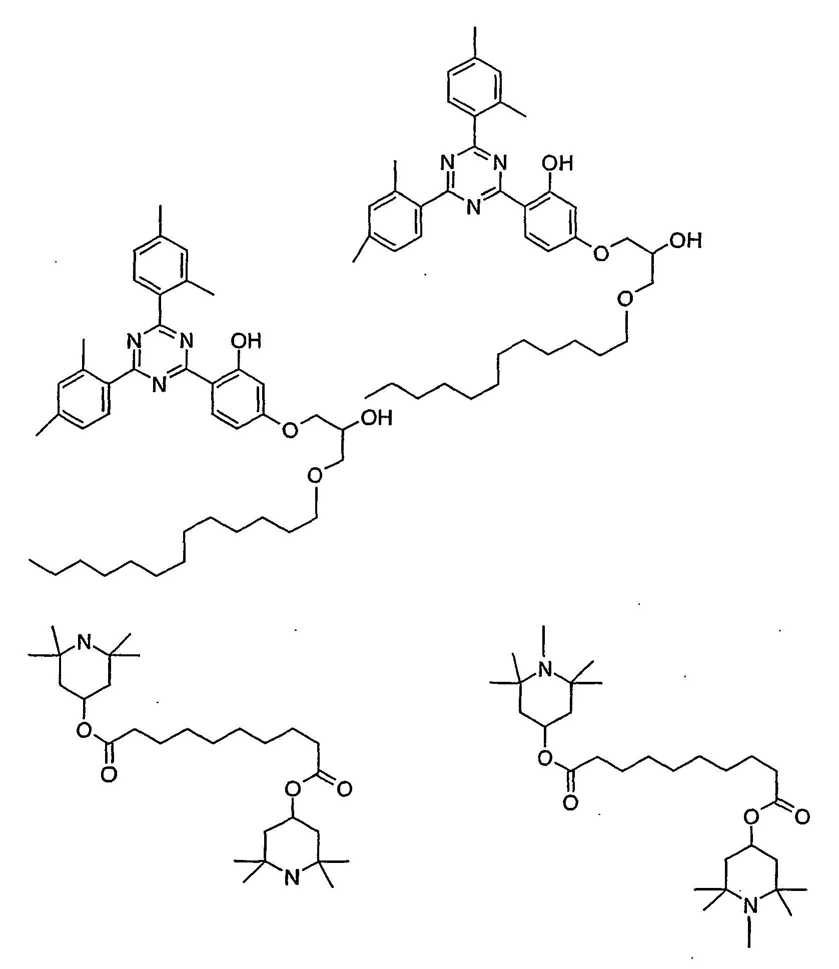

Die folgenden Beispiele sollen die Erfindung erläutern, ohne sie zu begrenzen. Vor- und nachstehend bedeuten Prozentangaben Gewichtsprozent. Alle Temperaturen sind in Grad Celsius angegeben. Fp. bedeutet Schmelzpunkt, Kp. Klärpunkt. Ferner bedeuten K = kristalliner Zustand, N = nematische Phase, S = smektische Phase und I = isotrope Phase. Die Angaben zwischen diesen Symbolen stellen die Übergangstemperaturen dar. Δn bedeutet optische Anisotropie (589 nm, 20 °C), Δε die dielektrische Anisotropie 1 kHz, 20 °C), die Fließviskosität ν₂₀ (mm2/sec) wurde bei 20 °C bestimmt. Die Rotationsviskosität γ₁ (mPa·s) wurde ebenfalls bei 20 °C bestimmt.

"Übliche Aufarbeitung" bedeutet: man gibt gegebenenfalls Wasser hinzu, extrahiert mit Dichlormethan, Diethylether, Methyl-tert.Butylether oder Toluol, trennt ab, trocknet die organische Phase, dampft ein und reinigt das Produkt durch Destillation unter reduziertem Druck oder Kristallisation und/oder Chromatographie. Folgende Abkürzungen werden verwendet:

| | |
|---|---|
| n-BuLi | 1,6 molare Lösung von n-Butyllithium in n-Hexan |
| DMAP | 4-(Dimethylamino)-pyridin |
| THF | Tetrahydrofuran |
| DCC | N,N'-Dicyclohexylcarbodiimid |
| LDA | Lithiumdimethylamid |

### Beispiel 1

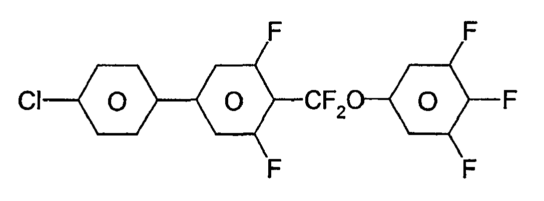

### Schritt 1.1

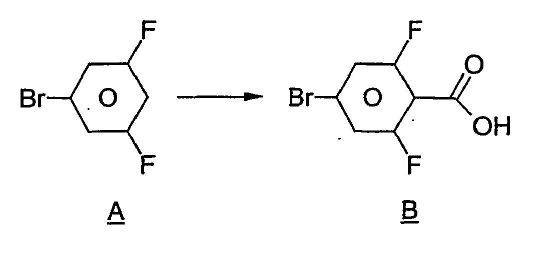

0,6 mol A werden in 750 ml abs. THF gelöst und auf -70 °C gekühlt. Nach Zugabe von 0,583 mol Lithiumdiisopropylamid wird 1 h gerührt. Anschließend wird CO₂ (1,2 mol) in die Reaktionslösung so eingeleitet, dass die Temperatur ≤ -60 °C ist. Nach beendeter Reaktion wird bei -10. °C die Reaktionslösung mit Wasser verrührt und anschließend mit HCl angesäuert. Zuletzt wird wie üblich aufgearbeitet.

### Schritt 1.2

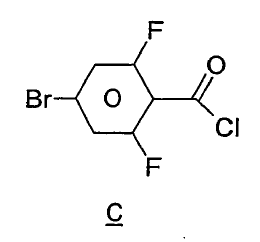

0,078 mol B werden mit 0,156 mol Thionylchlorid versetzt. Das Reaktionsgemisch wird 2 h unter Rückfluß gekocht. Das überschüssige Thionylchlorid wird über Vakuum abgezogen.

### Schritt 1.3

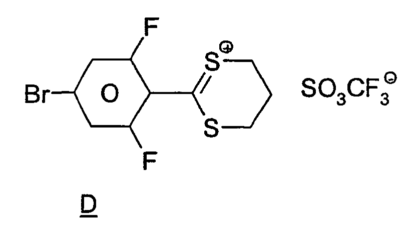

Unter N₂ werden bei 0 °C zu 0,074 mol 1,3-Propandithiol 0,078 mol C unter Rühren zugetropft. Anschließend werden bei -5 °C 0,112 mol Trifluormethansulfonsäure zugetropft und 2 h gerührt. Bei 3 °C werden 0,297 mol Essigsäureanhydrid zugetropft. Nach Zugabe von 150 ml abs. Diethylether wird 0,5 h gerührt. Die Kristalle werden bei -40 °C abgekühlt, 1 h gerührt, abgesaugt, mit Diethylether gewaschen und im Vakuum getrocknet.

### Schritt 1.4

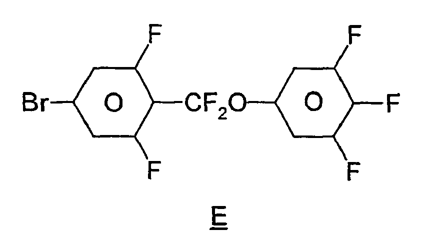

Zu 0,035 mol D gelöst in 200 ml Dichlormethan werden bei -70 °C eine Mischung aus 7,9 ml Triethylamin, 7,8 g 3,4,5-Trifluorphenol in 70 ml Dichlormethan zugetropft. Man rührt 1 h bei -70 °C, tropft zu dem Reaktionsgemisch 0,175 mol Triethylaminhydrofluorid zu, rührt weitere 0,5 h und tropft eine Lösung von 9 ml Brom in 80 ml Dichlormethan bei -70 °C zu. Man rührt weitere 1,5 h bei -70 °C, läßt das Reaktionsgemisch auf 0 °C erwärmen, versetzt mit 210 ml Wasser und 90 ml 32%iger Natronlauge. Nach Beendigung der Nautralisation wird die organische Phase wie üblich aufgearbeitet.

### Schritt 1.5

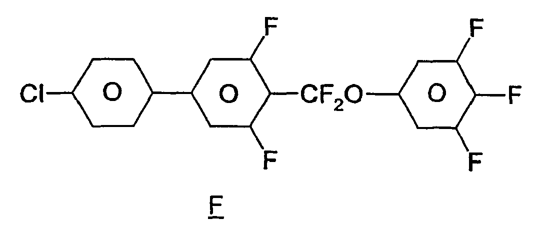

0,015 ml Natriummetaboratoctahydrat werden in 24 ml H₂O vorgelegt, 0,380 mol Bis(triphenyl)phosphinpalladium, 0,380 mol Hydraziniumhydroxid, 10ml THF zugegeben und 5 Minuten gerührt. Zu dem Reaktionsgemisch werden 0,019 mol 4-Chlorphenylboronsäure in 38 ml THF zugegeben, auf 65 °C erwärmt und über Nacht refluxiert. Man läßt das Reaktionsgemisch auf Raumtemperatur abkühlen, versetzt mit Wasser und Methyl-tert.butylether und arbeitet wie üblich auf.
K 71 l; Δn = 0,1271; Δε = 9,9; γ₁ = 68

### Beispiel 2

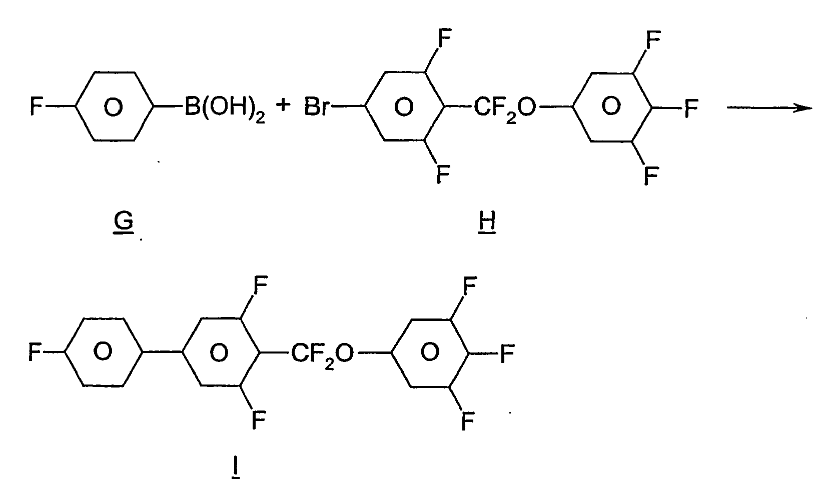

Zu 7,5 mol Natriummetaborat-octahydrat in 12 ml H₂O werden 0,2 mmol Bis(triphenylphosphin)palladium, 0,01 mol H und 6 ml abs. THF zugegeben und 5 Minuten gerührt. Nach Zugabe von 0,01 mol G in 18 ml abs. THF wird über Nacht unter Rückfluss gekocht. Man lässt das Reaktionsgemisch auf Raumtempeatur abkühlen, versetzt mit Methyl-tert. Butylether und arbeitet wie üblich auf.
K 68 l; Δn = 0,1020; Δε = 10,6; γ = 71

### Beispiel 3

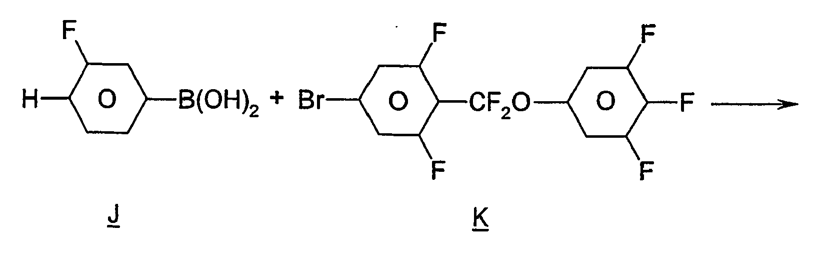

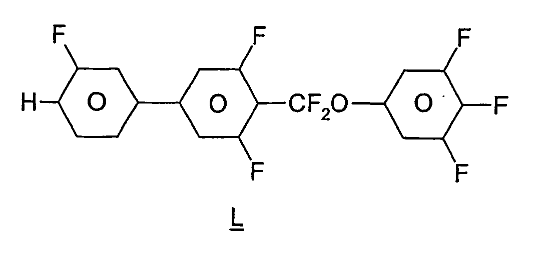

Zu 7,5 mol Natriummetaborat-octahydrat in 12 ml H₂O werden 0,2 mmol Bis(triphenylphosphin)palladium, 0,01 mol K und 6 ml abs. THF zugegeben und 5 Minuten gerührt. Nach Zugabe von 0,01 mol J in 18 ml abs. THF wird über Nacht unter Rückfluss gekocht. Man lässt das Reaktionsgemisch auf Raumtempeatur abkühlen, versetzt mit Methyl-tert.. Butylether und arbeitet wie üblich auf.

### Mischungsbeispiele

### Beispiel M1

| | | | |
|---|---|---|---|
| BCH-3F.F | 10,80 % | Klärpunkt [°C]: | 81,9 |
| BCH-5F.F | 9,00 % | Δn [589nm, 20 °C]: | 0,100 |
| ECCP-30CF₃ | 4,50 % | Δε [1 kHz, 20 °C]: | 5,7 |
| ECCP-50CF₃ | 4,50 % | γ₁[mPa·s): | 125 |
| CBC-33F | 1,80 % | | |
| CBC-53F | 1,80 % | | |
| CBC-55F | 1,80 % | | |
| PCH-6F | 7,20 % | | |
| PCH-7F | 5,40 % | | |
| CCP-20CF₃ | 7,20 % | | |
| CCP-30CF₃ | 10,80 % | | |
| CCP-40CF₃ | 6,30 % | | |
| CCP-50CF₃ | 9,90 % | | |
| PCH-5F | 9,00 % | | |
| PUQU-Cl-F | 10,00 % | | |

### Beispiel M2

| | | | |
|---|---|---|---|
| BCH-3F.F | 10,80 % | Klärpunkt [°C]: | 79,4 |
| BCH-5F.F | 9,00 % | Δn [589 nm, 20 °C]: | 0,0975 |
| ECCP-30CF₃ | 4,50 % | Δε[1 kHz, 20°C]: | 5,8 |
| ECCP-50CF₃ | 4,50 % | ν₂₀ [mm² · s⁻¹]: | 14 |
| CBC-33F | 1,80 % | γ₁ [mPa·s): | 117 |
| CBC-53F | 1,80% | | |
| CBC-55F | 1,80 % | | |
| PCH-6F | 7,20 % | | |
| PCH-7F | 5,40 % | | |
| CCP-20CF₃ | 7,20 % | | |
| CCP-30CF₃ | 10,80 % | | |
| CCP-40CF₃ | 6,30 % | | |
| CCP-50CF₃ | 9,90 % | | |
| PCH-5F | 9,00 % | | |
| PUQU-F-F | 10,00 % | | |

### Beispiel M3

| | | | |
|---|---|---|---|
| BCH-3F.F | 10,80 % | Klärpunkt [°C]: | 72,3 |
| BCH-5F.F | 9,00 % | Δn [589 nm, 20 °C]: | 0,0913 |
| ECCP-30CF₃ | 4,50 % | Δε [1 kHz, 20 °C]: | 5,4 |
| ECCP-50CF₃ | 4,50 % | | |
| CBC-33F | 1,80 % | | |
| CBC-53F | 1,80 % | | |
| CBC-55F | 1,80 % | | |
| PCH-6F | 7,20 % | | |
| PCH-7F | 5,40 % | | |
| CCP-20CF₃ | 7,20 % | | |
| CCP-30CF₃ | 10,80 % | | |
| CCP-40CF₃ | 6,30 % | | |
| CCP-50CF₃ | 9,90 % | | |
| PCH-5F | 9,00 % | | |
| UQU-Br-F | 10,00 % | | |

### Beispiel M4

| | | | |
|---|---|---|---|
| CCP-2F.F.F | 10,00% | S → N [°C]: | <-20 |
| CCP-3F.F.F | 10,00 % | Klärpunkt[°C]: | 82,0 |
| CCP-20CF₃.F | 6,00 % | Δn [589 nm, 20 °C]: | 0,0950 |
| CCP-30CF₃.F | 12,00 % | γ₁ [mPa·s, 20 °C): | 163 |
| CCP-20CF₃ | 6,0% | V_{10,0,20} [V]: | 1,22 |
| CCP-30CF₃ | 8,0 % | | |
| CCP-40CF₃ | 7,00 % | | |
| CCP-50CF₃ | 8,00 % | | |
| PUQU-F-F | 8,00 % | | |
| CGU-2-F | 10,00 % | | |
| CGU-3-F | 11,00 % | | |
| CCGU-3-F | 4,00 % | | |

### Beispiel M5

| | | | |
|---|---|---|---|
| CCP-1 F.F.F | 3,00 % | S→ N [°C]: | < - 40 |
| CCP-2F.F.F | 10,00 % | Klärpunkt [°C]: | 83,0 |
| CCP-3F.F.F | 4,00 % | Δn [589 nm, 20 °C]: | 0,0937 |
| CCP-20CF₃.F | 12,00 % | γ₁ [mPa·s, 20 °C): | 165 |
| CCP-30CF₃.F | 12,00% | V_{10,0,20}[V] : | 1,26 |
| CCP-20CF₃ | 8,00 % | | |
| CCP-30CF₃ | 8,00 % | | |
| CCP-40CF₃ | 5,00 % | | |
| CCP-50CF₃ | 8,00 % | | |
| PUQU-F-F | 7,00 % | | |
| CGU-2-F | 11,00 % | | |
| CGU-3-F | 7,00 % | | |
| CCGU-3-F | 5,00 % | | |

### Beispiel M6

| | |
|---|---|
| PUQU-F-F | 8,00 % |
| CCP-1 F.F.F | 8,50 % |
| CCZU-2-F | 3,00 % |
| CCZU-3-F | 13,00 % |
| CCP-30CF₃ | 8,00 % |
| CCP-40CF₃ | 4,00 % |
| CGZP-2-OT | 6,00 % |
| CGZP-3-OT | 1,80 % |
| PGU-2-F | 2,70 % |
| CC-5-V | 10,00 % |
| CC-3-V1 | 12,00 % |
| CCH-35 | 5,00 % |
| CC-3-V | 18,00 % |

### Beispiel M7

| | | | |
|---|---|---|---|
| PCH-5F | 3,20% | Klärpunkt [°C]: | 90,0 |
| CCP-20CF₂.F.F | 17,04 % | Δε [1 kHz, 20 °C]: | 8,6 |
| CCP-30CF₂.F.F | 16,00 % | | |
| CCP-50CF₂.F.F | 17,04 % | | |
| CUP-2F.F | 5,36 % | | |
| CUP-3F.F | 5,36 % | | |
| CBC-33F | 5,36 % | | |
| CBC-53F | 5,36 % | | |
| CBC-55F | 5,28 % | | |
| PUQU-F-F | 20,00 % | | |

### Beispiel M8

| | | | |
|---|---|---|---|
| CCP-2F.F.F | 10,00 % | Klärpunkt [°C]: | 85,0 |
| CCP-3F.F.F | 4,00 % | Δn [589 nm, 20 °C]: | 0,0912 |
| CCP-20CF₃.F | 12,00 % | γ₁ [mPa·s, 20 °C): | 152 |
| CCP-30CF₃.F | 12,00 % | V_{10,0,20} [V]: | 1,31 |
| CCP-3F.F | 12,00 % | | |
| CCP-30CF₃ | 4,00 % | | |
| CCP-40CF₃ | 5,00 % | | |
| CCP-50CF₃ | 8,00 % | | |
| PUQU-F-F | 7,00 % | | |
| CGU-2-F | 11,00 % | | |
| CGU-3-F | 7,00 % | | |
| PCH-7F | 5,00 % | | |
| CBC-33 | 3,00 % | | |

### Beispiel M9

| | | | |
|---|---|---|---|
| CCP-2F.F.F | 10,00 % | Klärpunkt [°C]: | 99,0 |
| CCP-3F.F.F | 4,00 % | Δn [589 nm, 20 °C]: | 0,0979 |
| CCP-20CF₃.F | 12,00 % | γ₁ [mPa·s, 20 °C): | 186 |
| CCP-30CF₃.F | 12,00 % | V_{10,0,20} [V]: | 1,32 |
| CCP-3F.F | 12,00 % | | |
| CCP-30CF₃ | 4,00 % | | |
| CCP-40CF₃ | 5,00 % | | |
| CCP-50CF₃ | 5,00 % | | |
| PUQU-Cl-F | 7,00 % | | |
| CGU-2-F | 11,00 % | | |
| PCH-7F | 5,00 % | | |
| CBC-33 | 6,00 % | | |
| CCGU-3-F | 7,00 % | | |

### Beispiel M10

| | | | |
|---|---|---|---|
| CCP-2F.F.F | 10,00 % | Klärpunkt [°C]: | 98,0 |
| CCP-3F.F.F | 4,00 % | Δn [589 nm, 20 °C]: | 0,0975 |
| CCP-20CF₃.F | 12,00 % | γ₁ [mPa·s, 20 °C): | 184 |
| CCP-30CF₃.F | 12,00 % | V_{10,0,20} [V]: | 1,29 |
| CCQU-3-F | 10,00 % | | |
| CCP-30CF₃ | 4,00 % | | |
| CCP-40CF3 | 5,00 % | | |
| CCP-50CF₃ | 5,00 % | | |
| PUQU-Cl-F | 7,00 % | | |
| CGU-2-F | 11,00 % | | |
| PCH-7F | 5,00 % | | |
| CBC-33 | 6,00 % | | |
| CCGU-3-F | 9,00 % | | |

### Beispiel M11

| | | | |
|---|---|---|---|
| CCQU-1-F | 10,00 % | Klärpunkt [°C]: | 86,0 |
| CCQU-2-F | 4,00 % | Δn [589 nm, 20 °C]: | 0,0928 |
| CCP-20CF₃.F | 12,00 % | γ₁ [mPa·s, 20 °C): | 152 |
| CCP-30CF₃.F | 12,00 % | V_{10,0,20} [V]: | 1,34 |
| CCQU-3-F | 10,00 % | | |
| CCP-30CF₃ | 4,00 % | | |
| PUQU-F-F | 7,00 % | | |
| CGU-2-F | 11,00 % | | |
| PCH-7F | 5,00 % | | |
| CBC-33 | 6,00 % | | |
| CCGU-3-F | 9,00 % | | |
| CC-3-V1 | 10,00 % | | |

### Beispiel M12

| | | | |
|---|---|---|---|
| IS-9003 | 10,00 % | Klärpunkt [°C]: | 85,0 |
| CCP-3F.F.F | 10,00% | Δn [589 nm, 20 °C]: | 0,1015 |
| CCP-20CF₃.F | 12,00 % | γ₁ [mPa·s, 20 °C): | 145 |
| CCP-30CF3.F | 12,00 % | V_{10,0,20} [V]: | 1,33 |
| CCP-30CF₃ | 4,00 % | | |
| PUQU-F-F | 7,00 % | | |
| CGU-2-F | 11,00 % | | |
| PCH-7F | 5,00 % | | |
| CBC-33 | 6,00 % | | |
| CCGU-3-F | 9,00 % | | |
| CC-3-V1 | 10,00 % | | |
| CCOC-4-3 | 4,00 % | | |

### Beispiel M 13

| | | | |
|---|---|---|---|
| IS-9003 | 10,00 % | Klärpunkt [°C]: | 71,0 |
| CCP-3F.F.F | 10,00 % | Δn [589 nm, 20 °C]: | 0,0980 |
| CCP-20CF₃.F | 12,00 % | γ₁ [mPa·s, 20 °C): | 125 |
| CCP-30CF3.F | 12,00 % | V_{10,0,20} [V]: | 1,36 |
| CCP-30CF₃ | 4,00 % | | |
| PUQU-Cl-F | 11,00 % | | |
| CGU-2-F | 11,00 % | | |
| CC-3-V | 6,00 % | | |
| CCGU-3-F | 9,00 % | | |
| CC-3-V1 | 10,00 % | | |
| CCOC-4-3 | 5,00 % | | |

## Patentansprüche

1. Flüssigkristalline Verbindungen der Formel I, 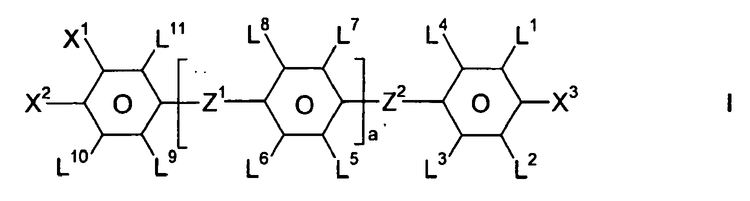 worin
X¹ und X² jeweils unabhängig voneinander F, Cl, Br, I, einer der Reste X¹ oder X² auch H,
X³ F, Cl, CN, NCS, SF₅ oder OCF₃,
Z¹ und Z² jeweils unabhängig voneinander -CO-O-, -O-CO-, -CF₂O-, -OCF₂-, -CH₂O- -OCH₂-, -CH₂CH₂-, -(CH₂)₄-, -C₂F₄-, -CH₂CF₂-, -CF₂CH₂-, -CF=CF-, -CH=CH-, -C≡C- oder eine Einfachbindung, mit der Maßgabe, dass mindestens einer der Brücken Z¹ und Z² -CF₂O- oder -OCF₂- bedeutet,
a 0, 1 oder 2, und
L¹ bis L¹¹ jeweils unabhängig voneinander H oder F
bedeuten.

2. Flüssigkristalline Verbindungen nach Anspruch 1, **dadurch gekennzeichnet, dass** X¹ = F oder Cl und X² = H und X³ = F oder OCF₃ bedeutet.

3. Flüssigkristalline Verbindungen nach Anspruch 1 oder 2, **dadurch gekennzeichnet, dass** X³ = F bedeutet.

4. Flüssigkristalline Verbindungen nach Anspruch 1 oder 3, **dadurch gekennzeichnet, dass** X² = Br bedeutet.

5. Flüssigkristalline Verbindungen nach einem der Ansprüche 1 bis 4, **dadurch gekennzeichnet, dass** a = 1 ist.

6. Flüssigkristalline Verbindungen nach einem der Ansprüche 1 bis 5, **dadurch gekennzeichnet, dass** L¹ Fluor und L² Fluor oder Wasserstoff bedeutet.

7. Flüssigkristalline Verbindungen nach Anspruch 6, **dadurch gekennzeichnet, dass** L² und L³ Fluor bedeuten.

8. Flüssigkristalline Verbindungen der Formeln I1 bis I120

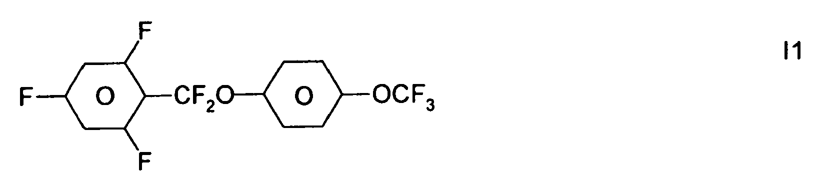

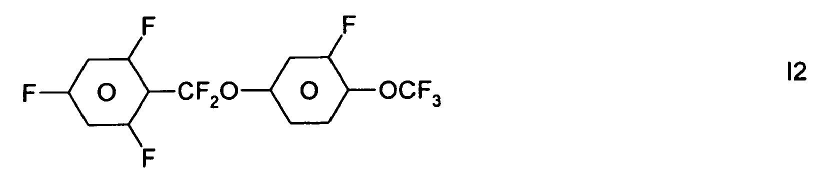

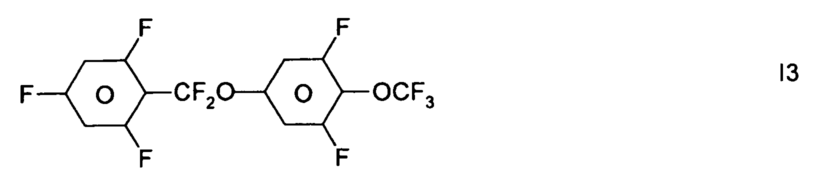

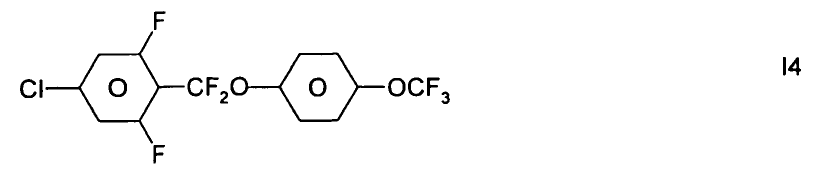

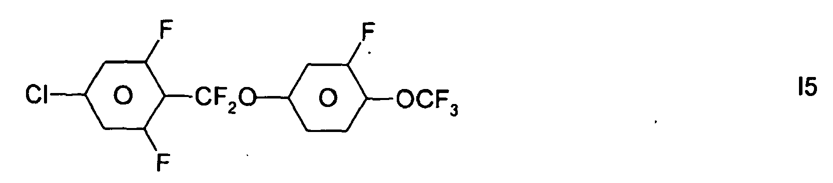

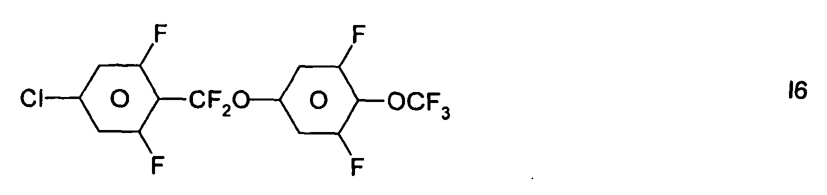

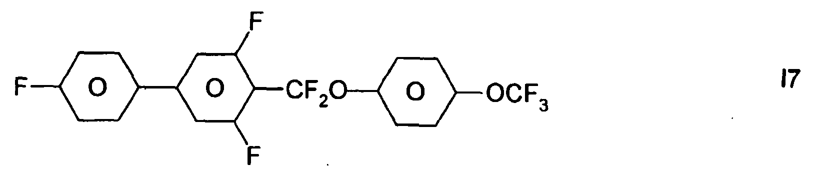

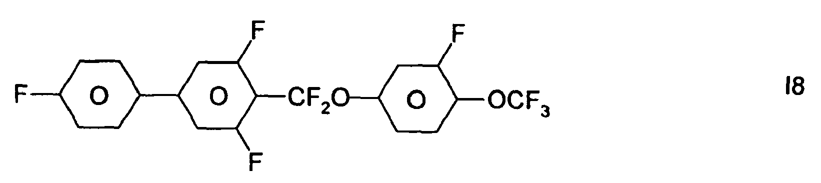

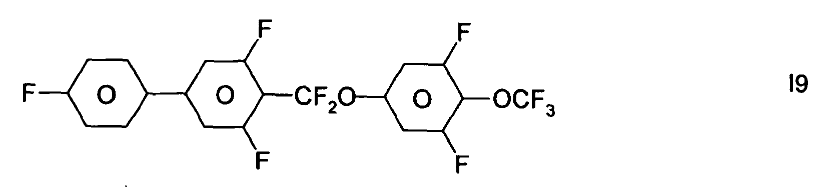

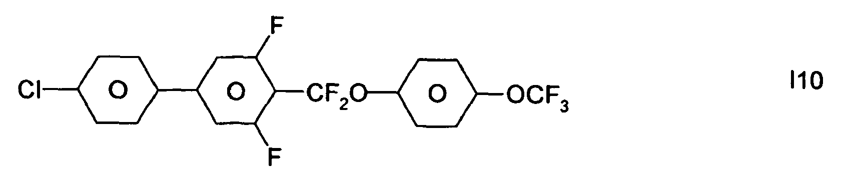

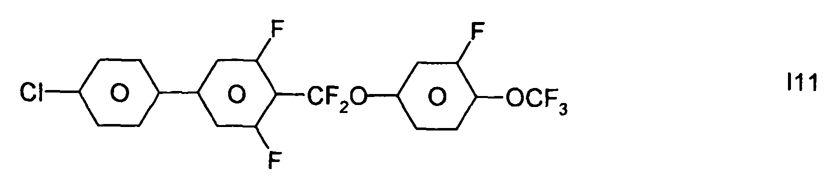

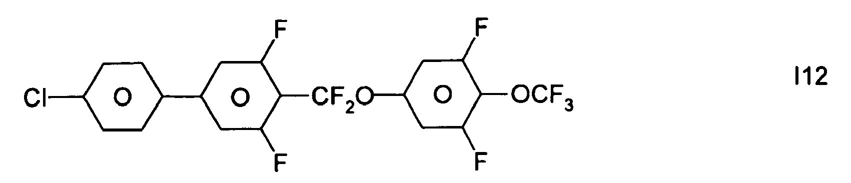

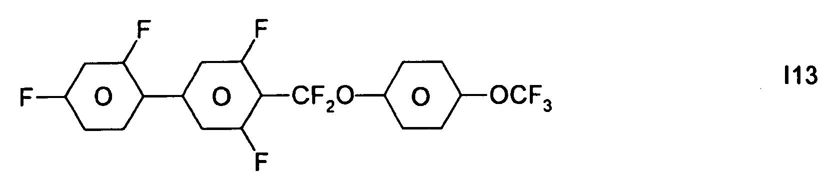

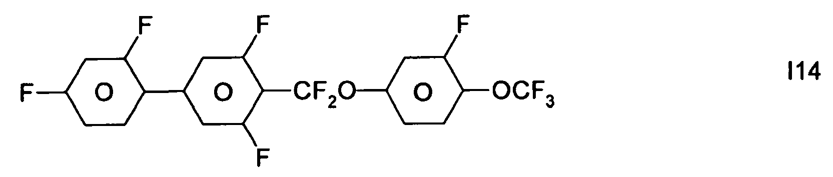

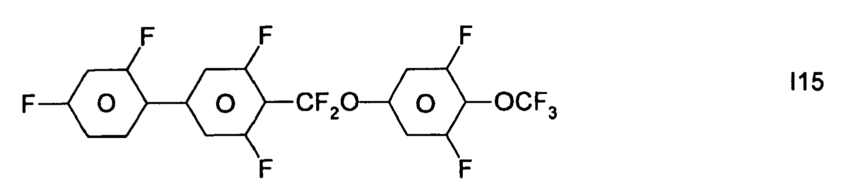

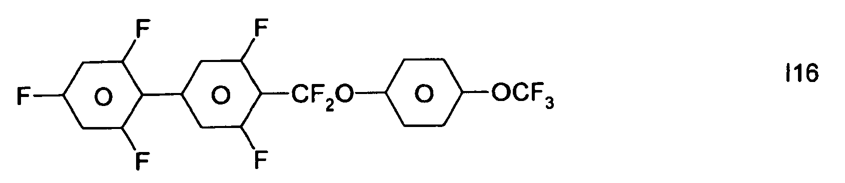

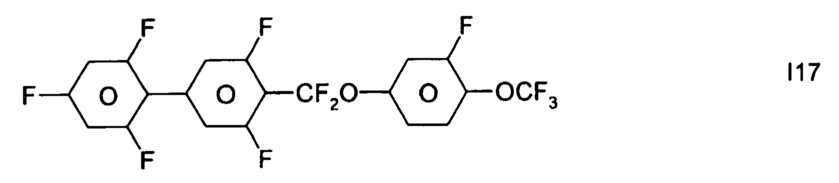

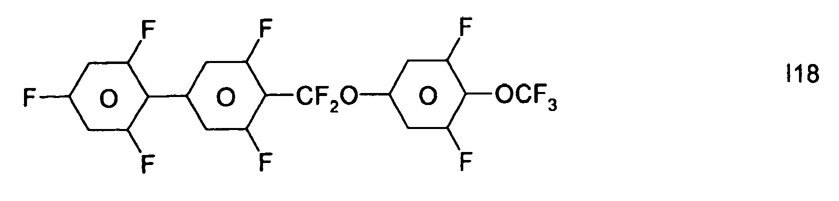

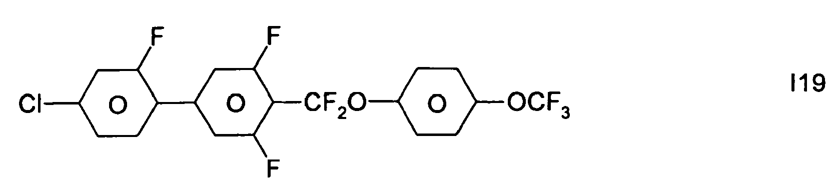

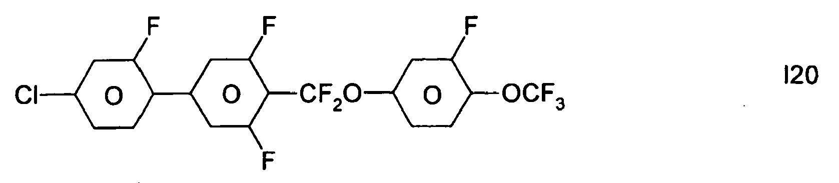

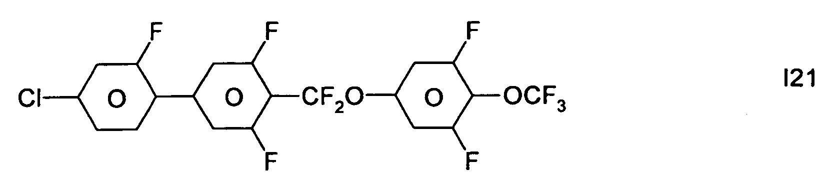

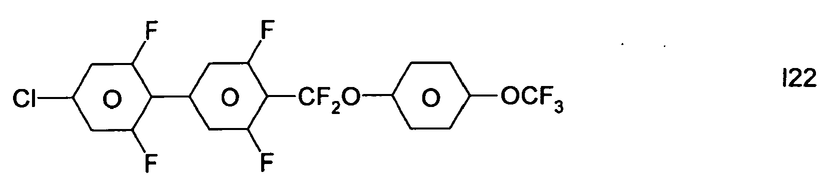

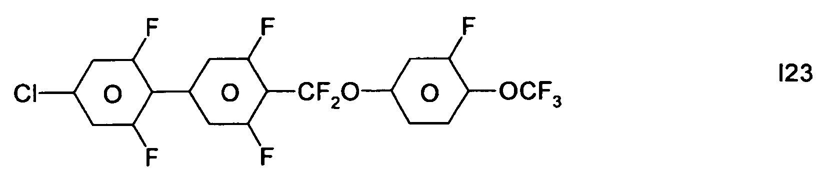

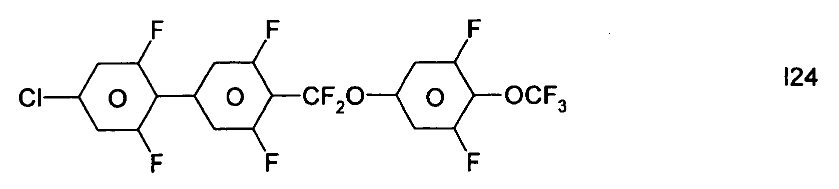

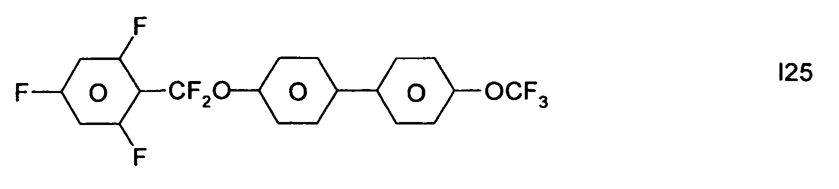

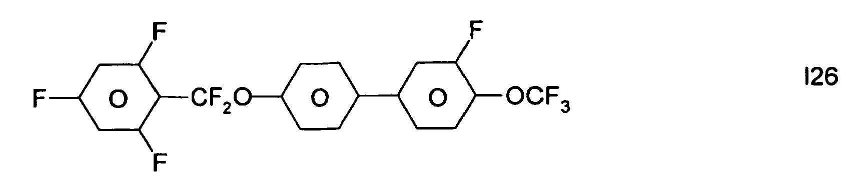

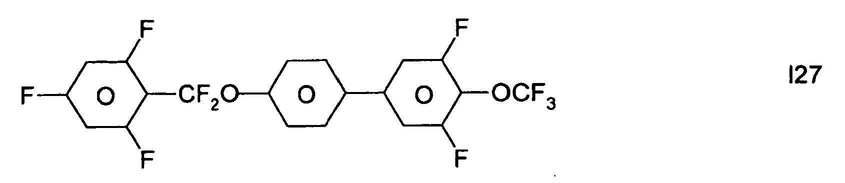

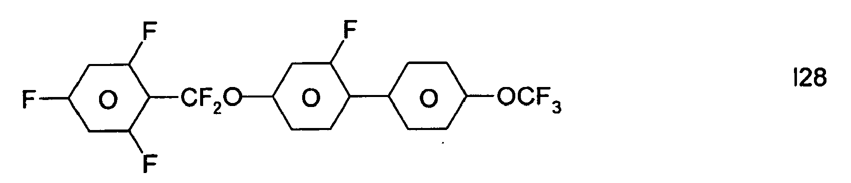

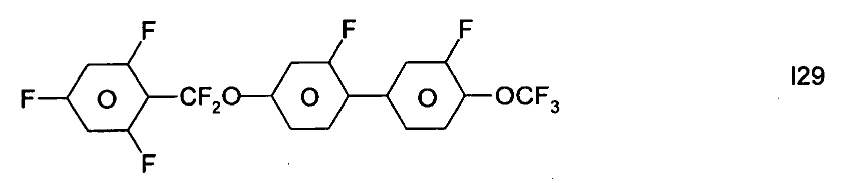

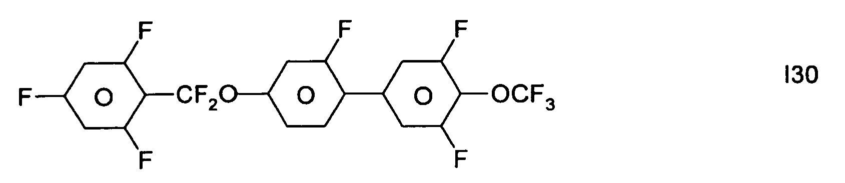

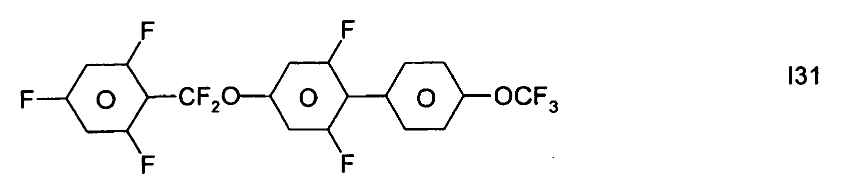

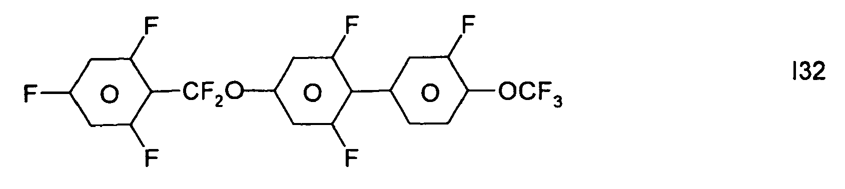

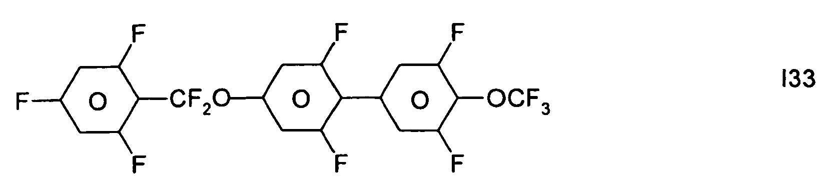

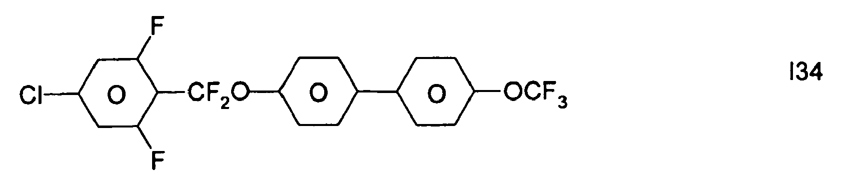

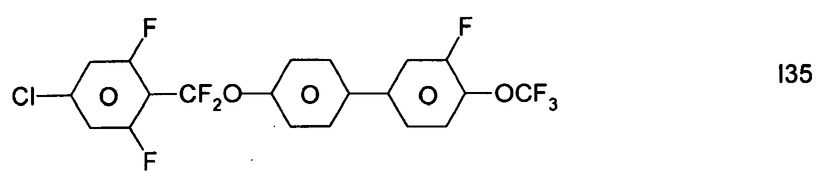

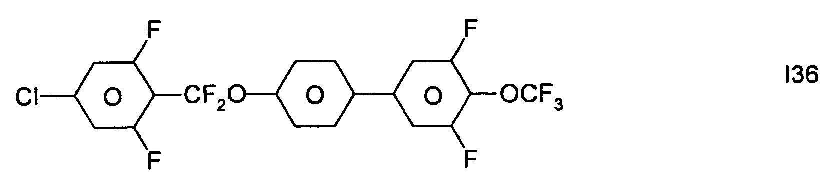

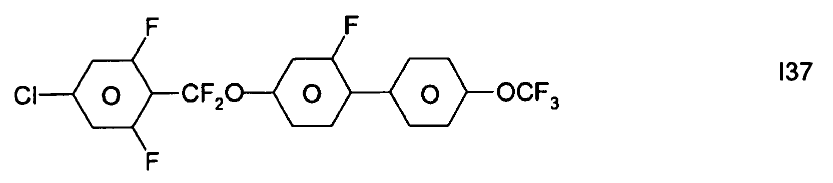

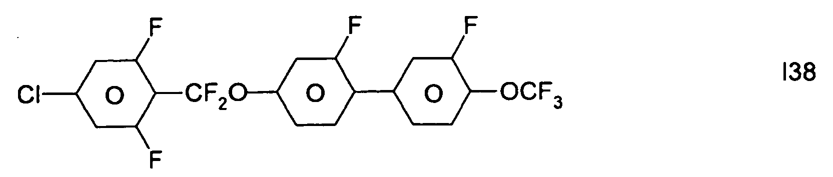

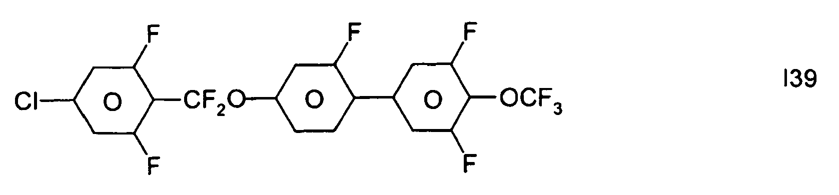

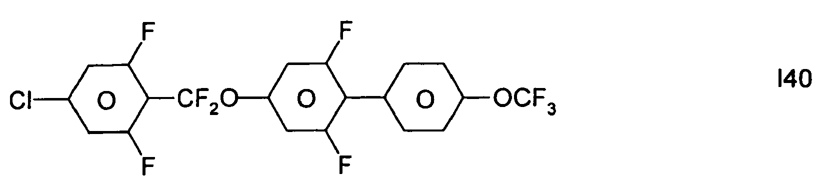

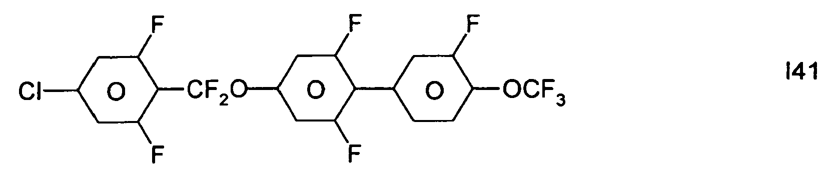

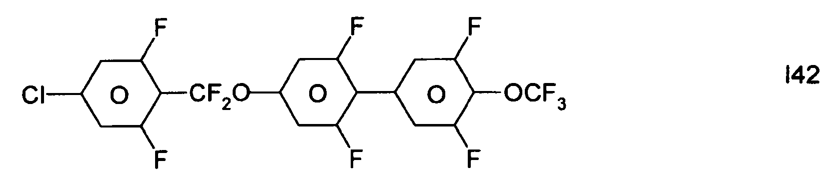

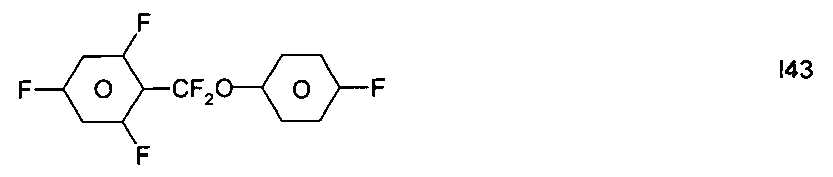

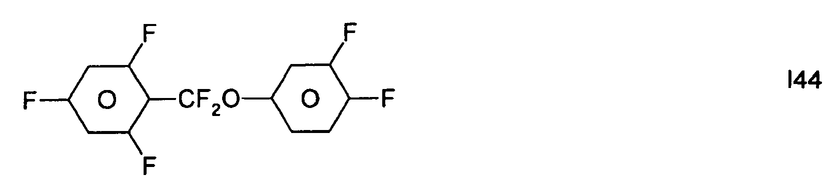

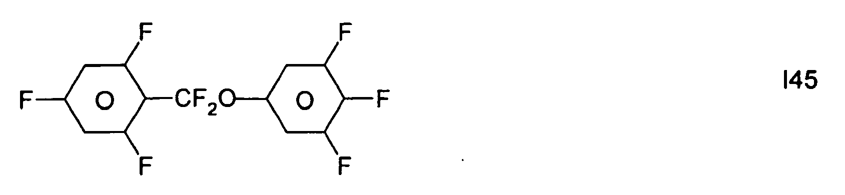

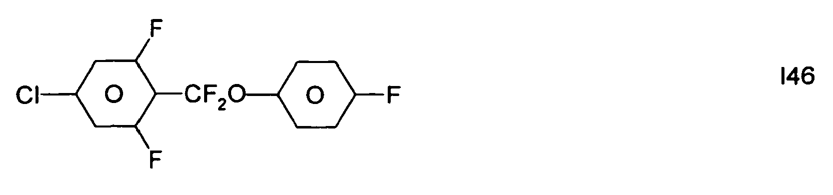

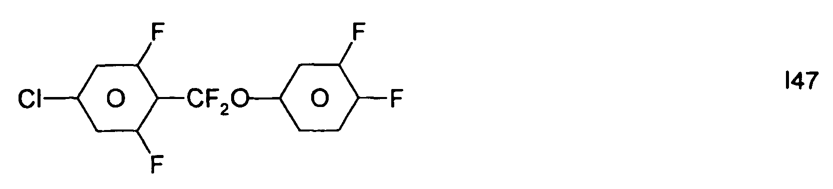

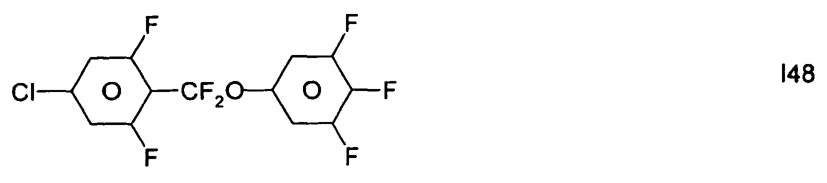

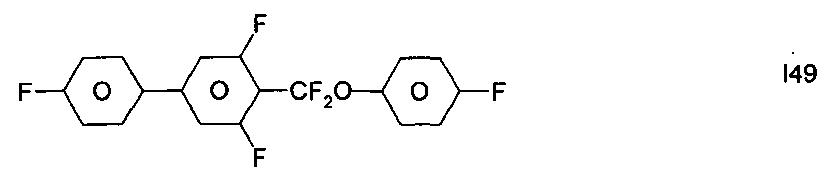

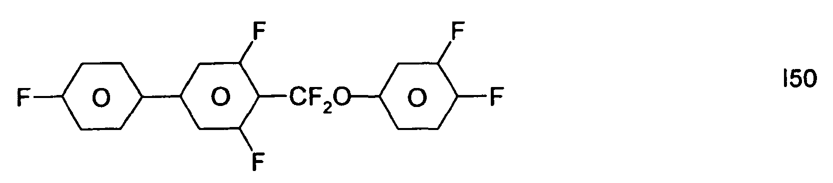

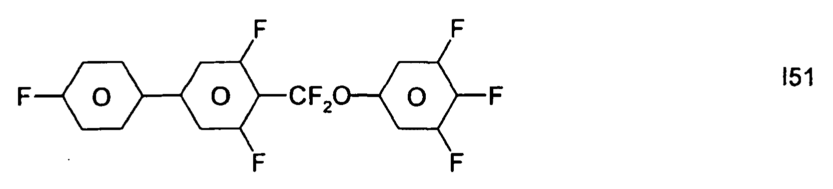

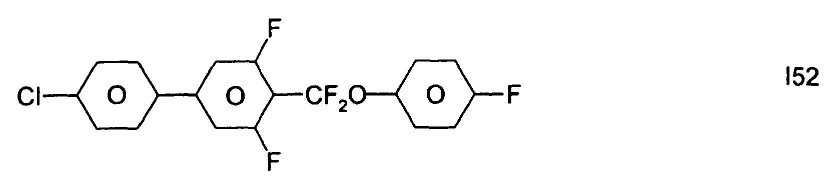

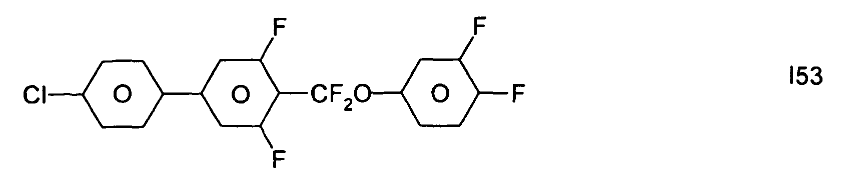

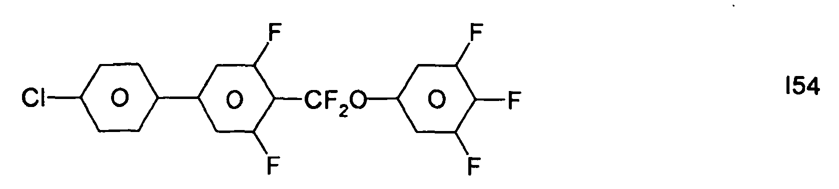

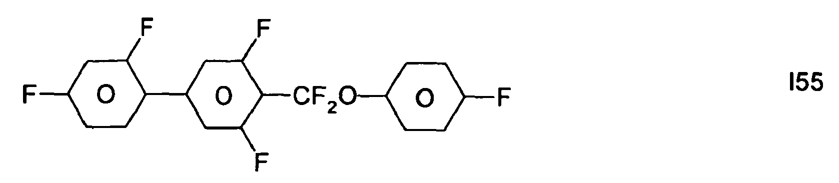

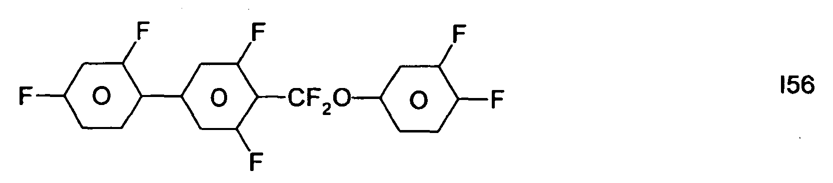

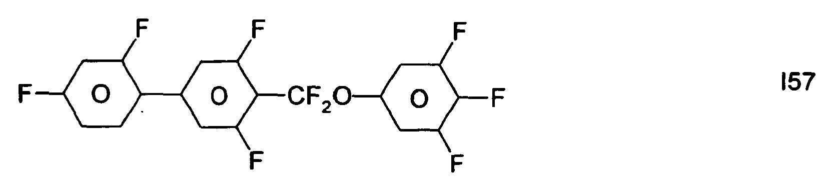

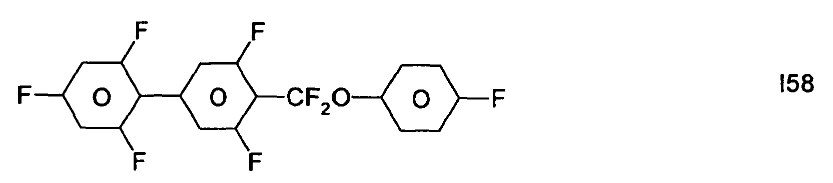

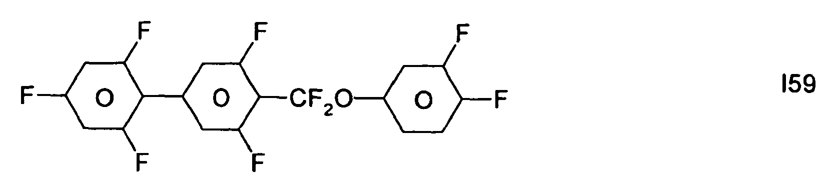

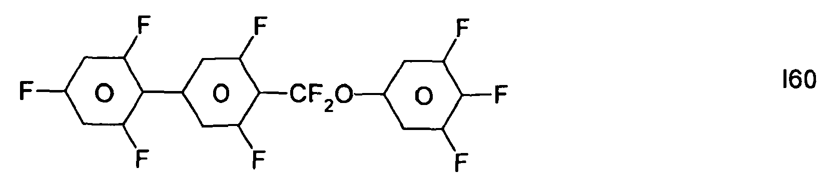

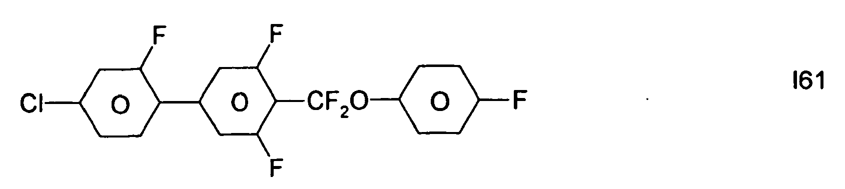

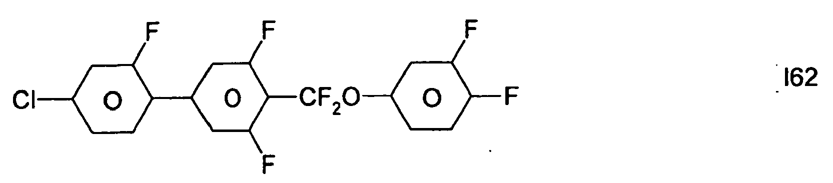

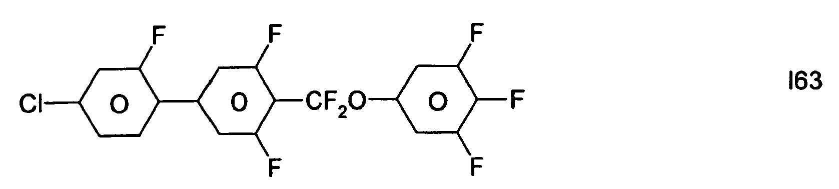

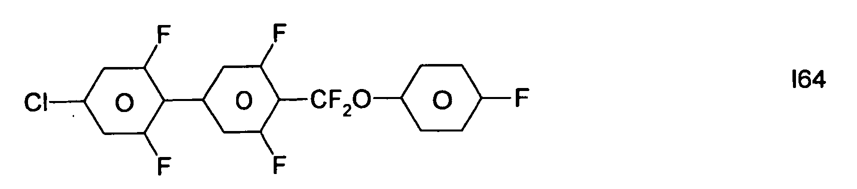

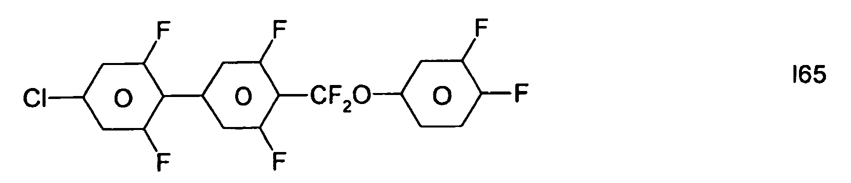

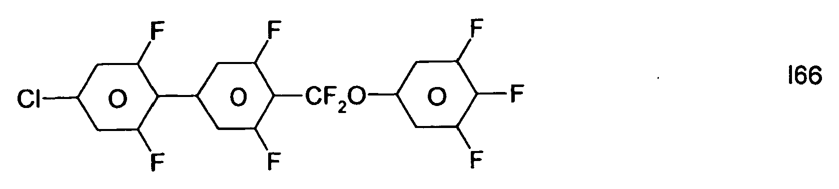

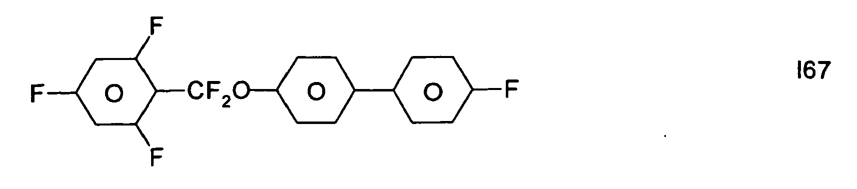

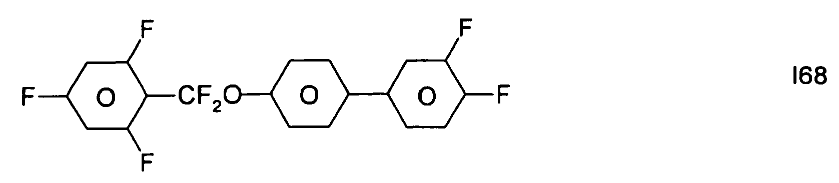

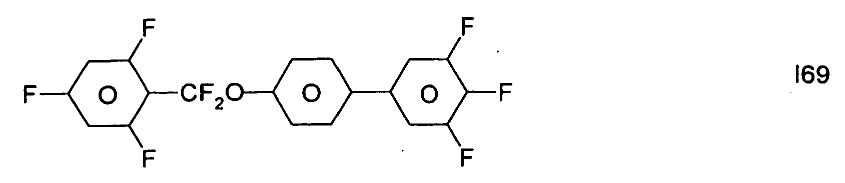

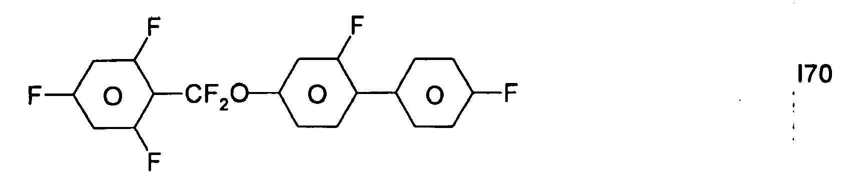

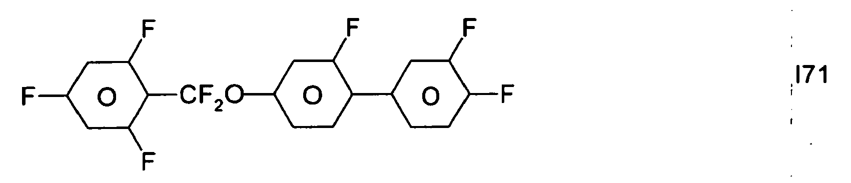

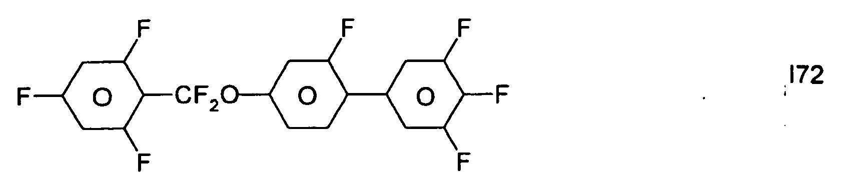

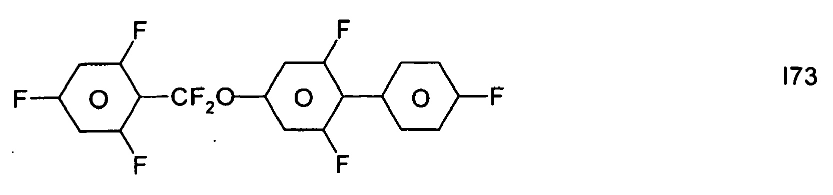

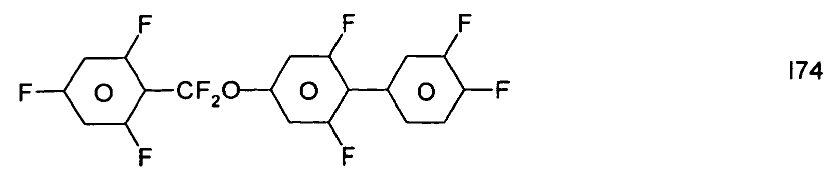

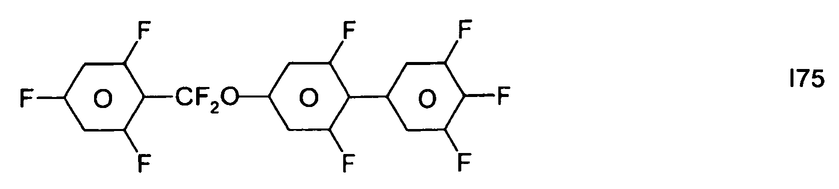

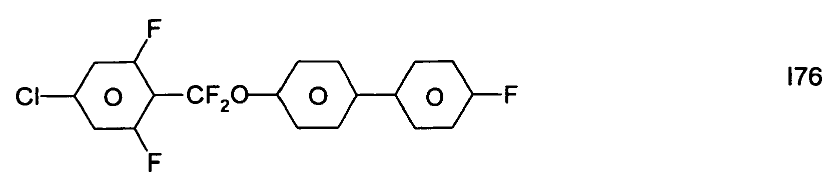

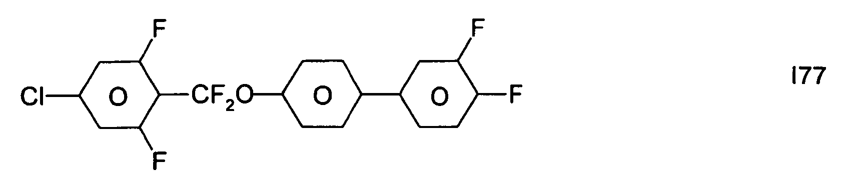

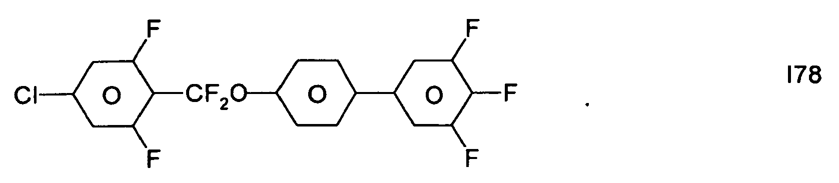

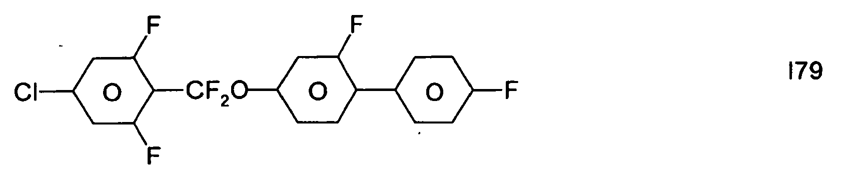

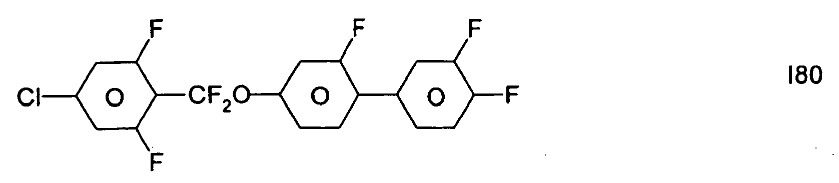

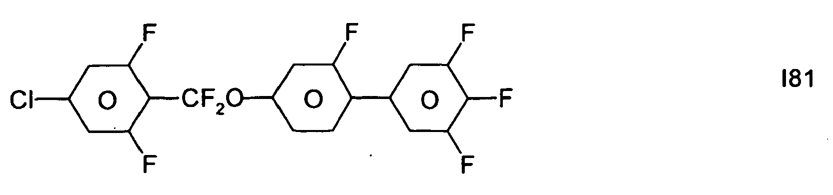

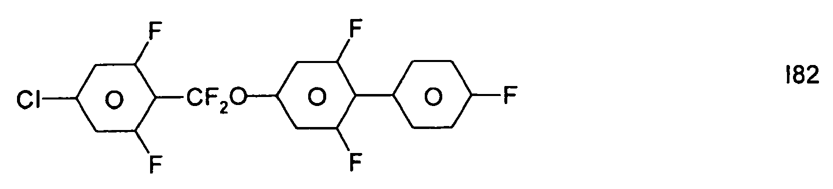

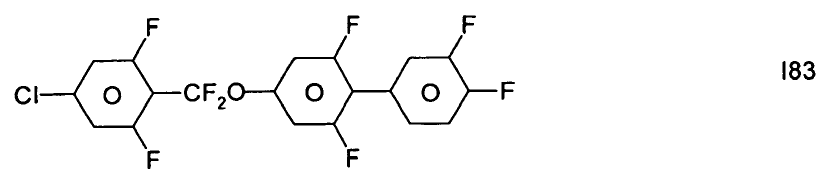

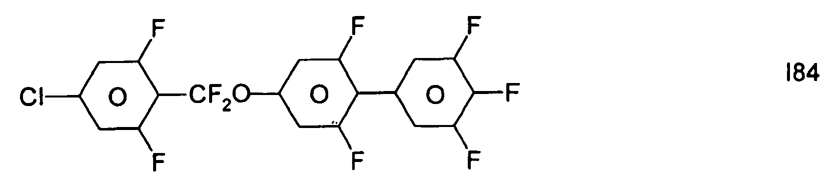

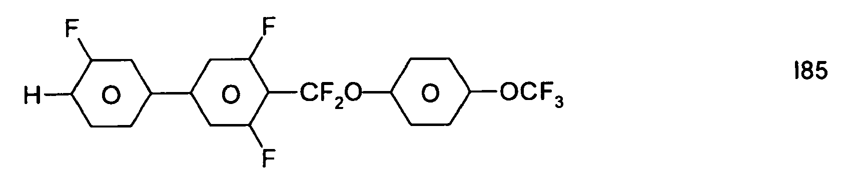

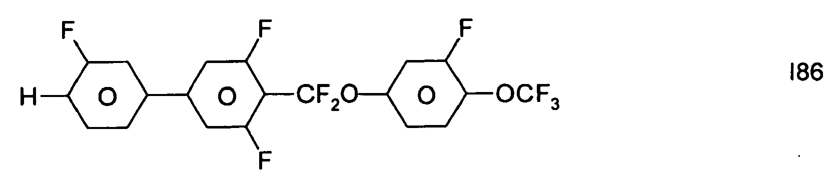

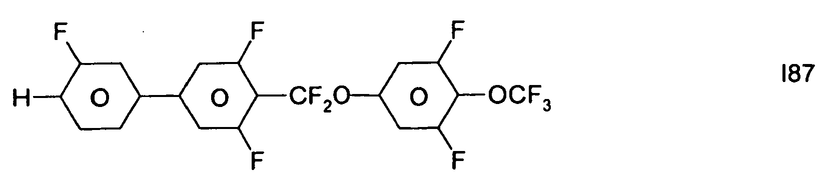

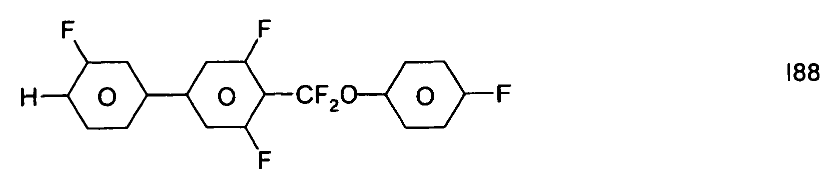

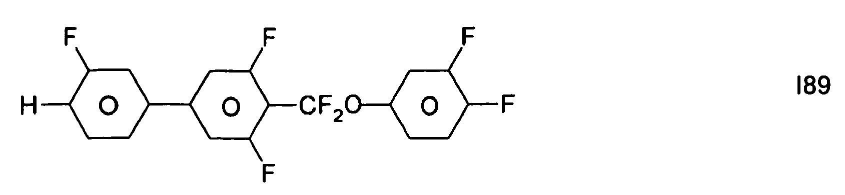

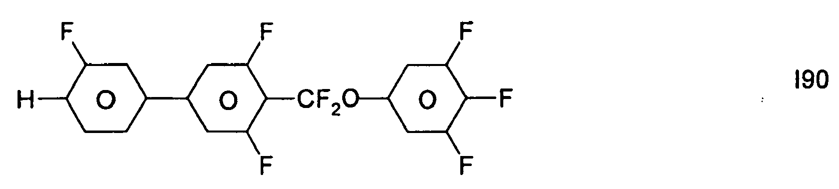

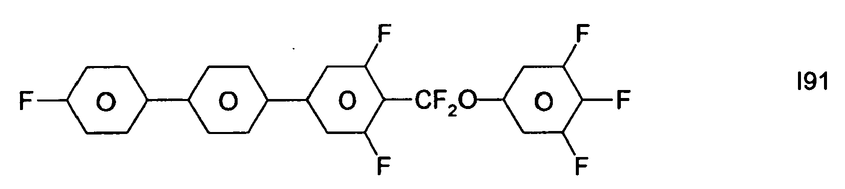

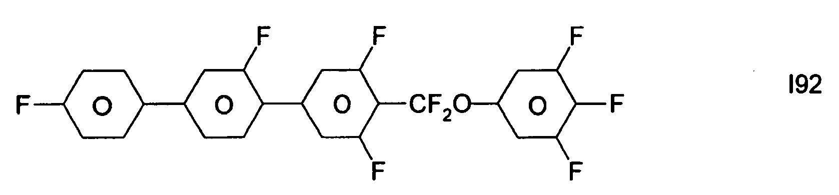

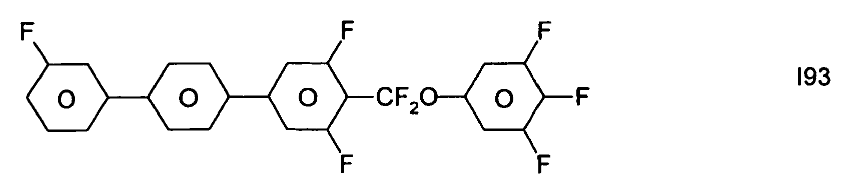

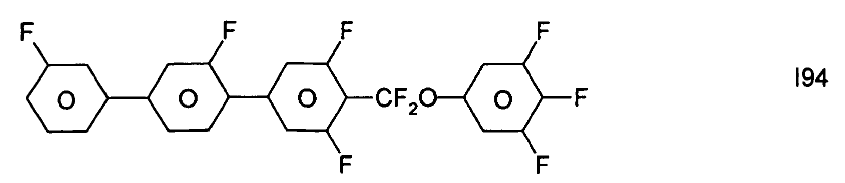

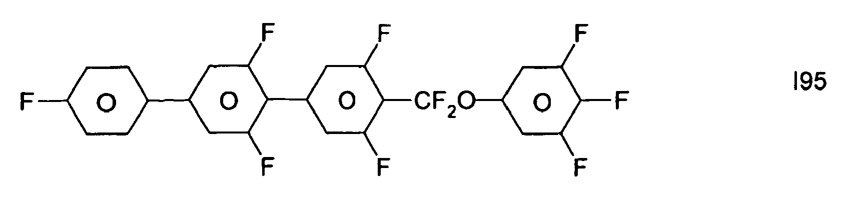

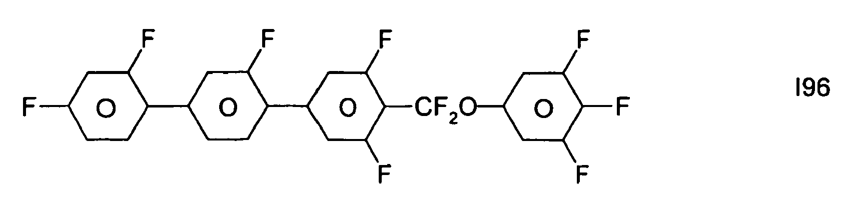

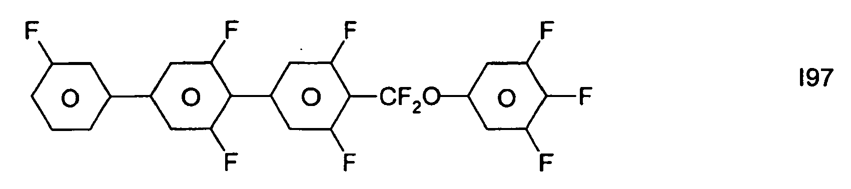

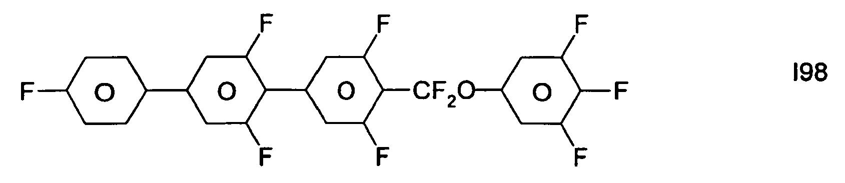

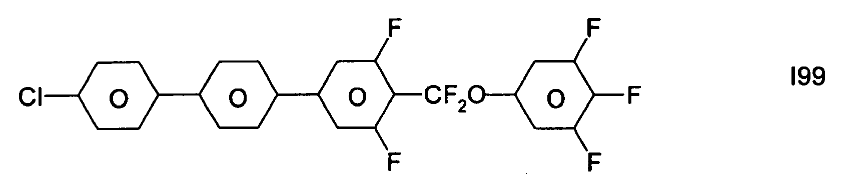

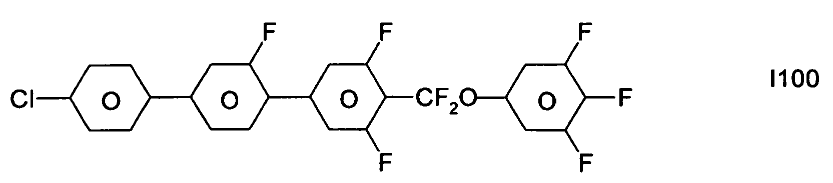

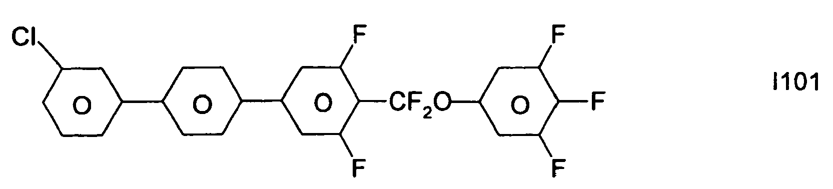

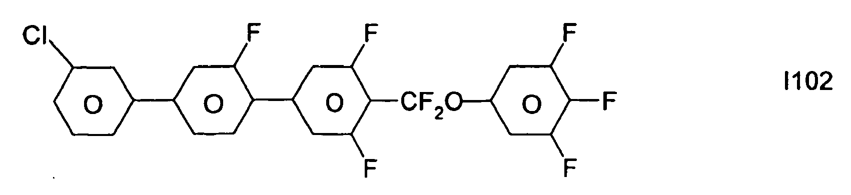

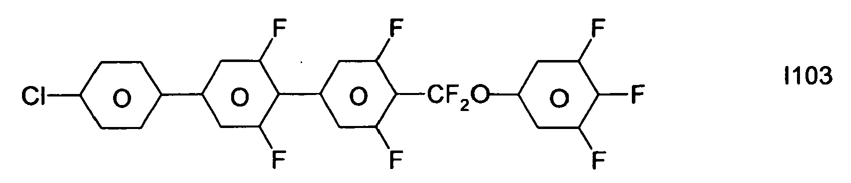

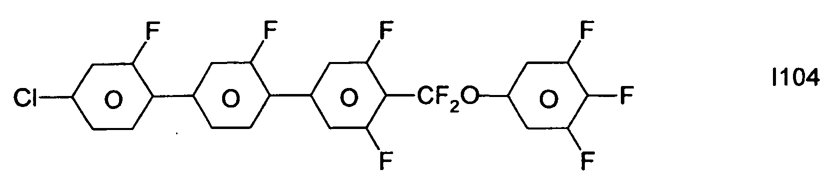

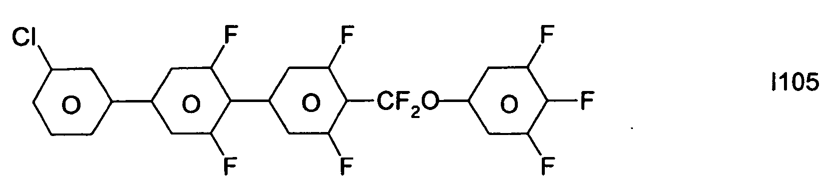

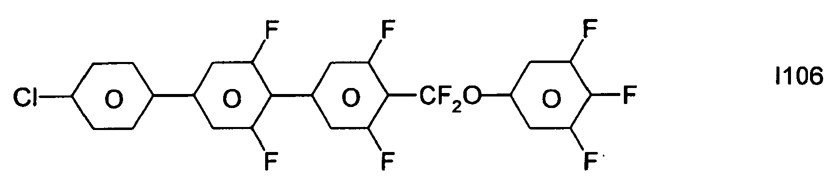

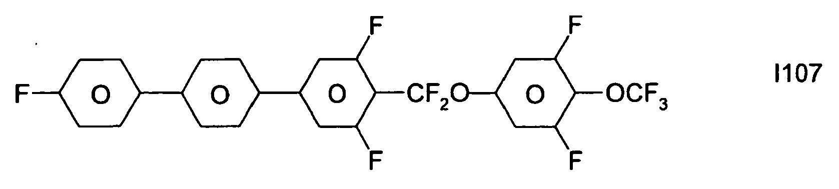

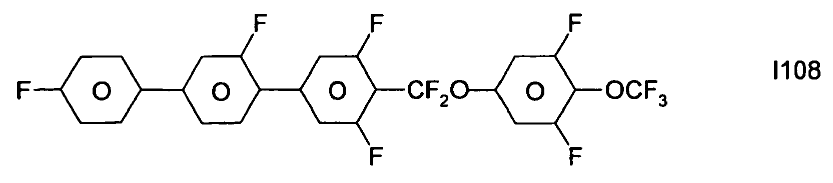

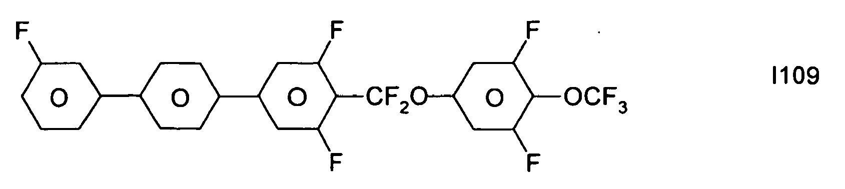

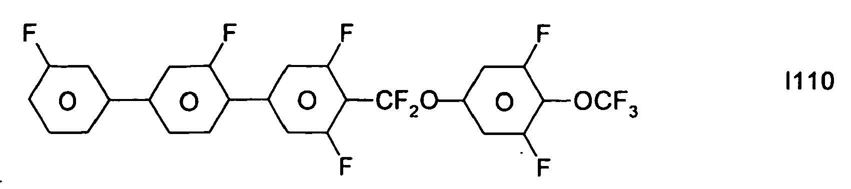

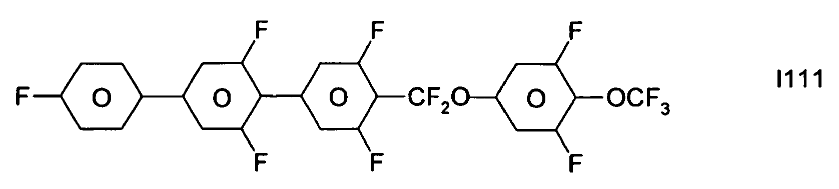

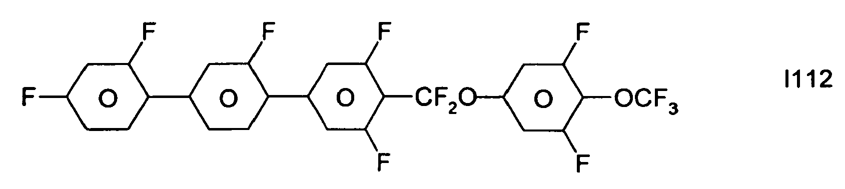

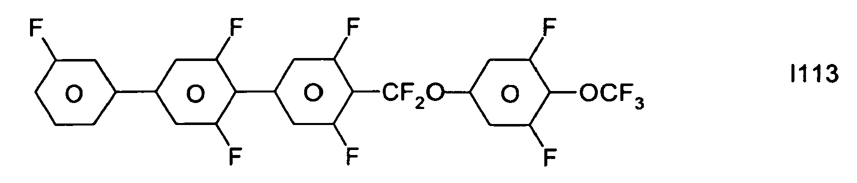

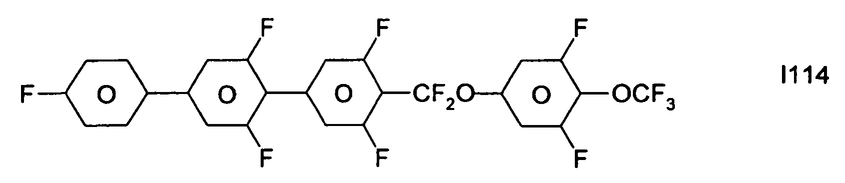

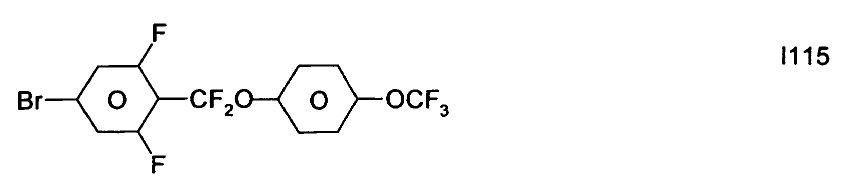

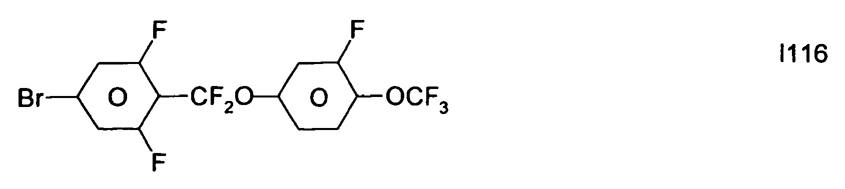

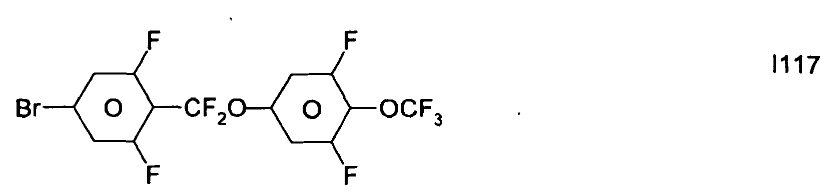

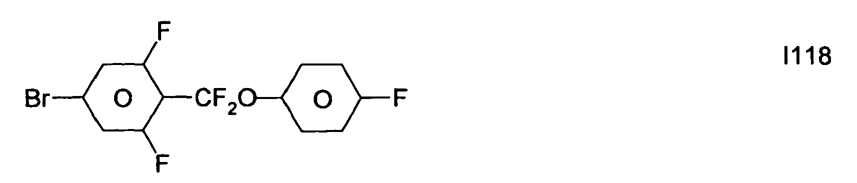

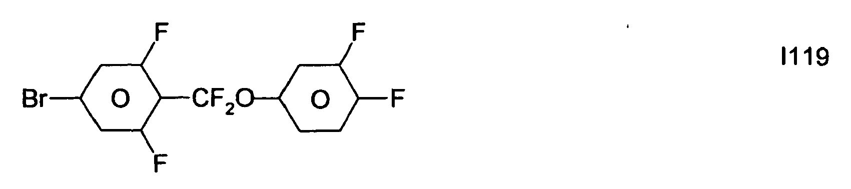

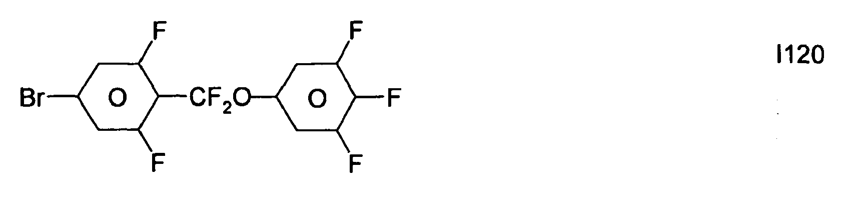

9. Flüssigkristallines Medium enthaltend mindestens zwei mesogene Verbindungen, **dadurch gekennzeichnet, dass** es mindestens eine Verbindung der Formel I nach mindestens einem der Ansprüche 1 bis 8 enthält.

10. Flüssigkristallines Medium nach Anspruch 9, **dadurch gekennzeichnet, dass** es eine oder mehrere Verbindungen ausgewählt aus der Gruppe bestehend aus den allgemeinen Formeln II bis IX, 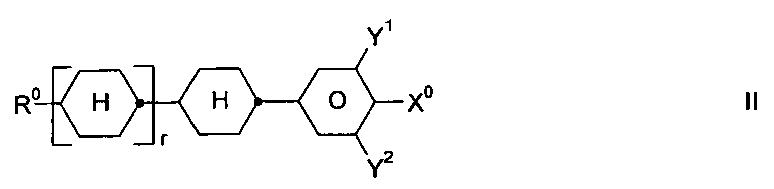 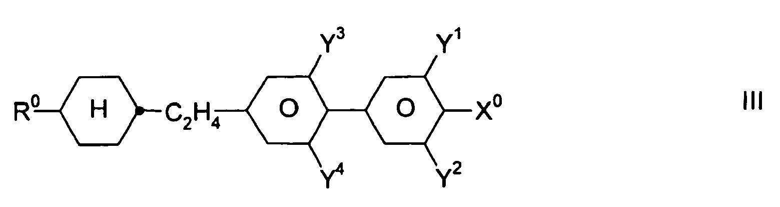 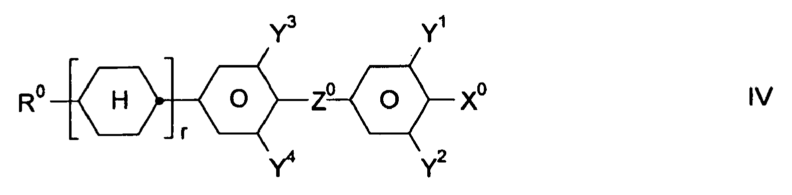 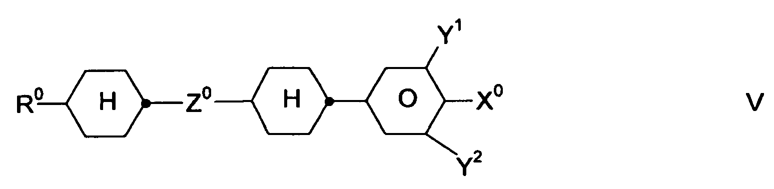 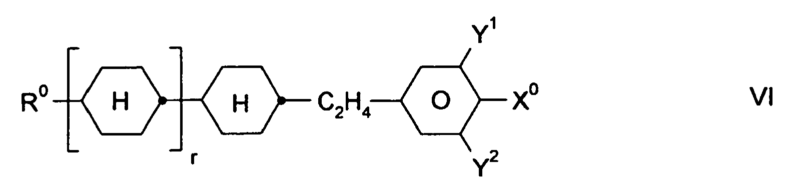 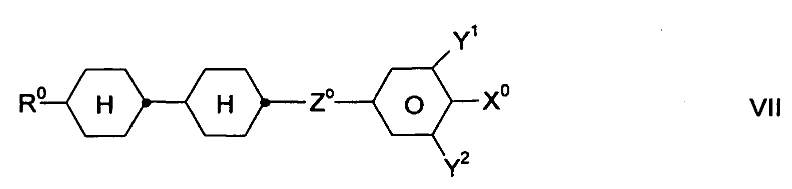 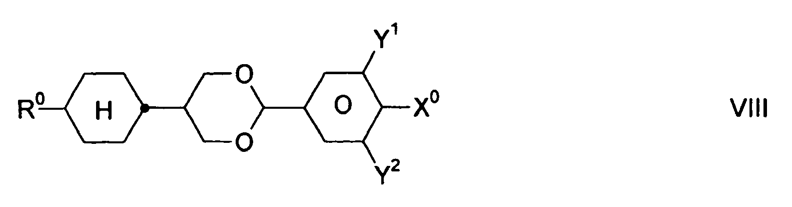 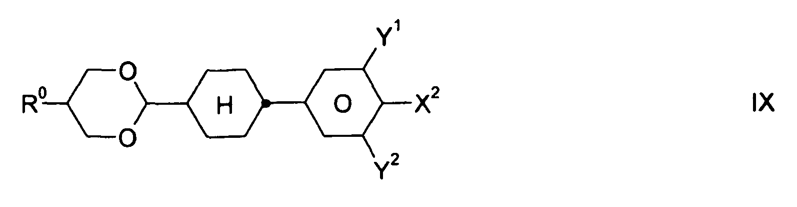 worin
R⁰ H, n-Alkyl, Oxaalkyl, Fluoralkyl, Alkenyloxy oder Alkenyl mit jeweils bis zu 9 C-Atomen
X⁰ F, Cl, halogeniertes Alkyl, halogeniertes Alkenyl, halogeniertes Alkenyloxy oder halogeniertes Alkoxy mit bis zu 7 C-Atomen,
Z⁰ -CH=CH-, -C₂H₄-, -(CH₂)₄-, -C₂F₄-, -CH₂O-, -OCH₂-, -CF=CF-, -CF₂O- -OCF₂- oder -COO-,
Y¹,Y², Y³ und Y⁴ jeweils unabhängig voneinander H oder F, und
r 0 oder 1.
bedeuten,
enthält.

11. Verwendung des flüssigkristallinen Mediums nach Anspruch 9 oder 10 für elektrooptische Zwecke.

12. Elektrooptische Flüssigkristallanzeige enthaltend ein flüssigkristallines Medium nach Anspruch 9 oder 10.

13. Verwendung der flüssigkristallinen Verbindungen nach einem der zur Herstellung Ansprüche 1 bis 8 als Synthesebaustein, Pflanzenschutzmittel, eines Pharmazeutika oder als Komponente in flüssigkristallinen Medien.

14. Verfahren zur Herstelllung flüssigkristalliner Verbindungen, **dadurch gekennzeichnet, dass** eine Verbindung der Formel I nach mindestens einem der Ansprüche 1 bis 8 als Synthesebaustein verwendet wird.

## Claims

1. Liquid-crystalline compounds of the formula I 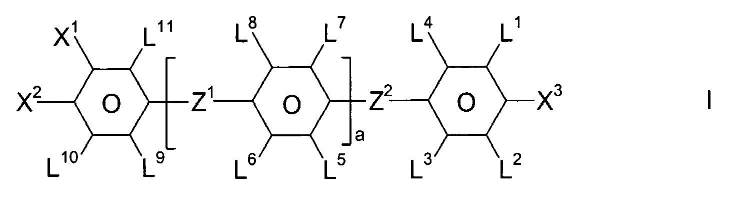 in which
x¹ and X² each, independently of one another, denote F, Cl, Br, I, one of the radicals X¹ or X² also denotes H,
X³ denotes F, Cl, CN, NCS, SF₅ or OCF₃,
Z¹ and Z² each, independently of one another, denote -CO-O-, -O-CO-, -CF₂O-, -OCF₂-, -CH₂O-, -OCH₂-, -CH₂CH₂-, -(CH₂)₄-, -C₂F₄-, -CH₂CF₂-, -CF₂CH₂-, -CF=CF-, -CH=CH-, -C≡C- or a single bond, with the proviso that at least one of the bridges Z¹ and Z² denotes -CF₂O- or -OCF₂-,
a denotes 0, 1 or 2, and
L¹ to L¹¹ each, independently of one another, denote H or F.

2. Liquid-crystalline compounds according to Claim 1, **characterised in that** X¹ = F or Cl and X² = H and X³ = F or OCF₃.

3. Liquid-crystalline compounds according to Claim 1 or 2, **characterised in that** X³ = F.

4. Liquid-crystalline compounds according to one of Claims 1 to 3, **characterised in that** X² = Br.

5. Liquid-crystalline compounds according to Claim 1 or 4, **characterised in that** a=1.

6. Liquid-crystalline compounds according to one of Claims 1 to 5, **characterised in that** L¹ denotes fluorine and L² denotes fluorine or hydrogen.

7. Liquid-crystalline compounds according to Claim 6, **characterised in that** L² and L³ denote fluorine.

8. Liquid-crystalline compounds of the formulae I1 to I120

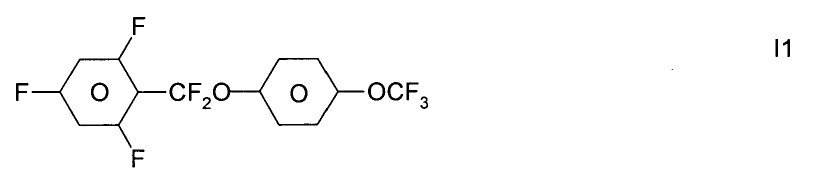

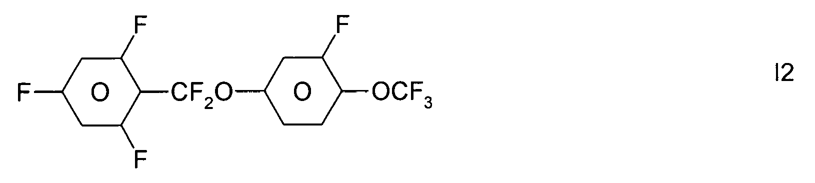

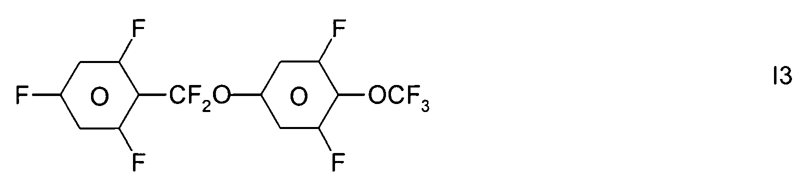

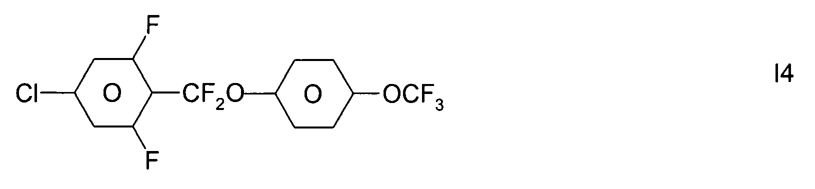

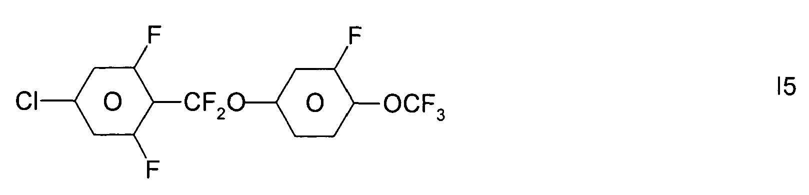

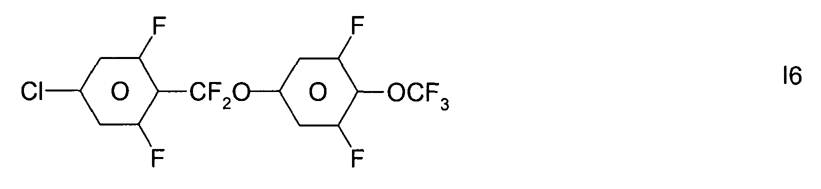

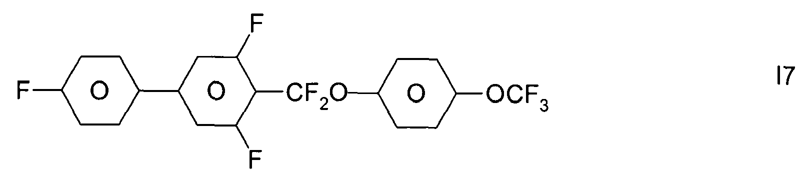

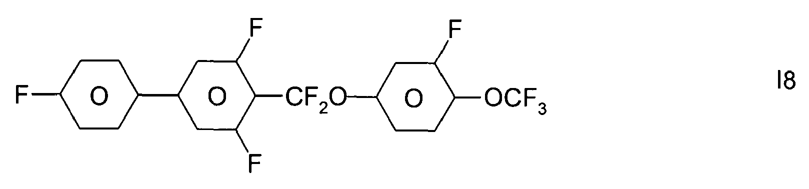

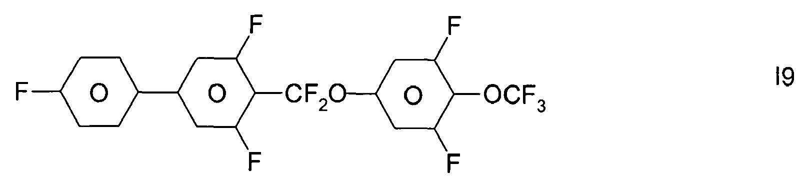

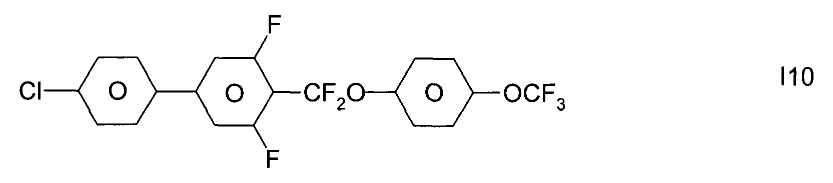

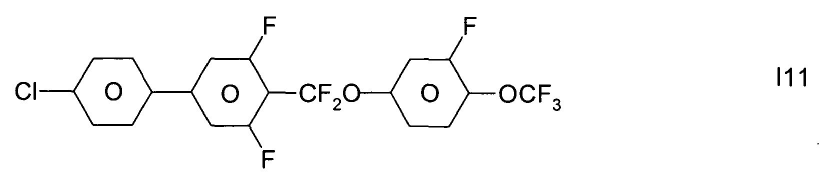

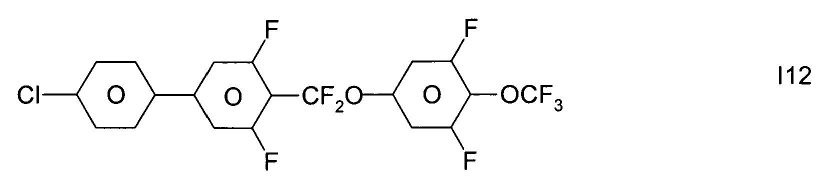

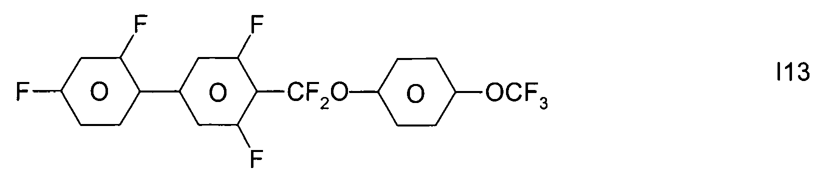

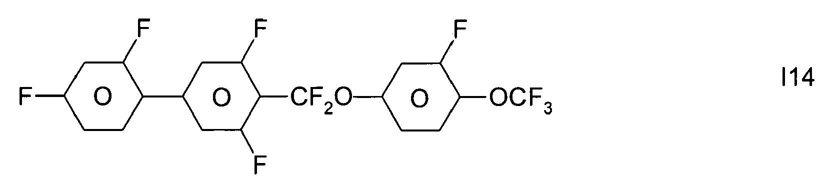

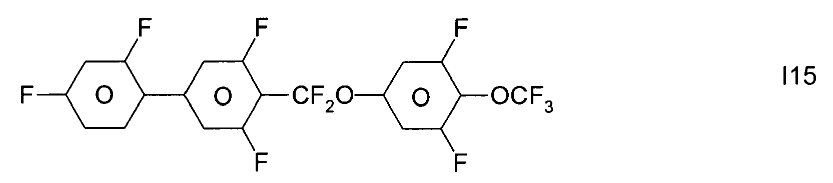

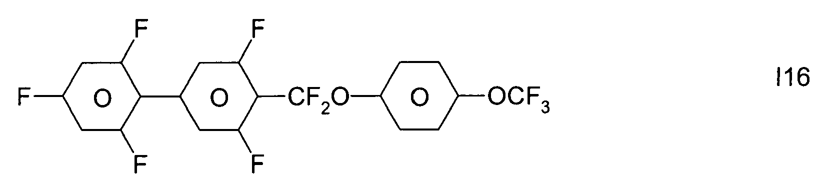

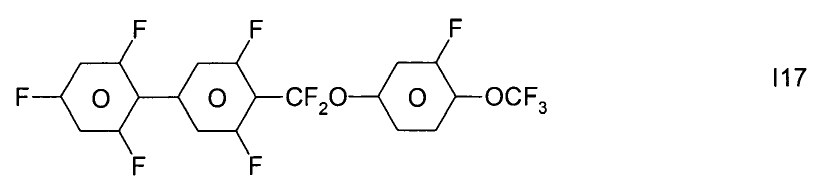

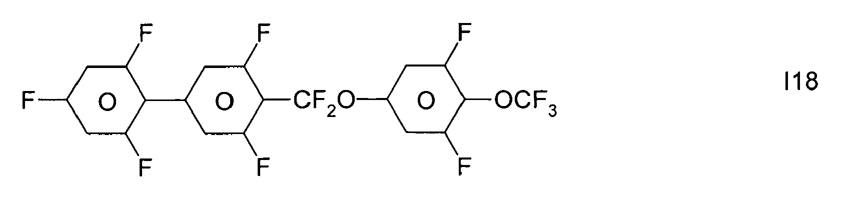

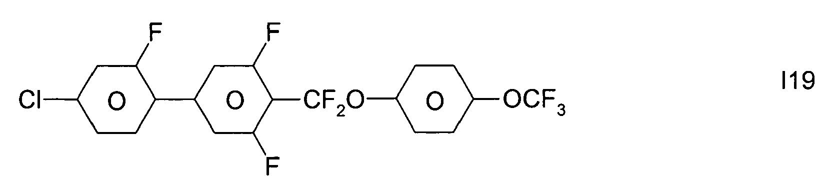

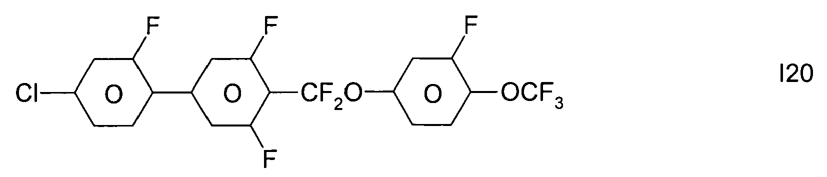

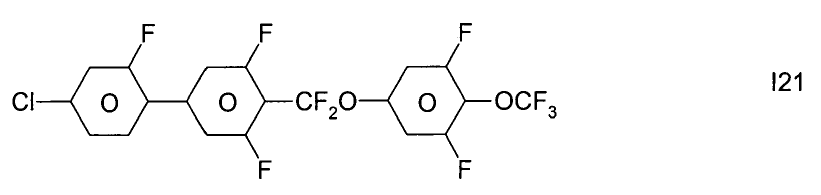

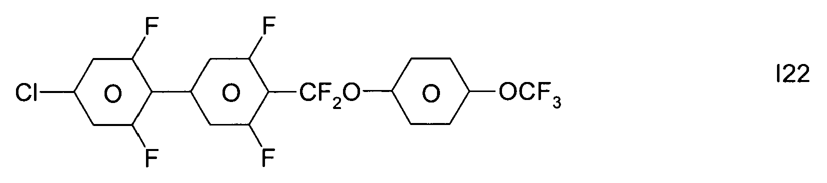

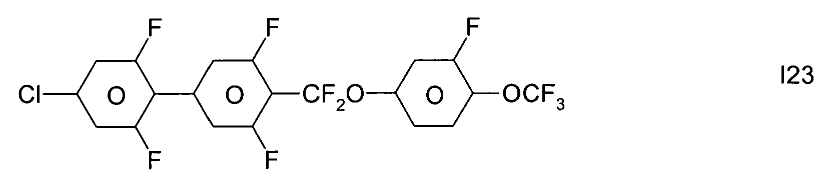

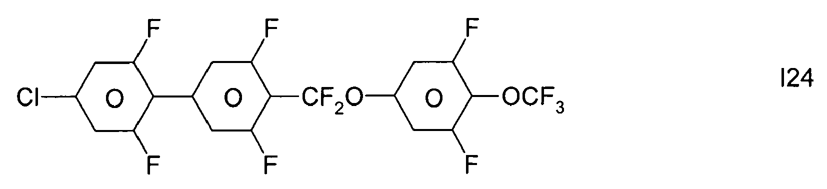

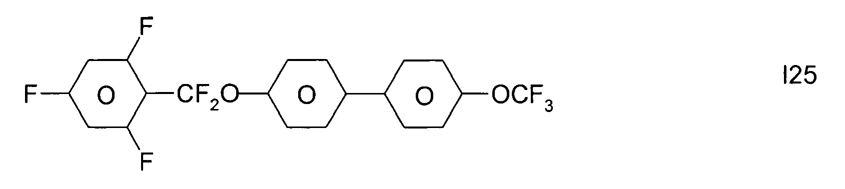

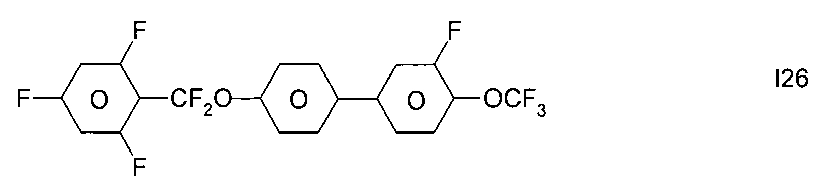

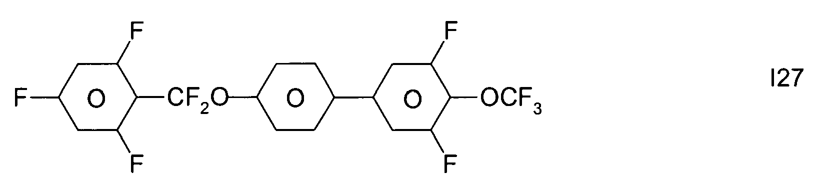

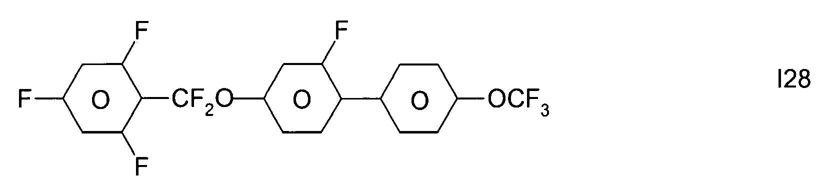

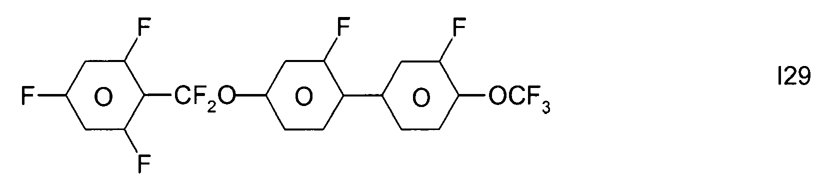

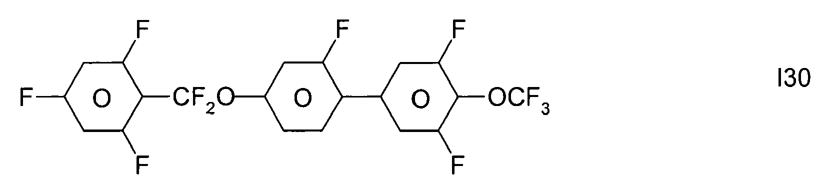

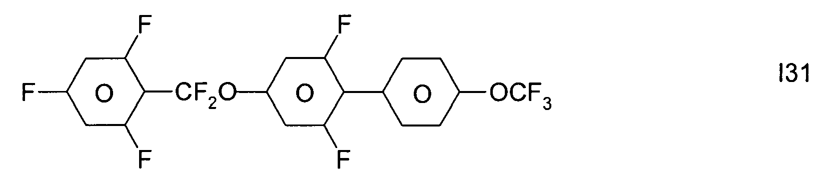

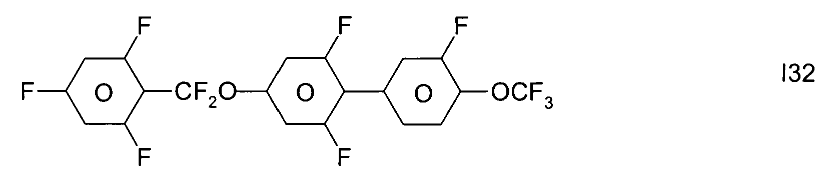

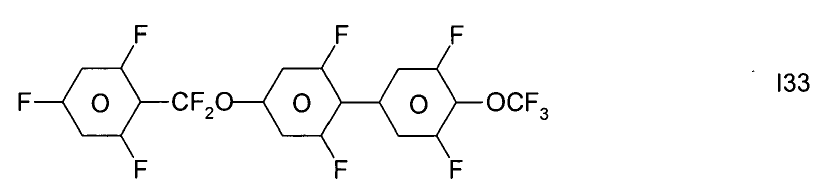

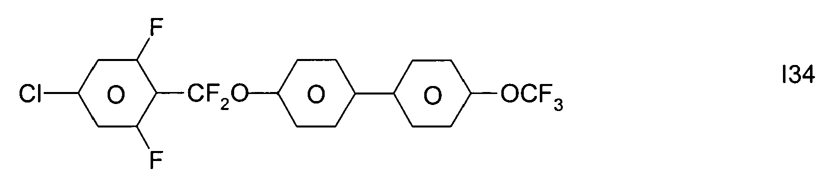

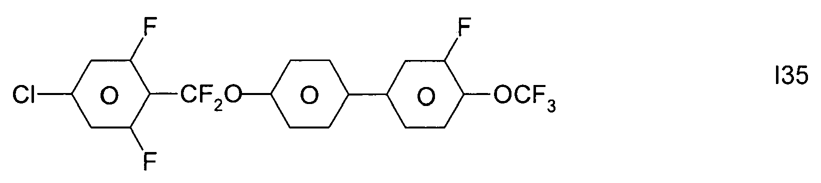

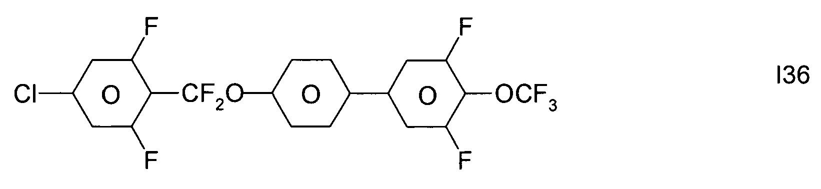

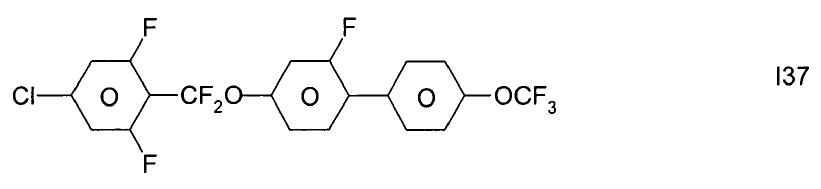

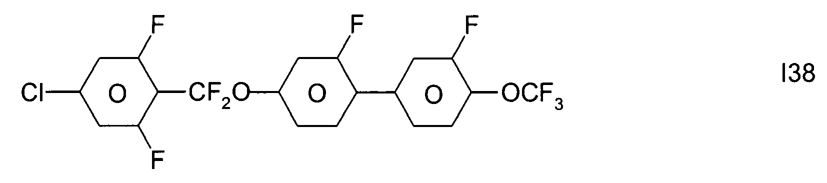

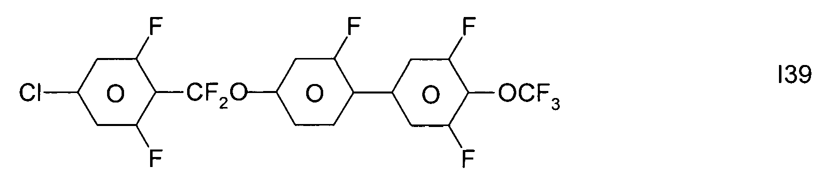

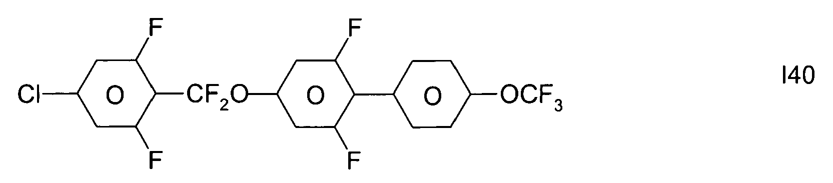

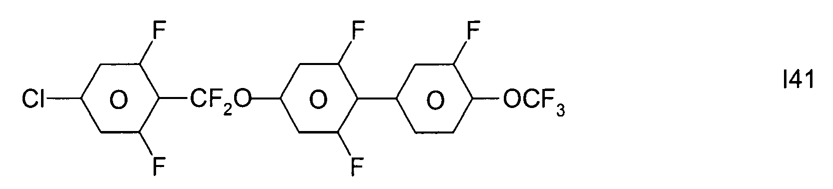

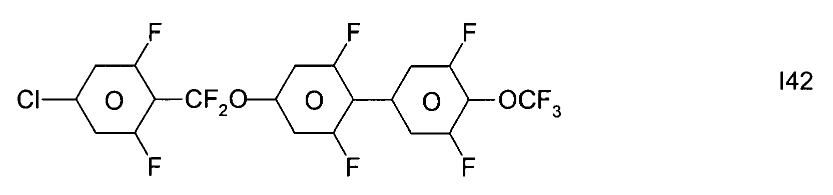

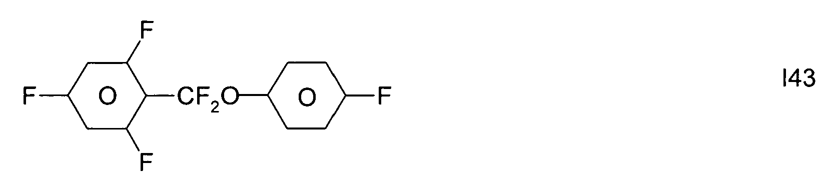

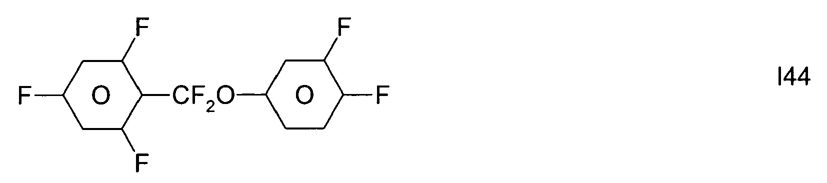

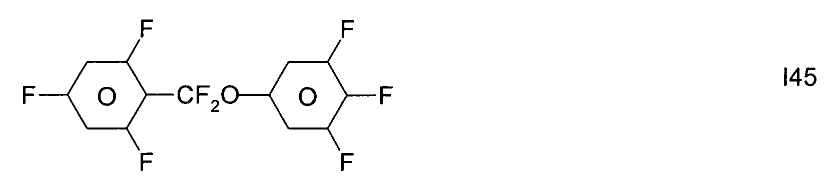

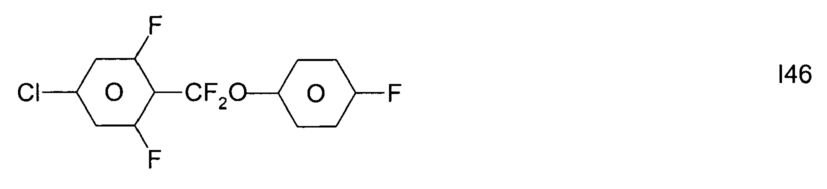

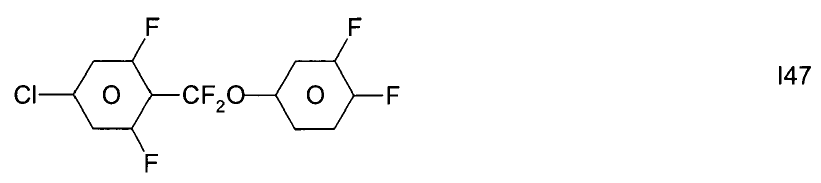

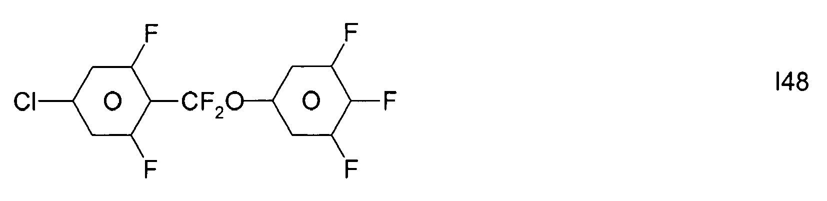

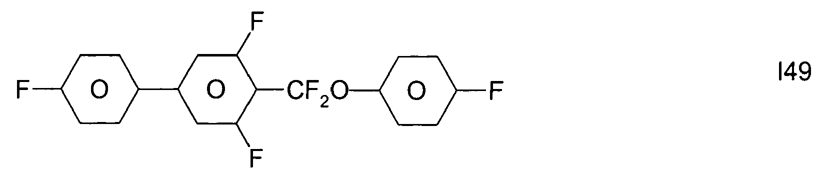

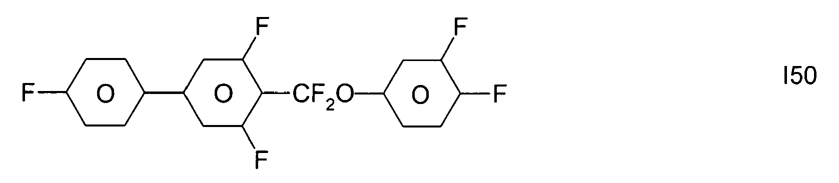

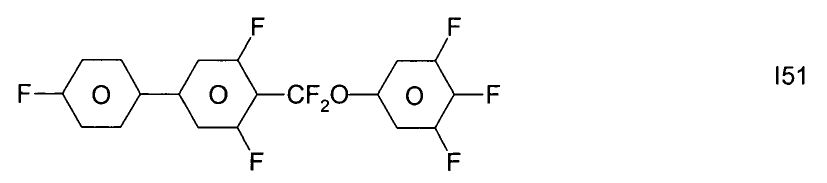

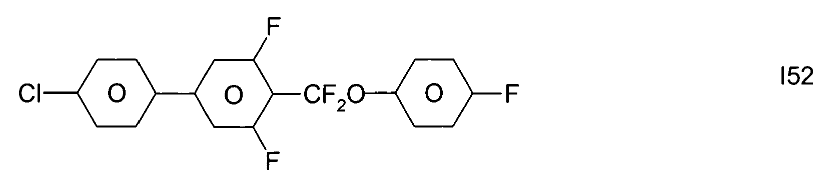

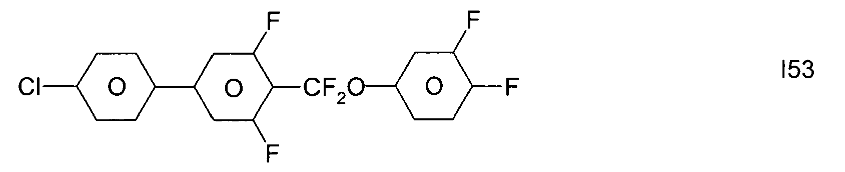

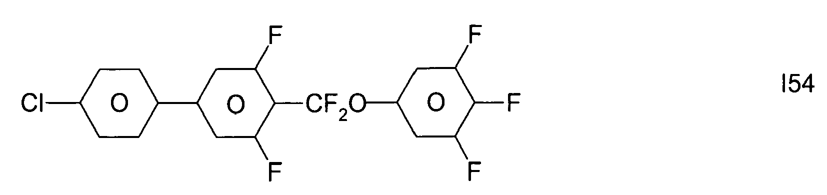

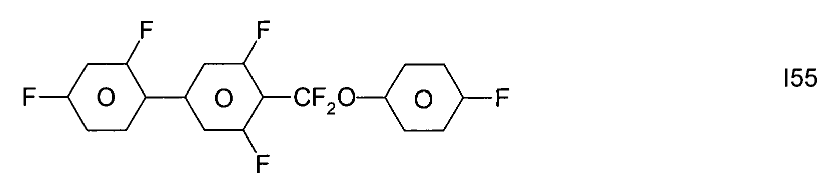

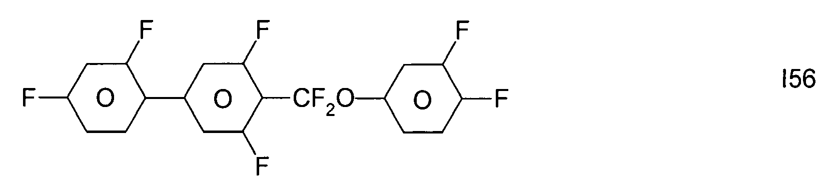

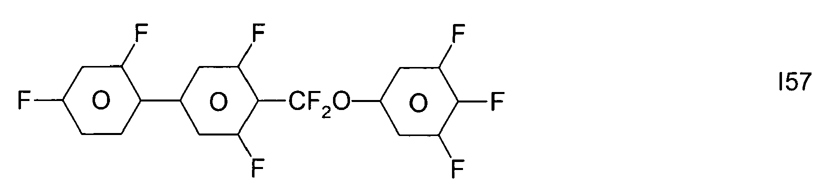

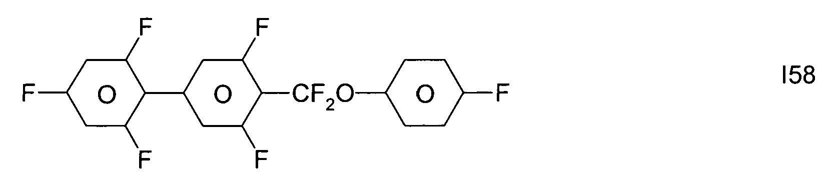

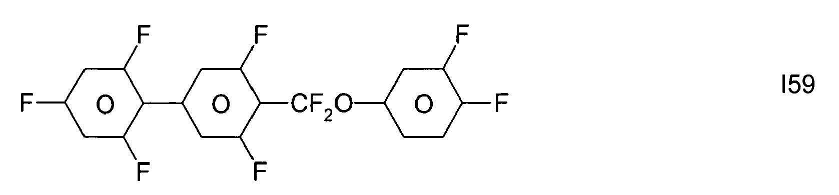

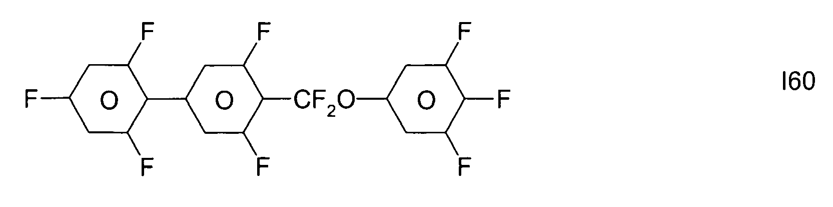

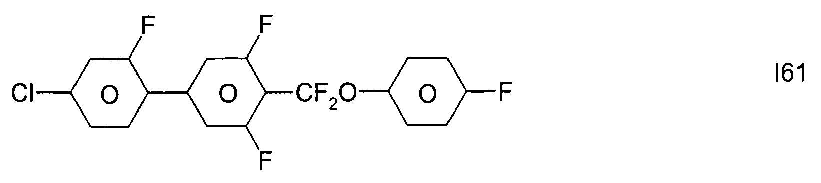

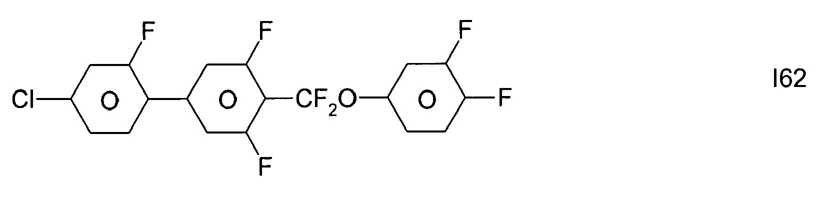

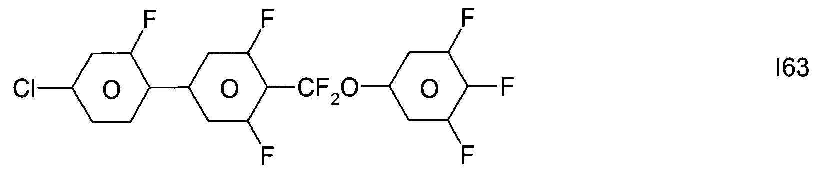

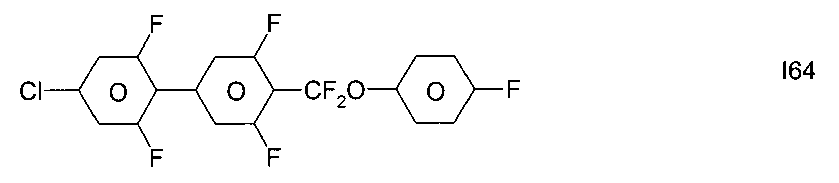

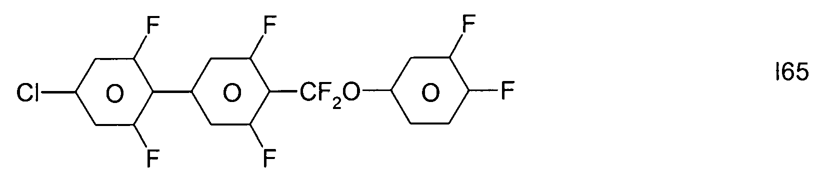

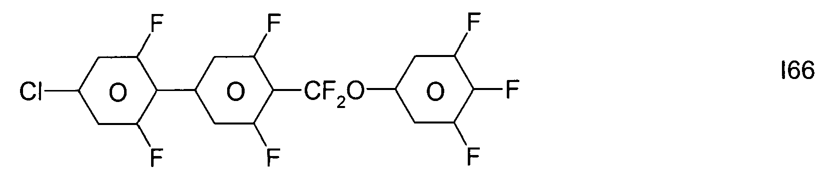

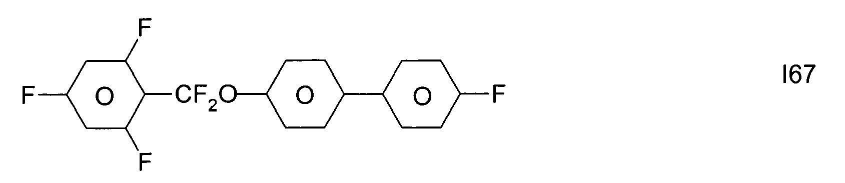

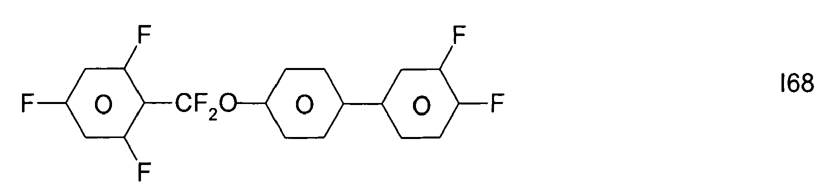

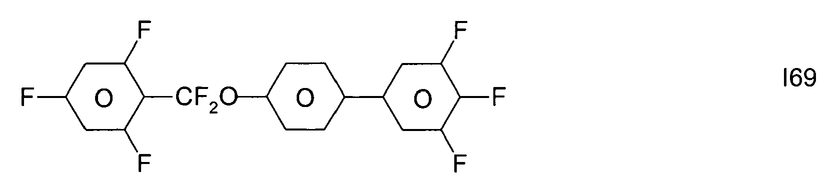

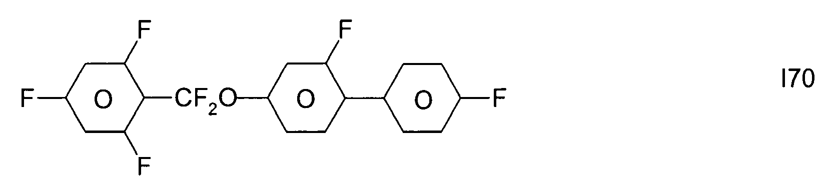

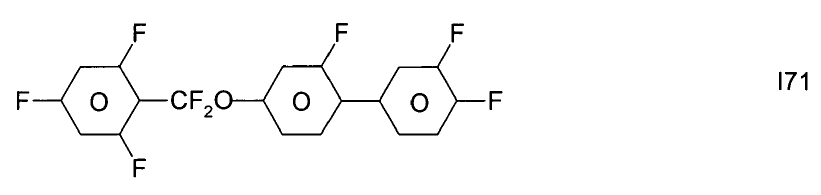

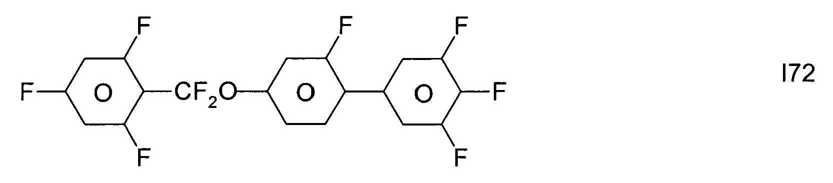

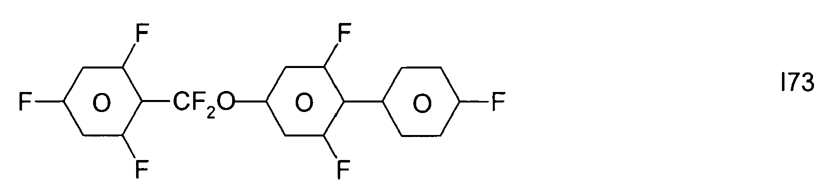

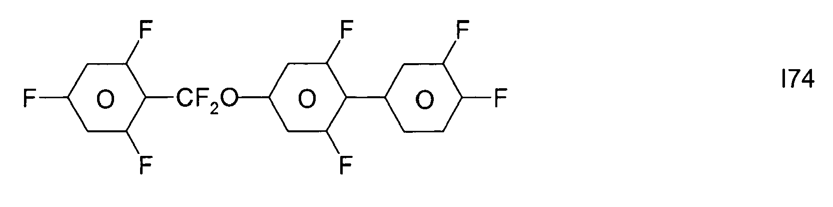

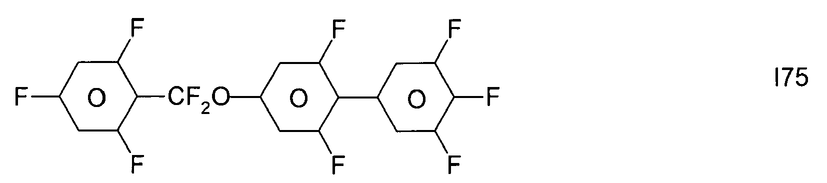

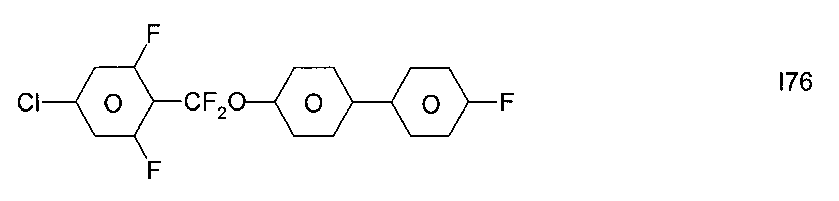

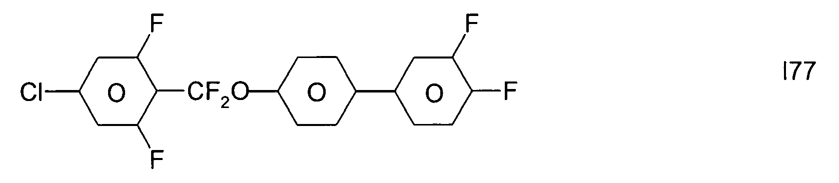

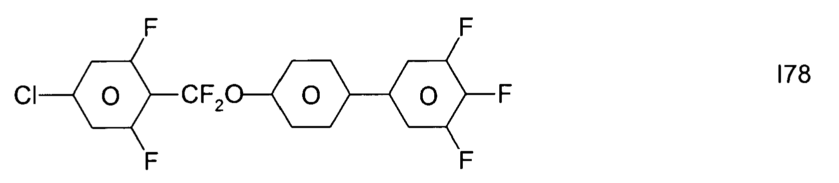

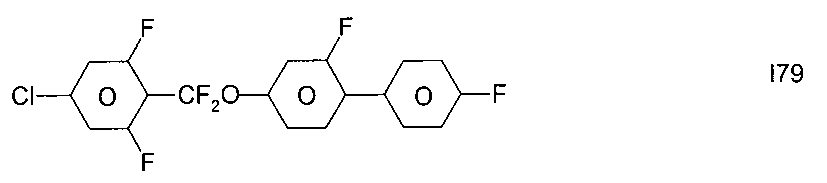

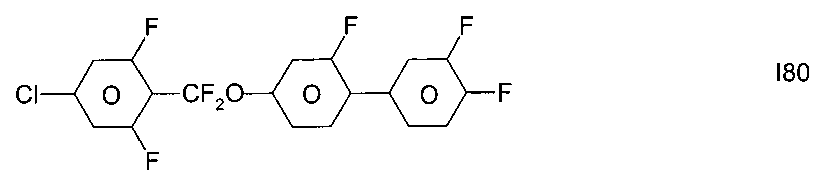

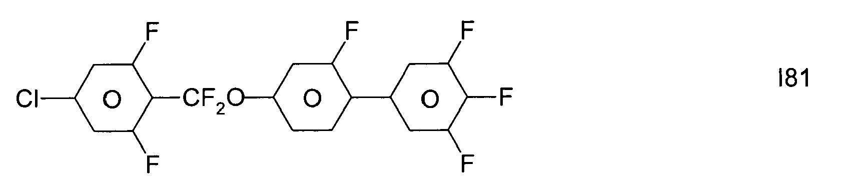

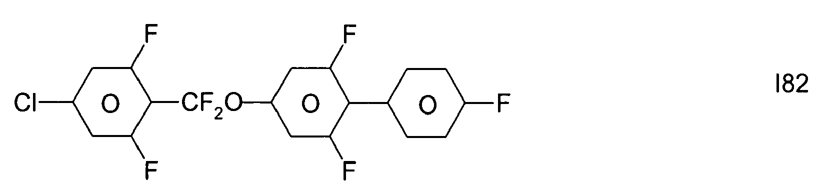

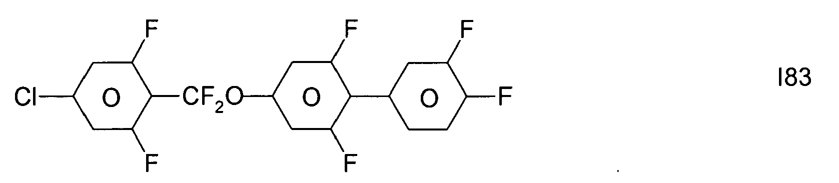

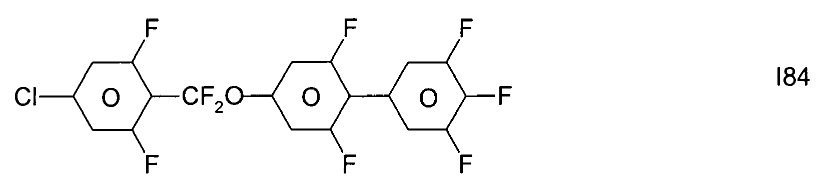

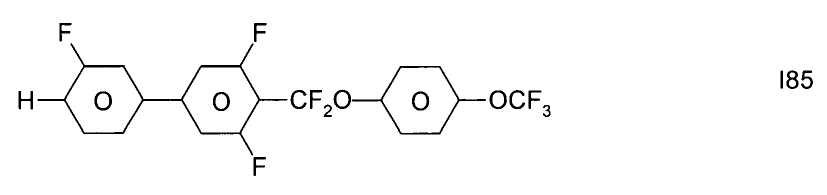

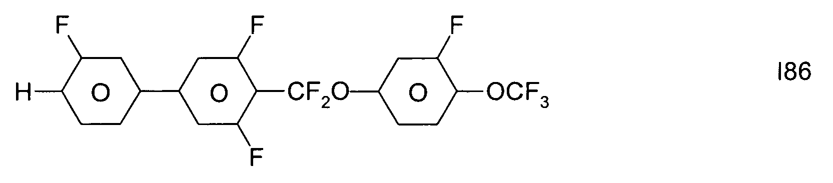

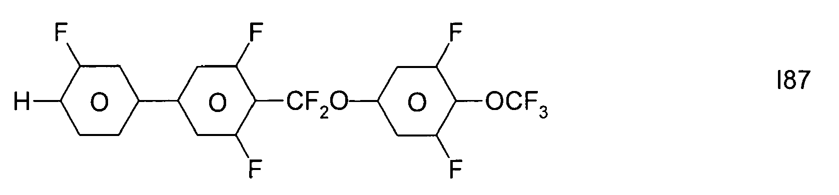

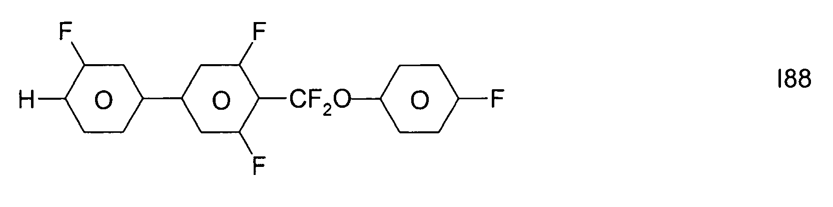

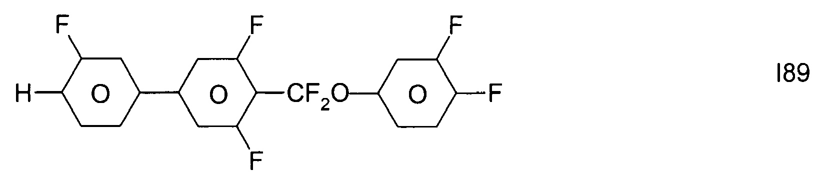

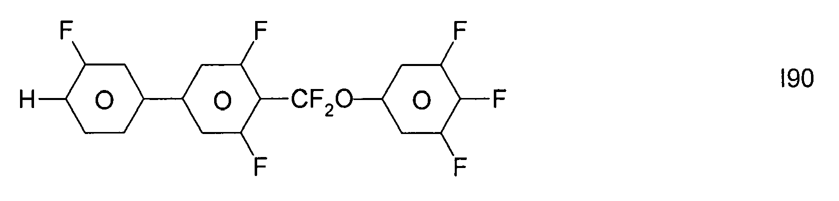

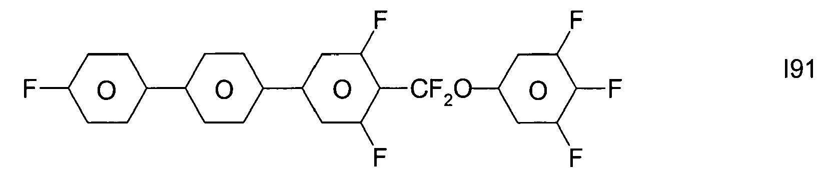

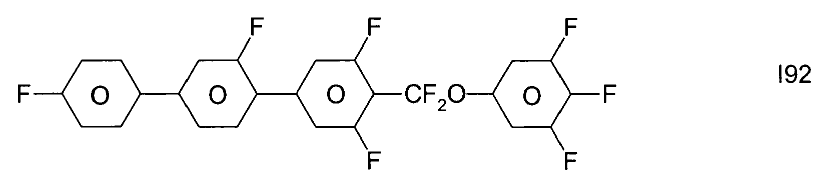

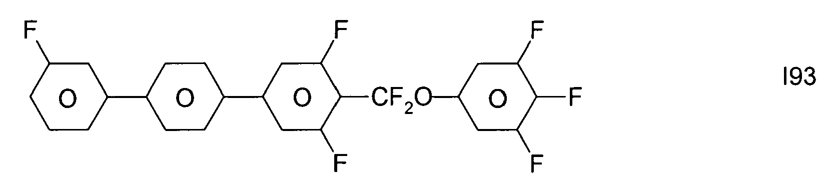

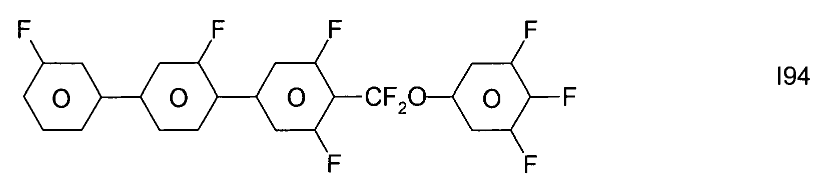

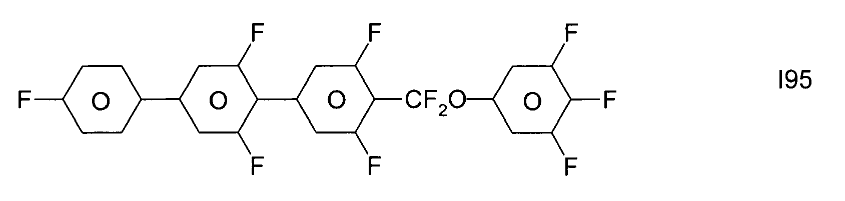

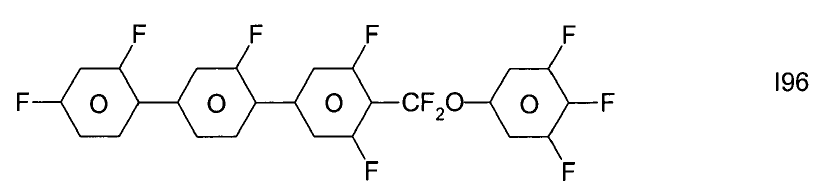

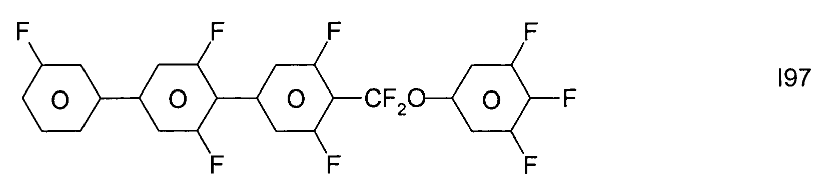

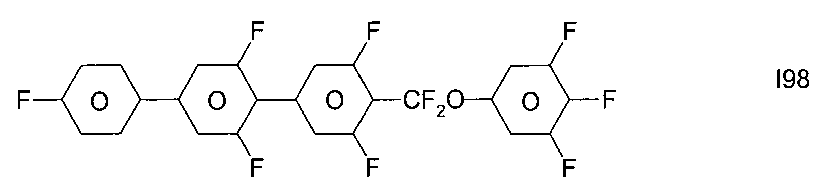

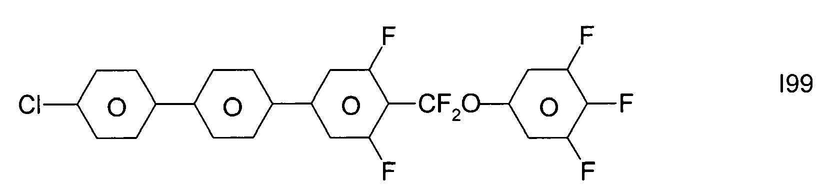

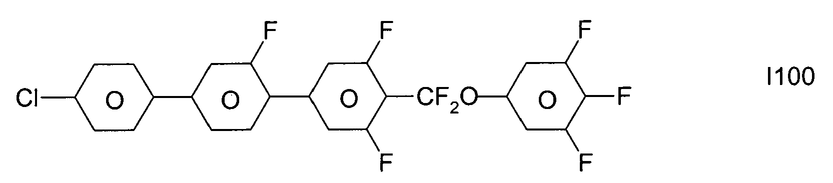

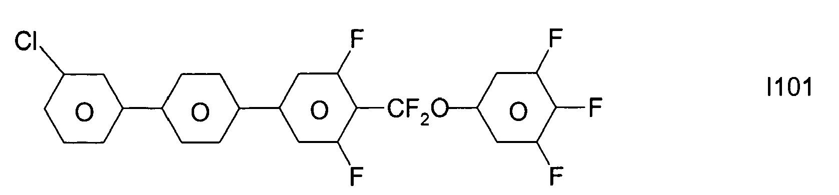

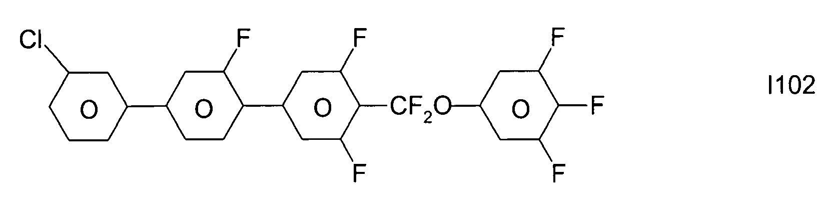

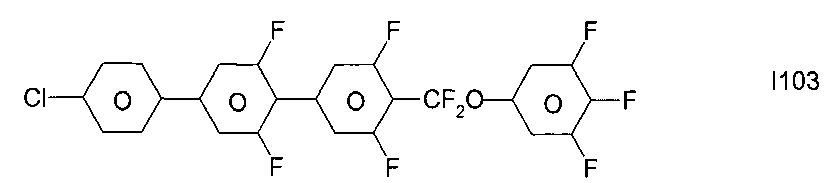

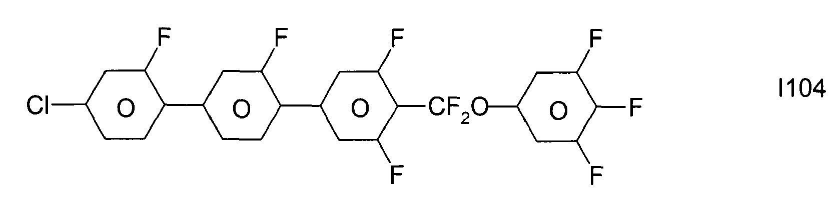

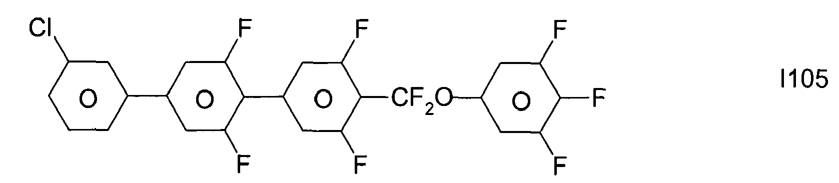

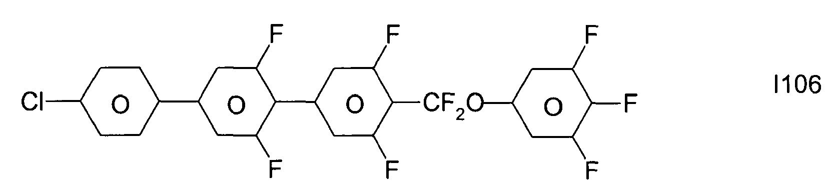

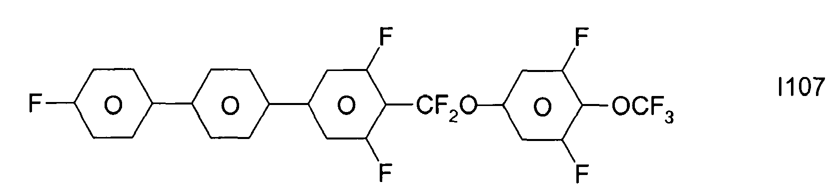

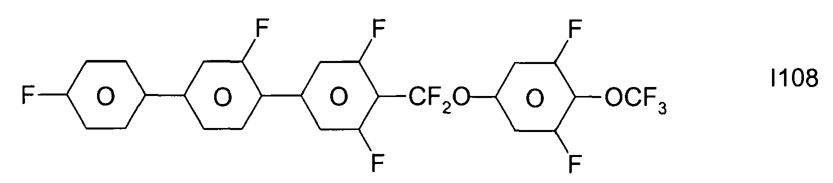

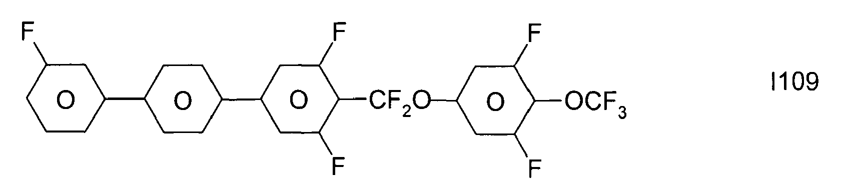

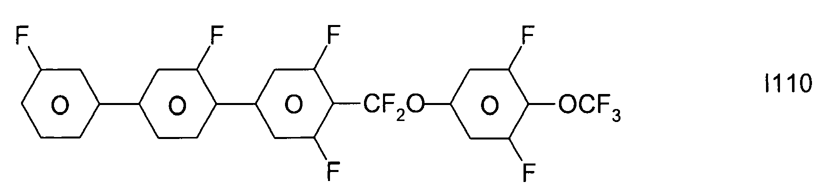

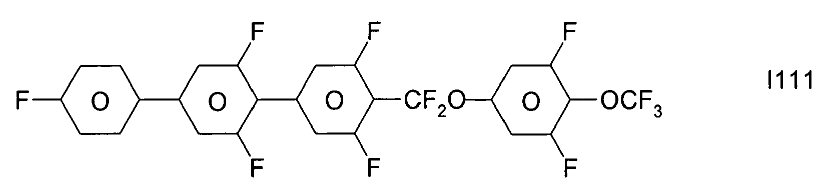

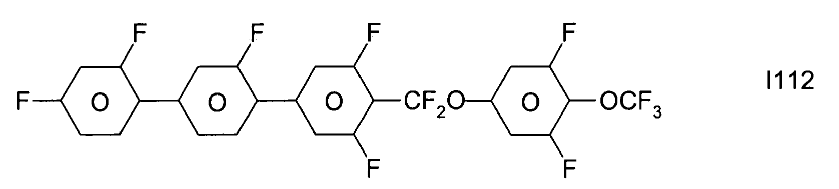

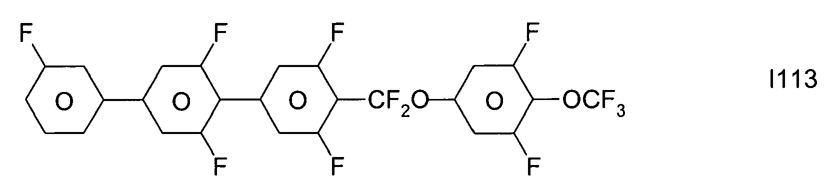

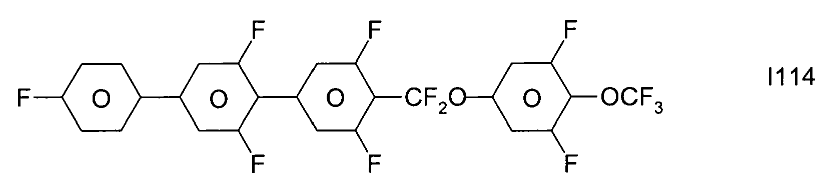

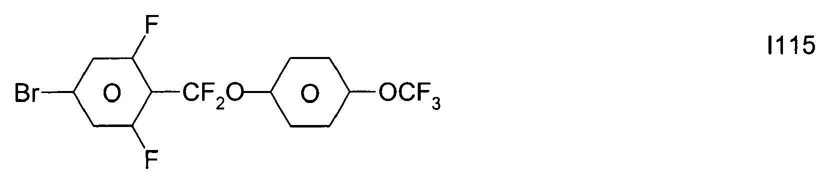

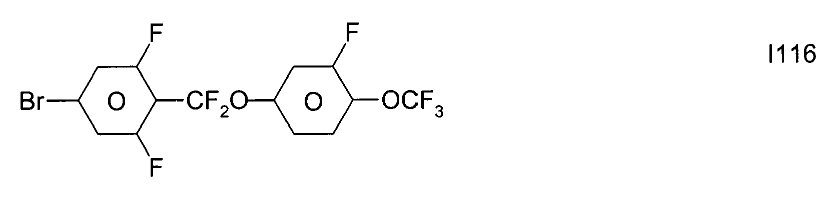

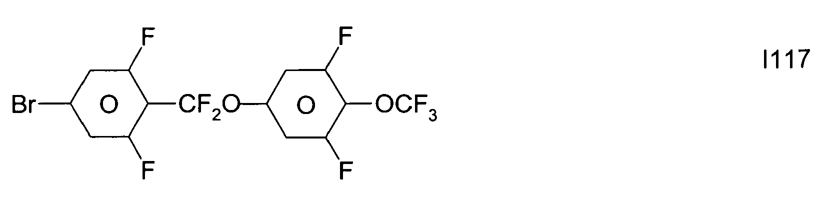

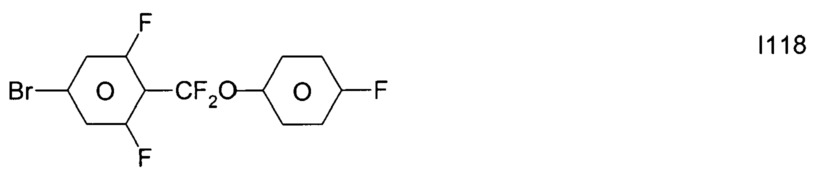

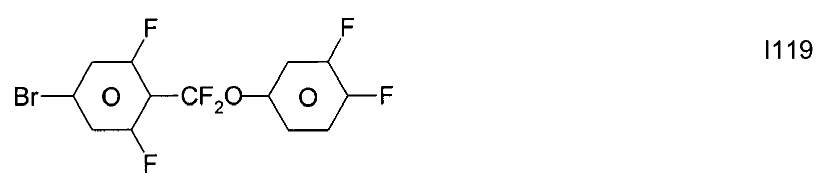

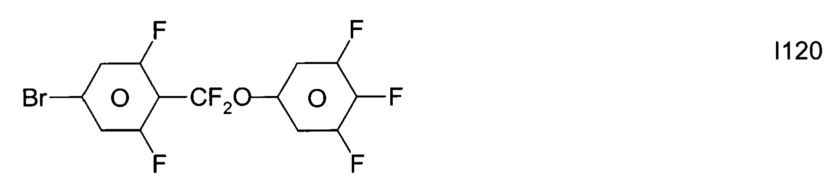

9. Liquid-crystalline medium comprising at least two mesogenic compounds, **characterised in that** it comprises at least one compound of the formula I according to at least one of Claims 1 to 8.

10. Liquid-crystalline medium according to Claim 9, **characterised in that** it comprises one or more compounds selected from the group consisting of the general formulae II to IX 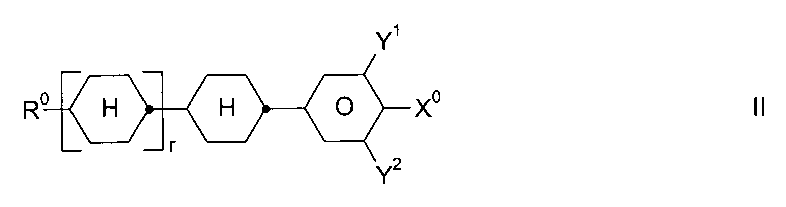 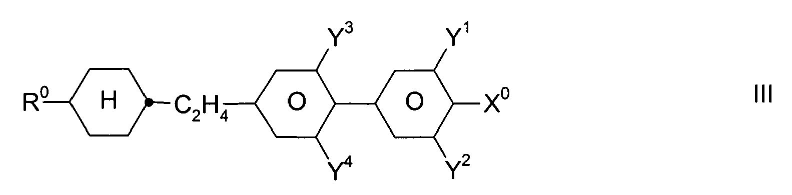 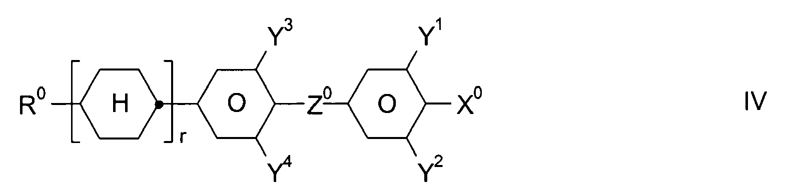 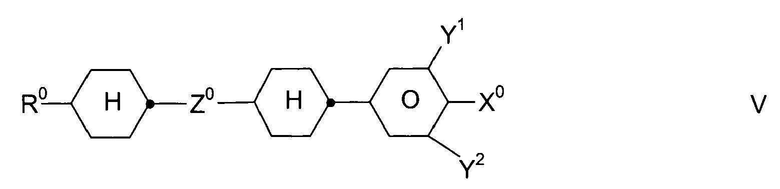 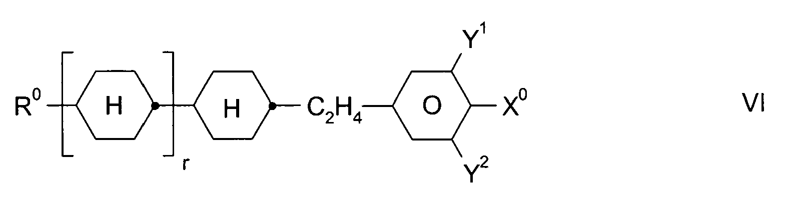 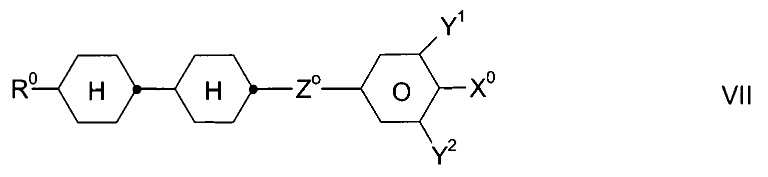 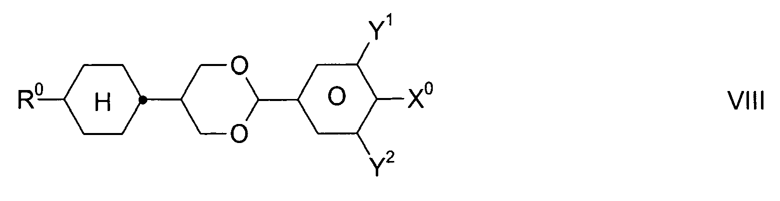 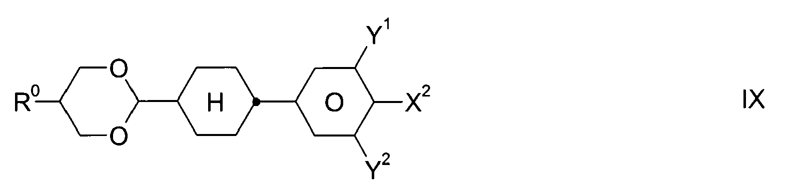 in which
R⁰ denotes H, n-alkyl, oxaalkyl, fluoroalkyl, alkenyloxy or alkenyl, each having up to 9 C atoms,
X⁰ denotes F, Cl, halogenated alkyl, halogenated alkenyl, halogenated alkenyloxy or halogenated alkoxy having up to 7 C atoms,
Z⁰ denotes -CH=CH-, -C₂H₄-, -(CH₂)₄-, -C₂F₄-, -CH₂O-, -OCH₂-, -CF=CF-, -CF₂O-, -OCF₂- or -COO-,
Y¹, Y², Y³ and Y⁴ each, independently of one another, denote H or F, and
r denotes 0 or 1.

11. Use of the liquid-crystalline medium according to Claim 9 or 10 for electro-optical purposes.

12. Electro-optical liquid-crystal display containing a liquid-crystalline medium according to Claim 9 or 10.

13. Use of the liquid-crystalline compounds according to one of Claims 1 to 8 as synthetic building block, crop-protection agent, for the preparation of a pharmaceutical and as component in liquid-crystalline media.

14. Process for the preparation of liquid-crystalline compounds, **characterised in that** a compound of the formula I according to at least one of Claims 1 to 8 is used as synthetic building block.

## Revendications

1. Composés cristallins liquides de la formule I 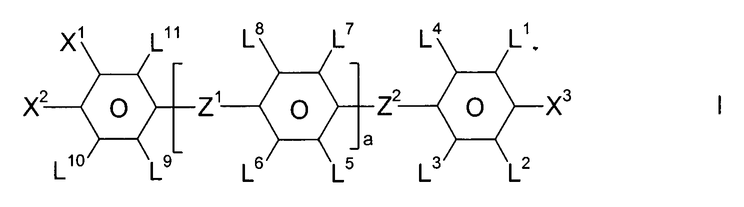 dans laquelle
X¹ et X² chacun indépendamment de l'autre, représentent F, Cl, Br, I, l'un des radicaux X¹ ou X² représente également H,
X³ représente F, Cl, CN, NCS, SF₅ ou OCF₃,
Z¹ et Z² chacun indépendamment de l'autre, représentent -CO-O-, -O-CO-, -CF₂O-, -OCF₂-, -CH₂O-, -OCH₂-, -CH₂CH₂-, -(CH₂)₄-, -C₂F₄-, -CH₂CF₂-, -CF₂CH₂-, -CF=CF-, -CH=CH-, -C≡C- ou une liaison simple, étant entendu qu'au moins l'un des ponts Z¹ et Z² représente -CF₂O- ou -OCF₂-,
a représente 0, 1 ou 2, et
L¹ à L¹¹ chacun indépendamment des autres, représentent H ou F.

2. Composés cristallins liquides selon la revendication 1, **caractérisés en ce que** X¹ = F ou Cl et X² = H et X³ = F ou OCF₃.

3. Composés cristallins liquides selon la revendication 1 ou 2, **caractérisés en ce que** X³ = F.

4. Composés cristallins liquides selon l'une des revendications 1 à 3, **caractérisés en ce que** X² = Br.

5. Composés cristallins liquides selon la revendication 1 ou 4, **caractérisés en ce que** a = 1.

6. Composés cristallins liquides selon l'une des revendications 1 à 5, **caractérisés en ce que** L¹ représente fluor et L² représente fluor ou hydrogène.

7. Composés cristallins liquides selon la revendication 6, **caractérisés en ce que** L² et L³ représentent fluor.

8. Composés cristallins liquides des formules I1 à I120

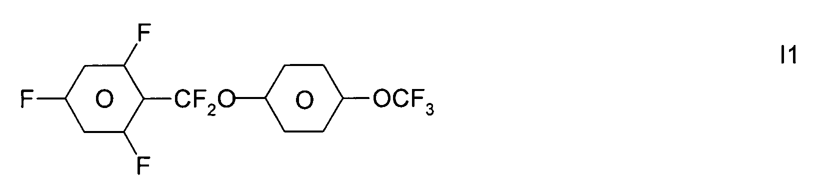

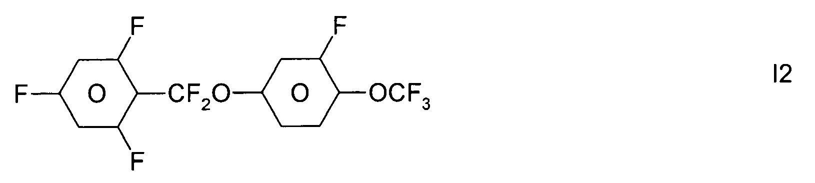

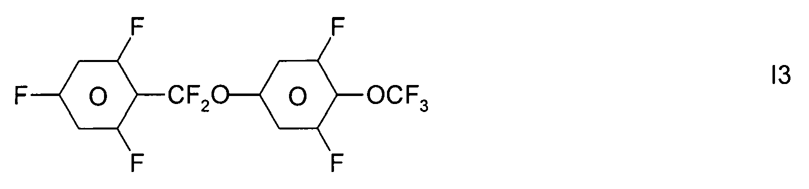

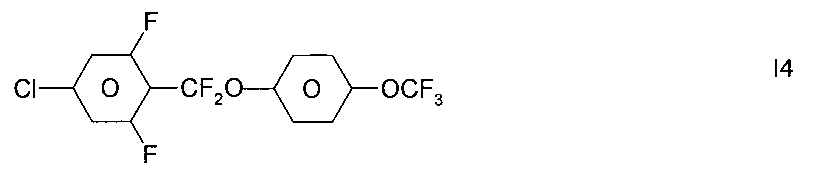

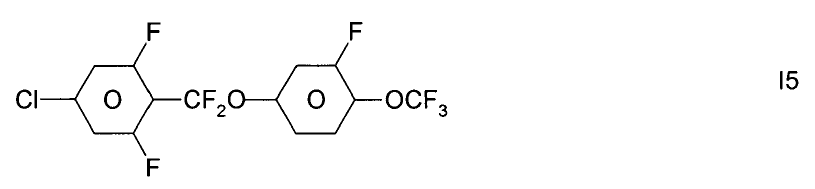

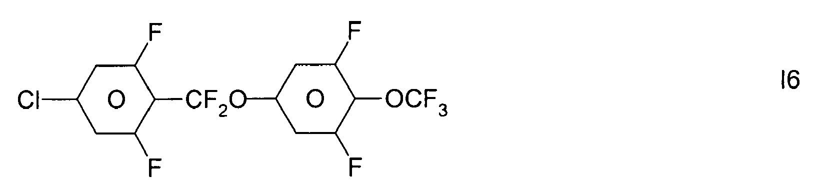

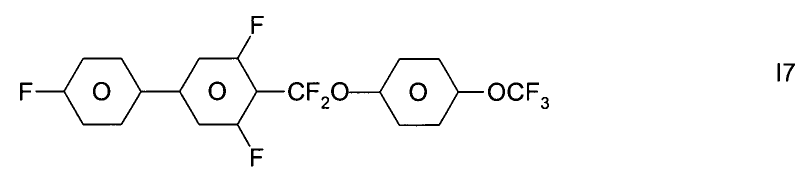

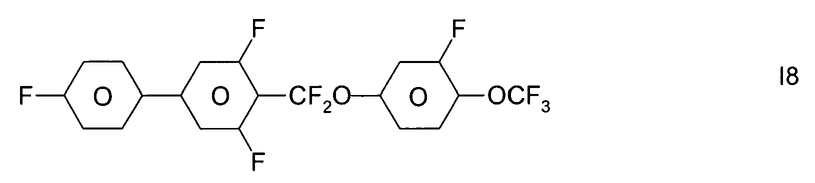

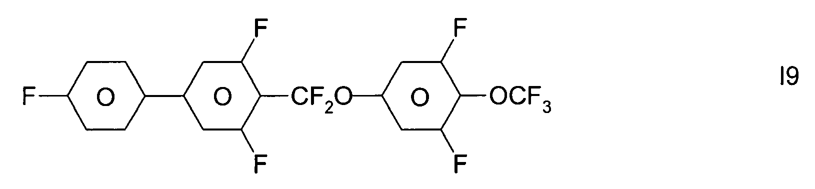

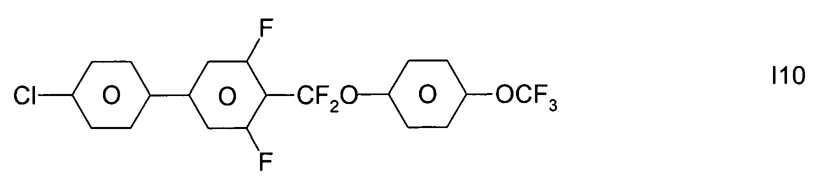

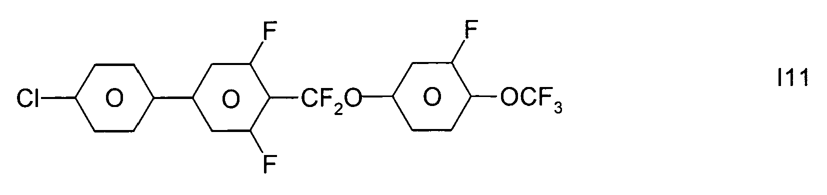

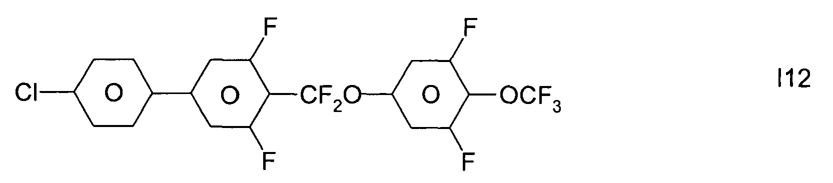

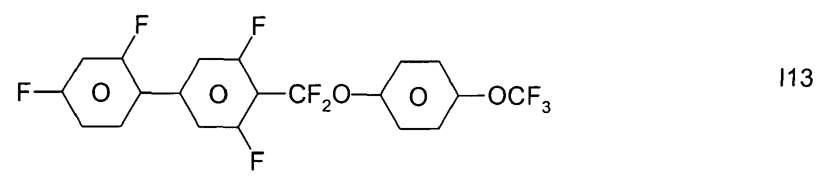

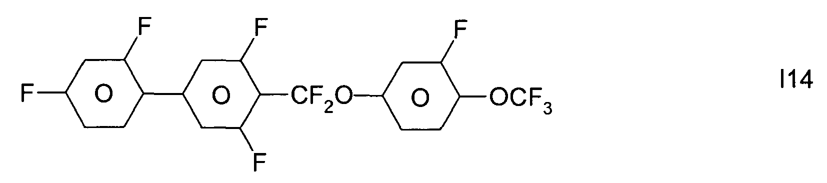

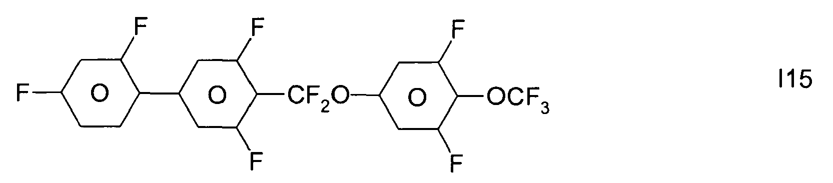

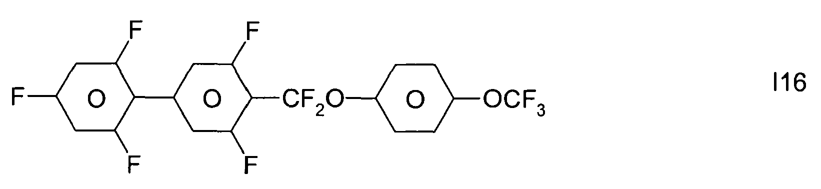

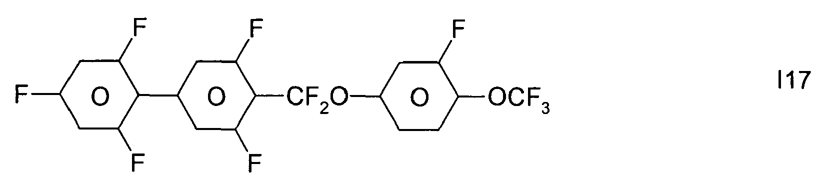

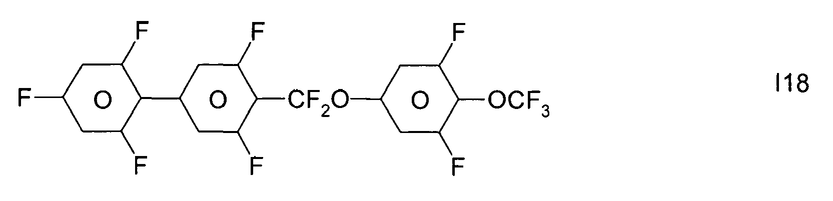

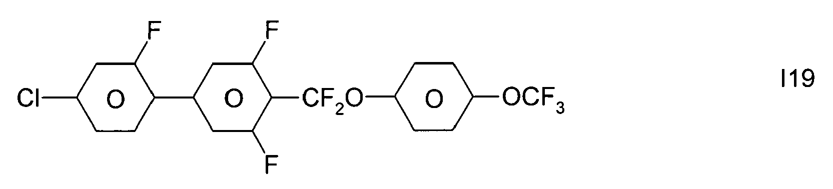

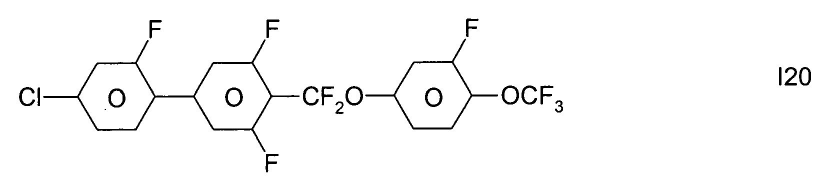

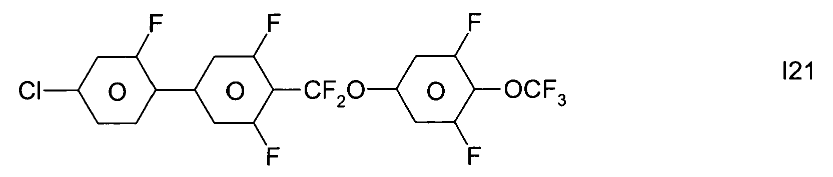

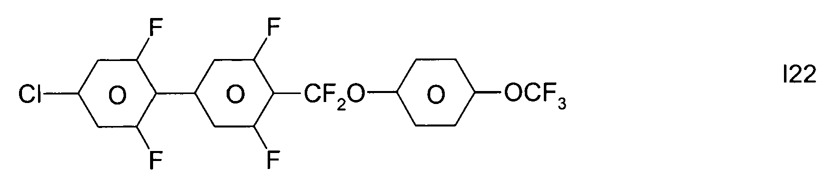

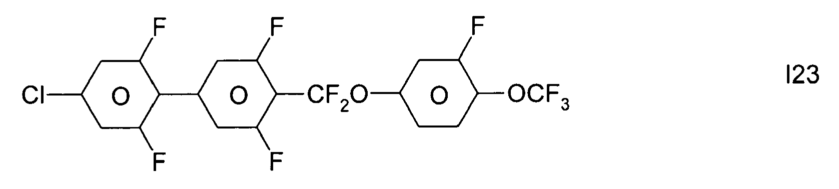

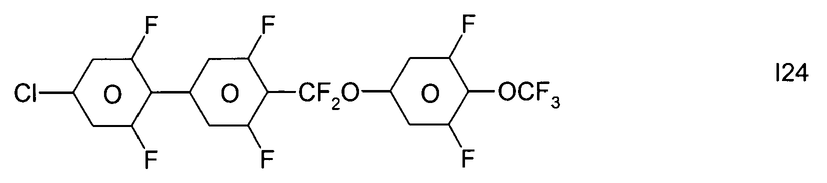

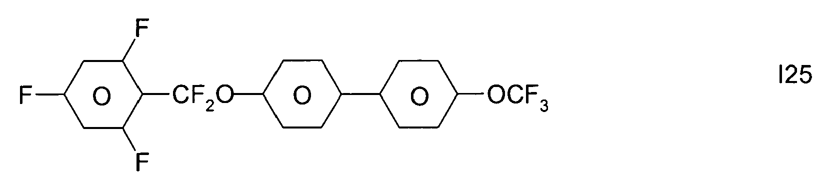

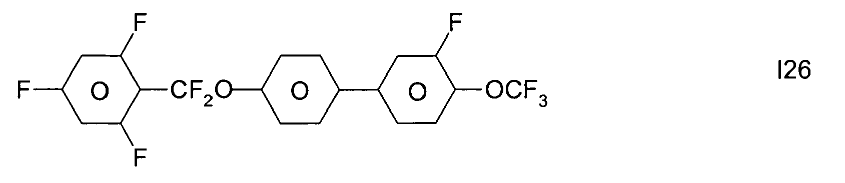

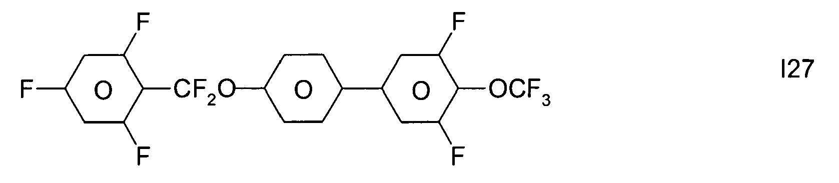

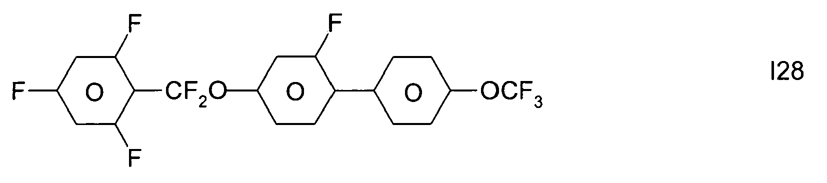

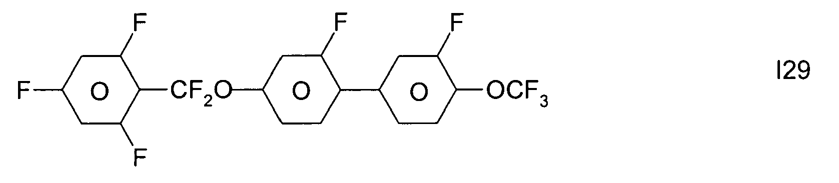

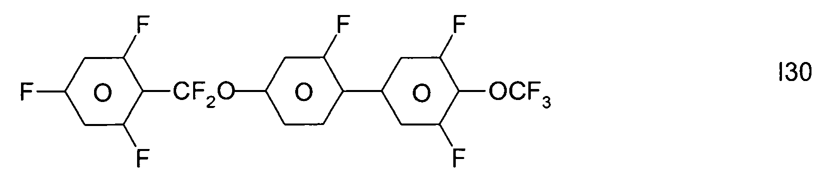

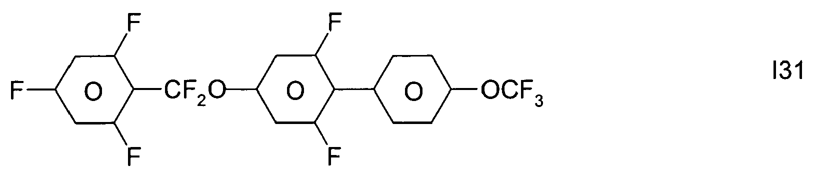

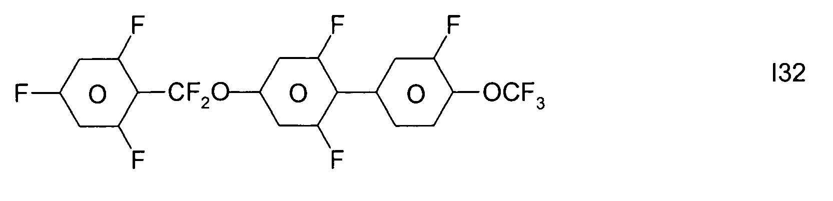

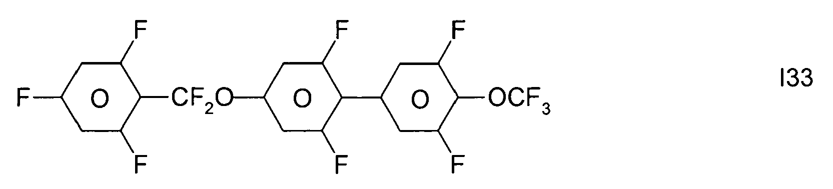

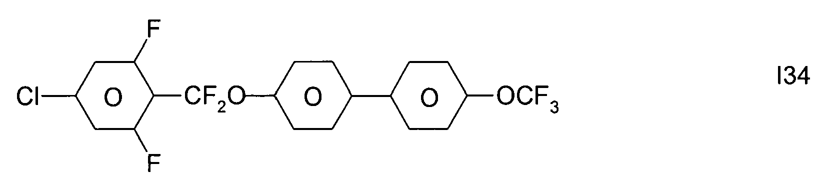

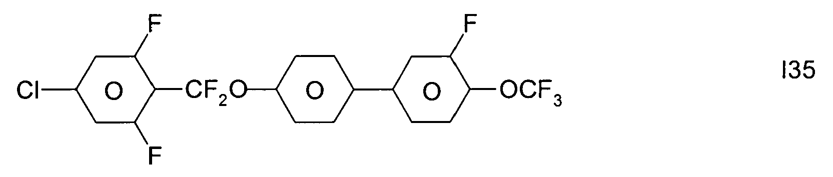

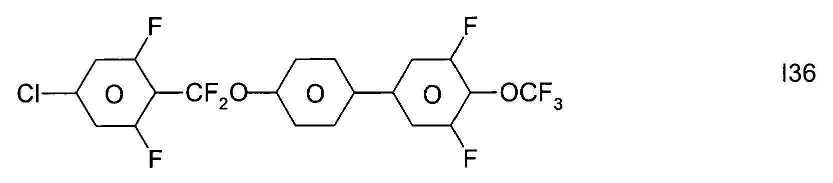

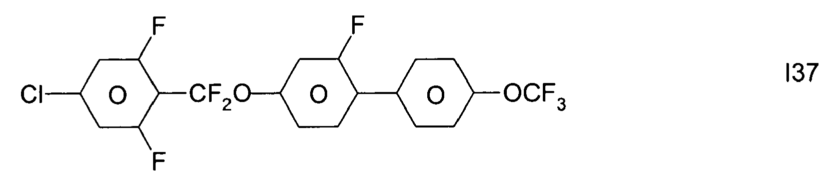

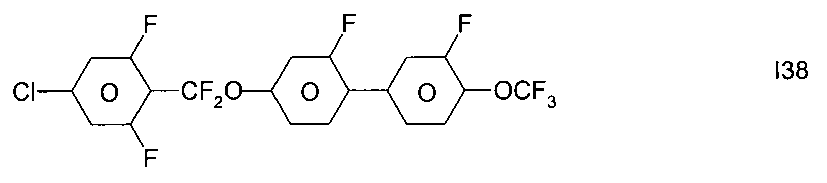

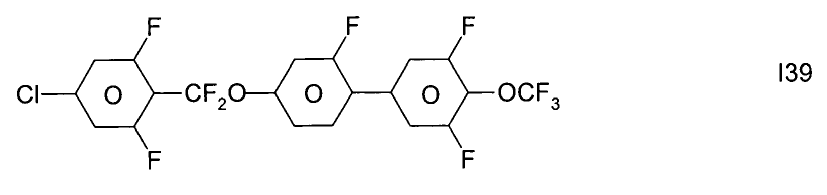

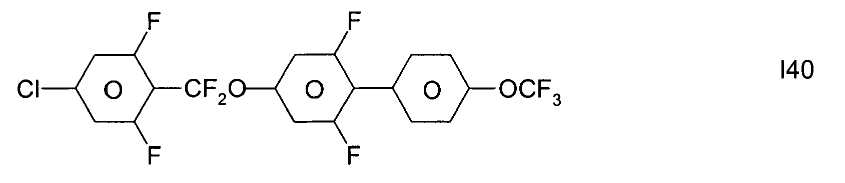

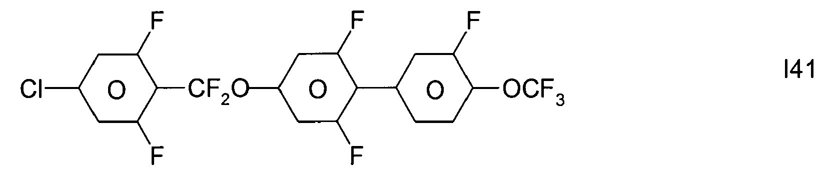

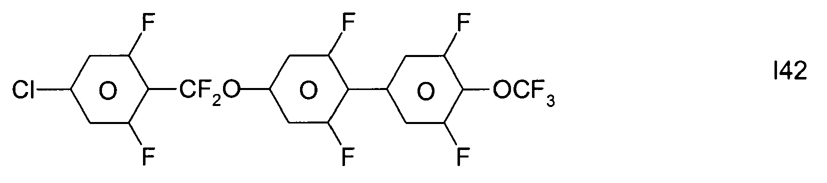

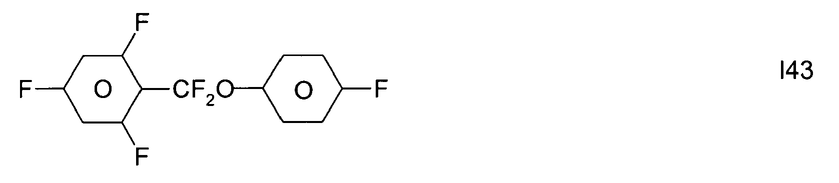

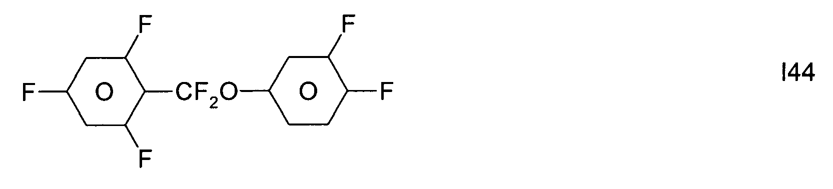

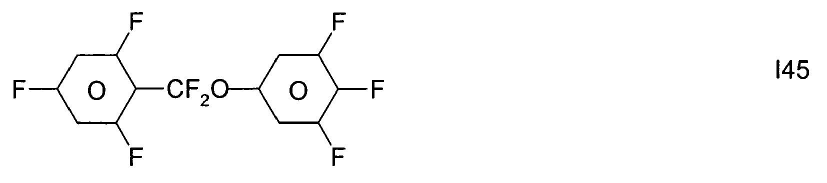

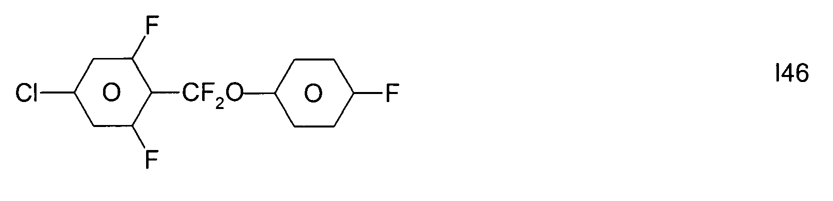

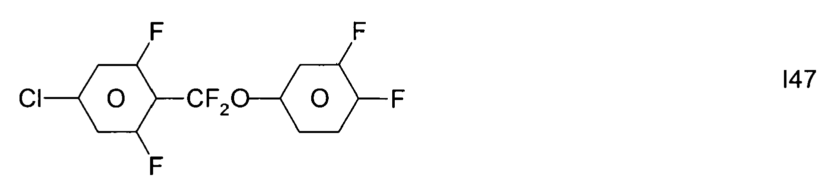

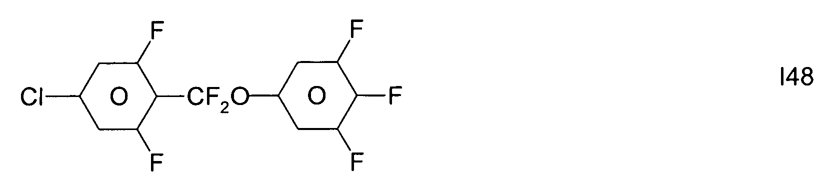

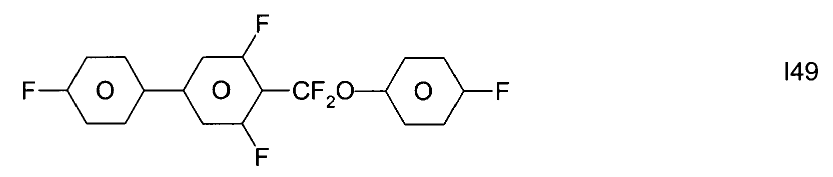

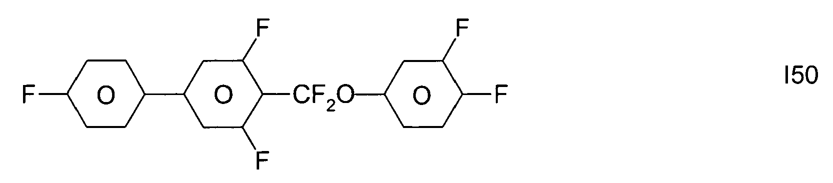

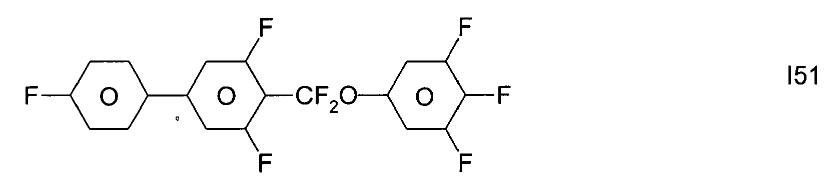

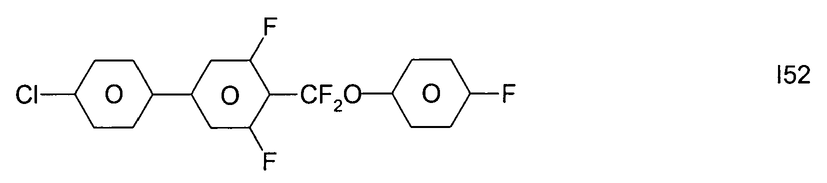

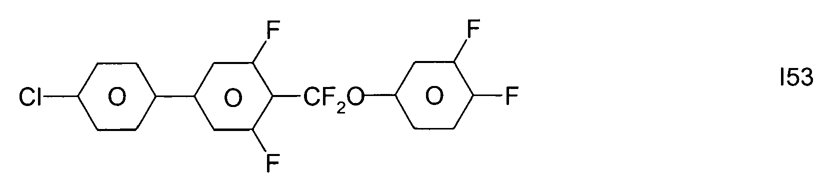

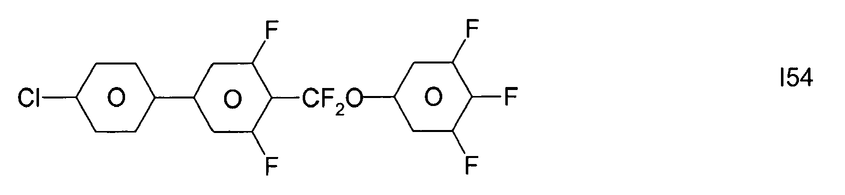

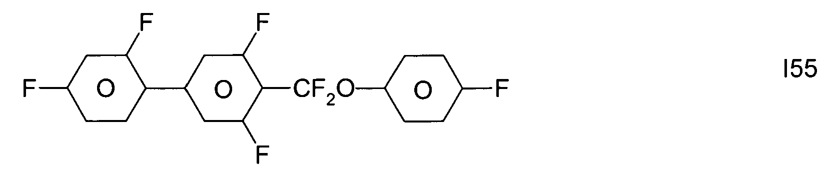

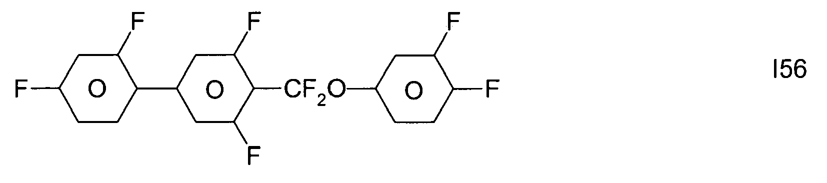

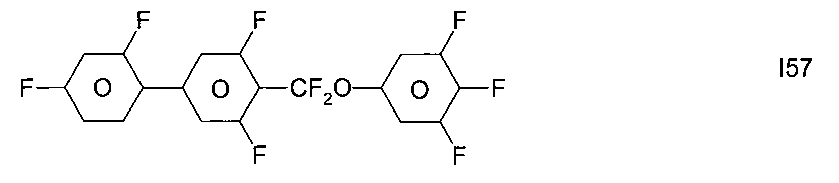

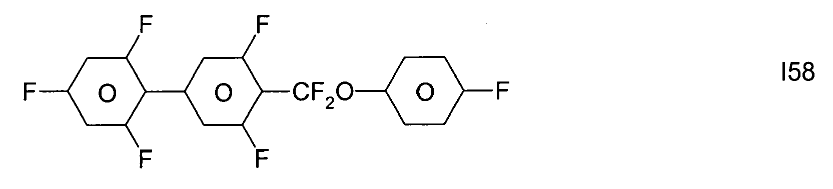

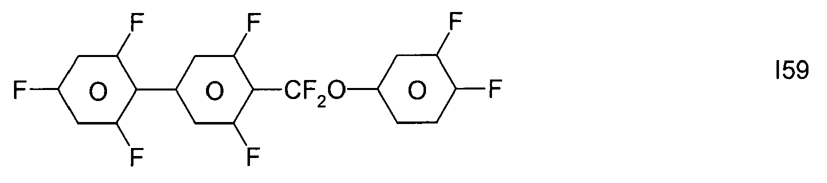

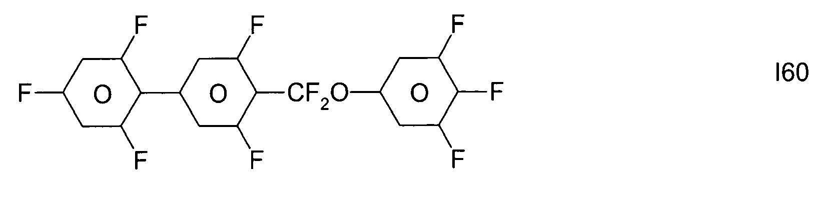

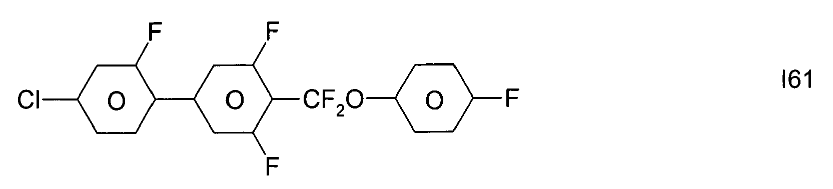

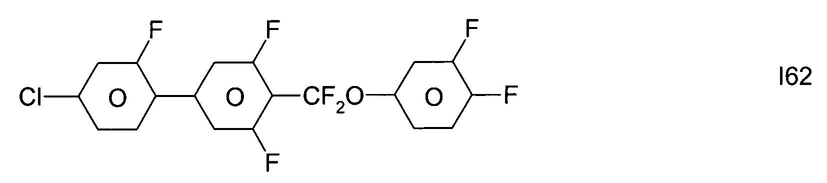

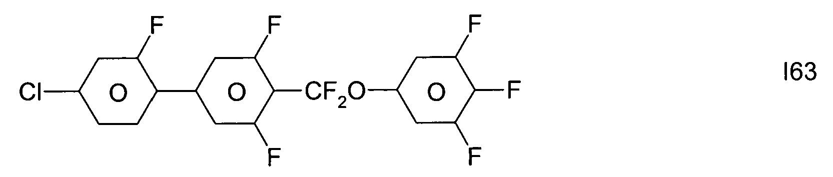

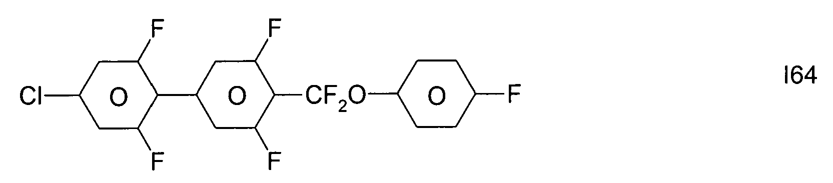

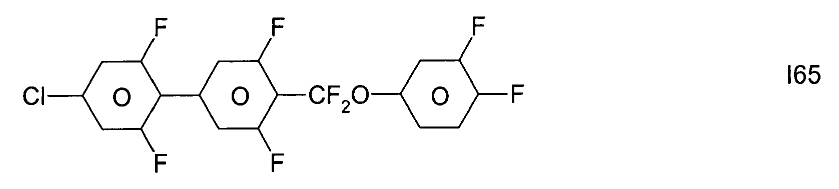

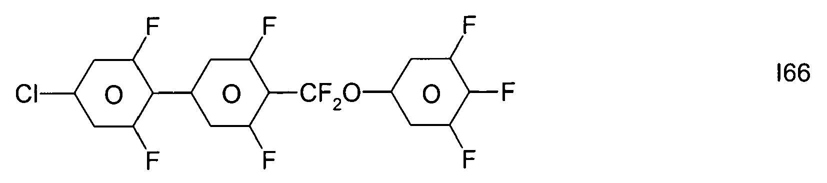

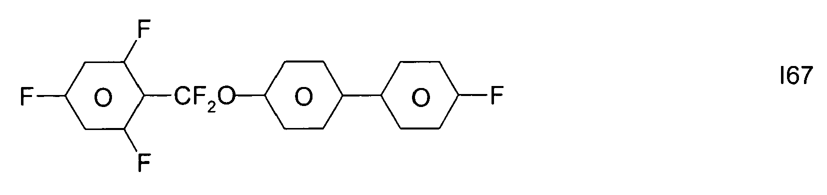

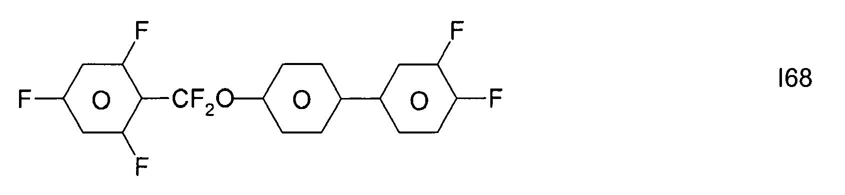

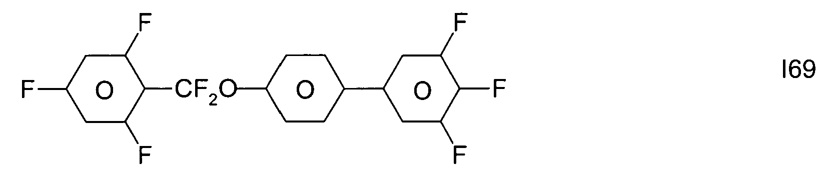

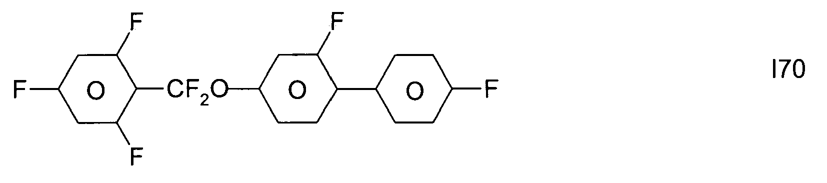

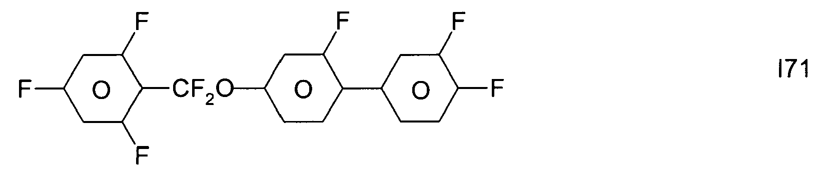

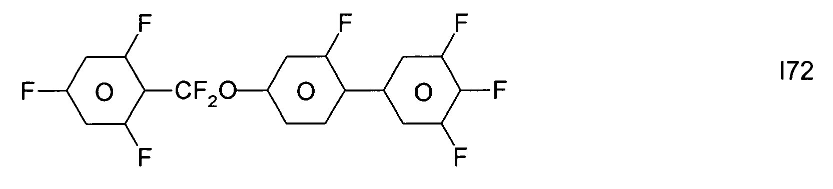

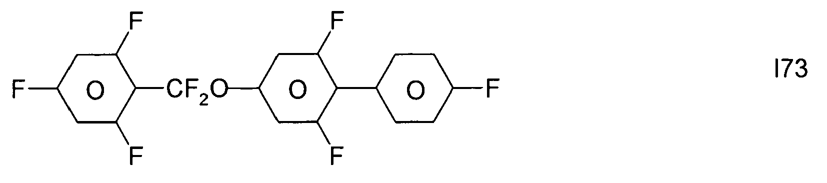

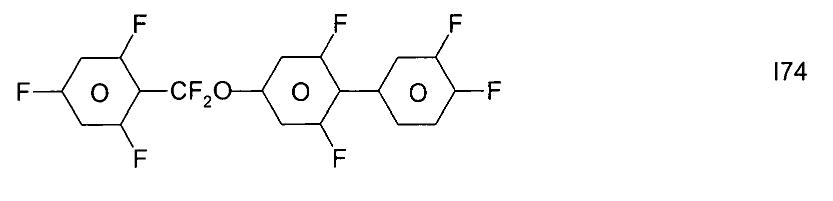

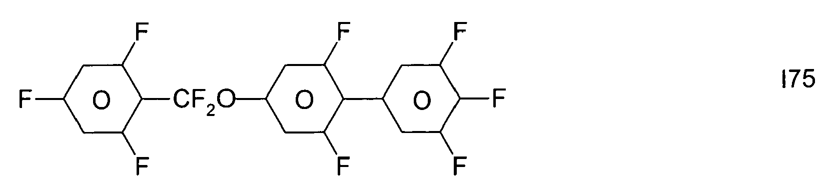

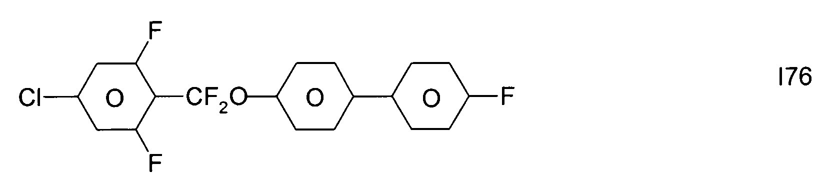

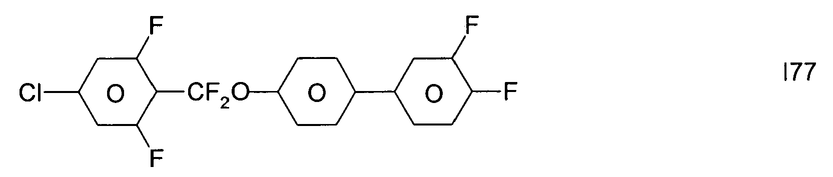

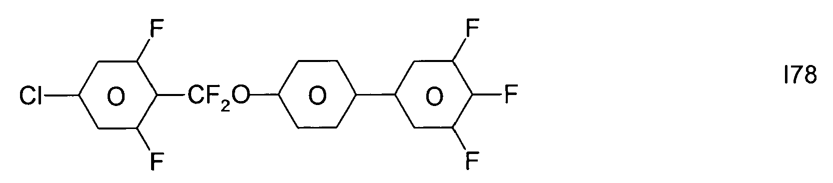

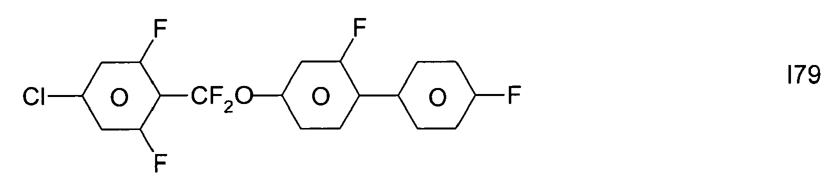

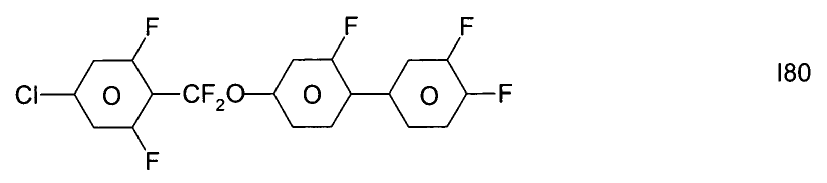

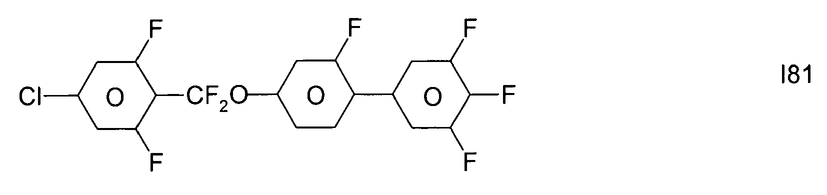

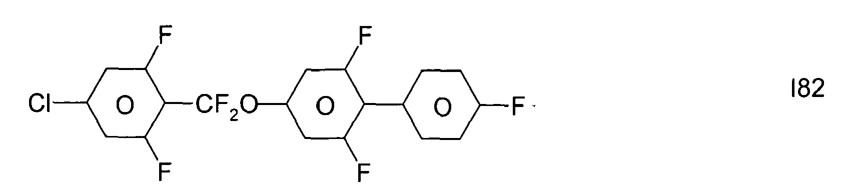

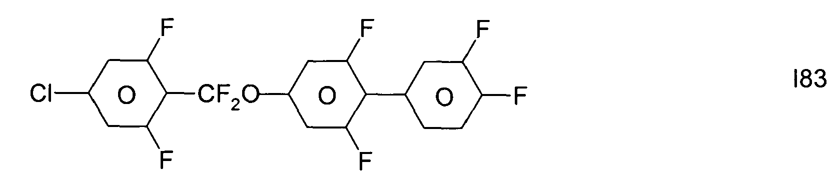

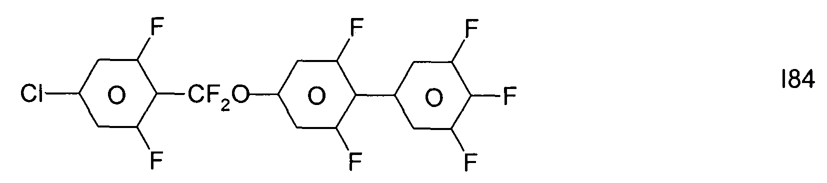

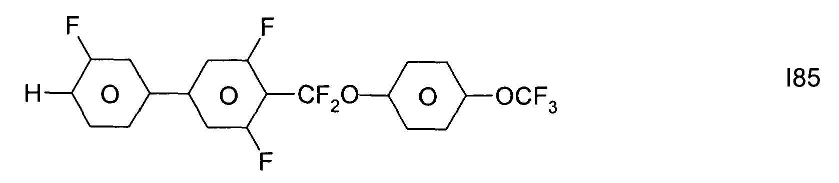

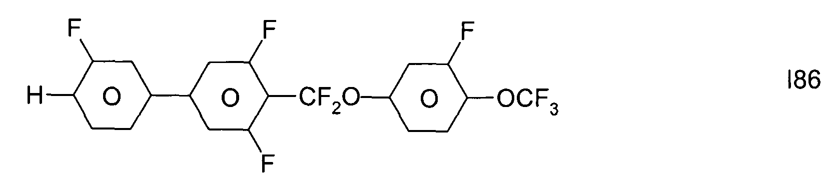

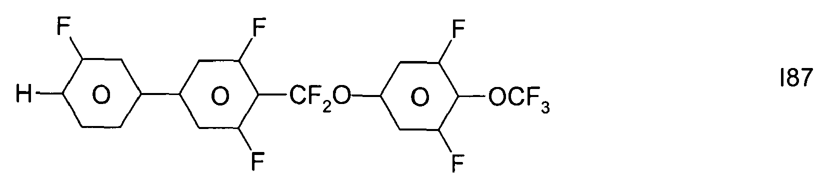

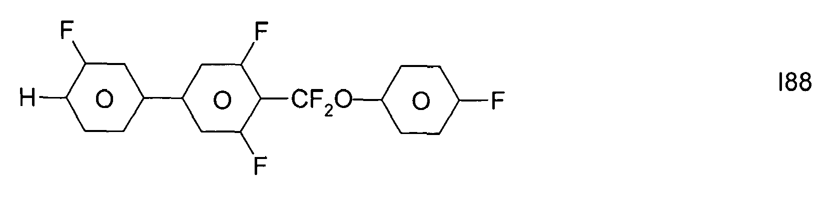

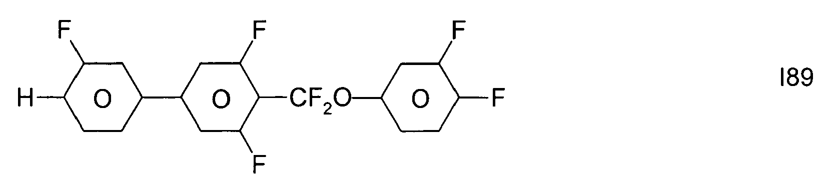

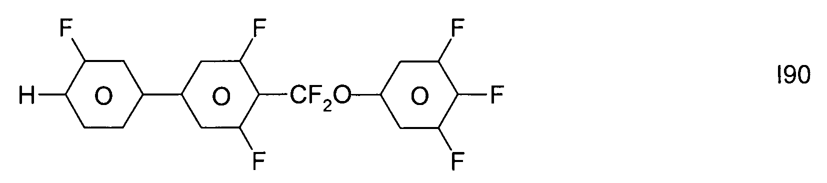

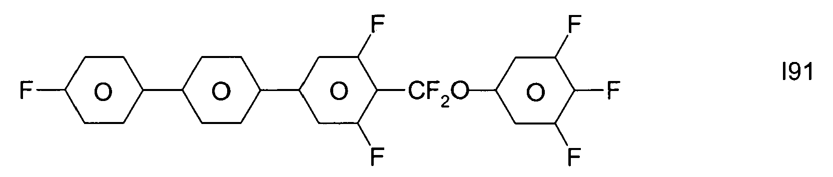

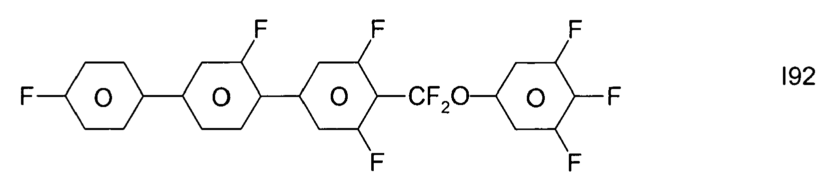

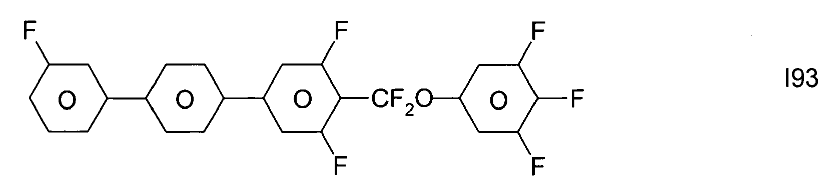

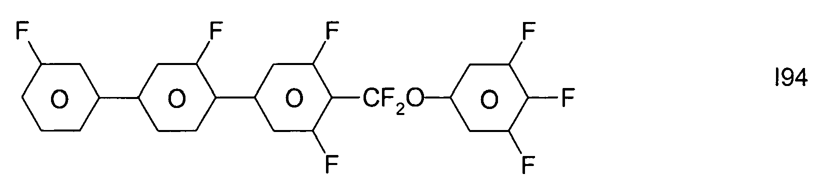

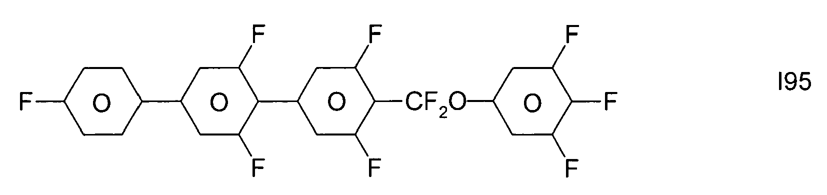

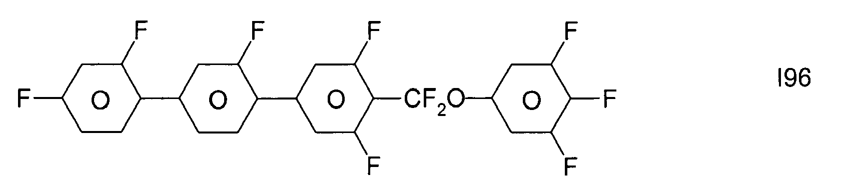

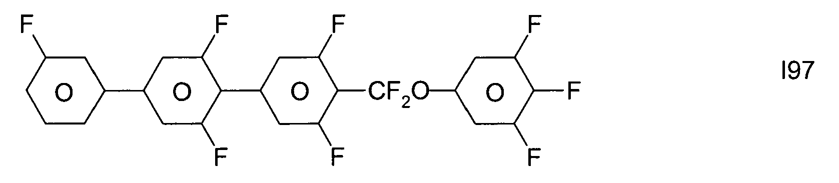

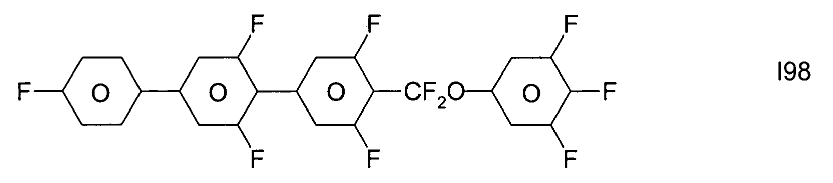

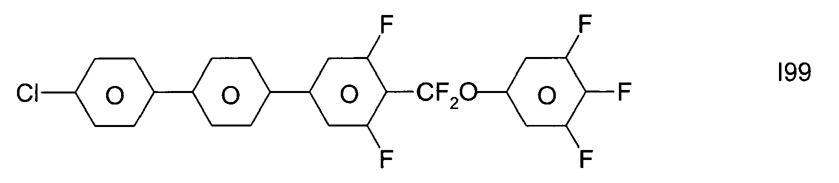

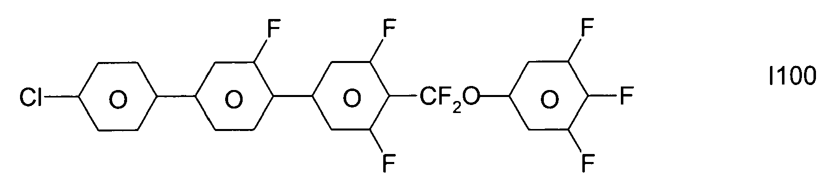

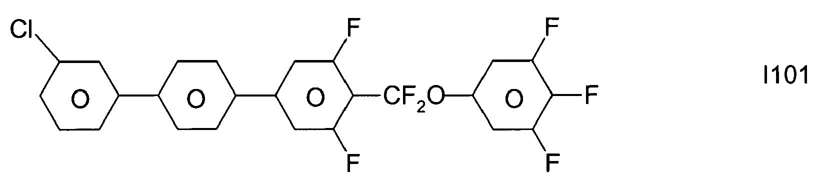

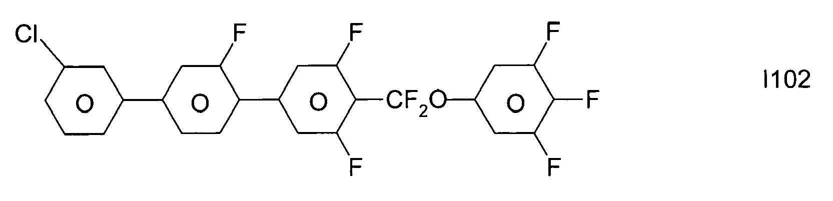

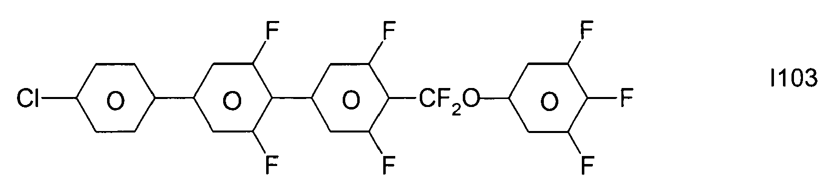

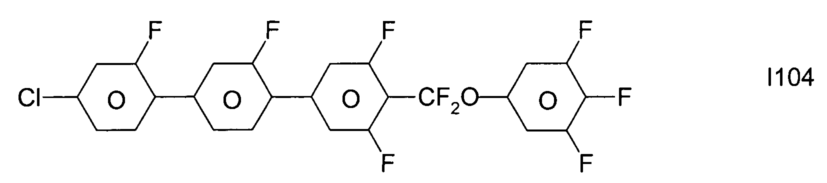

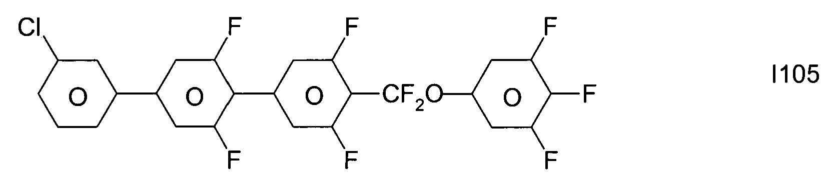

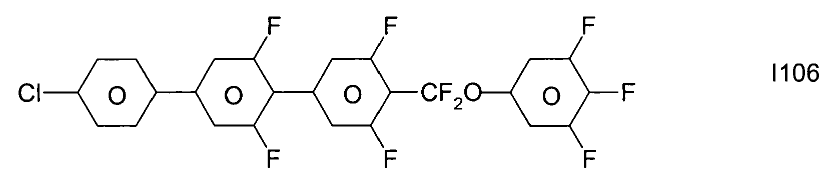

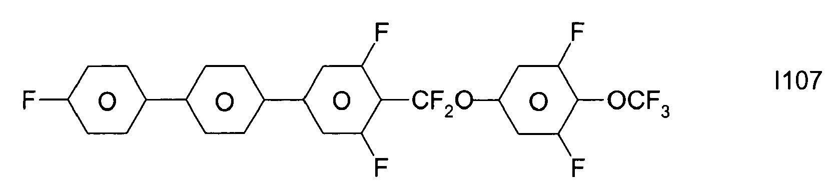

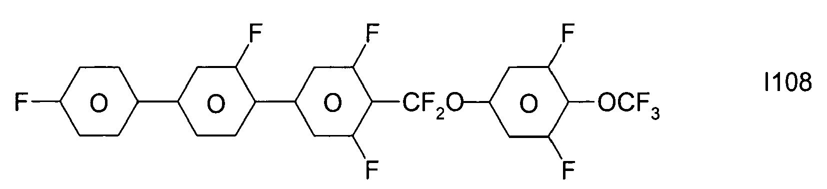

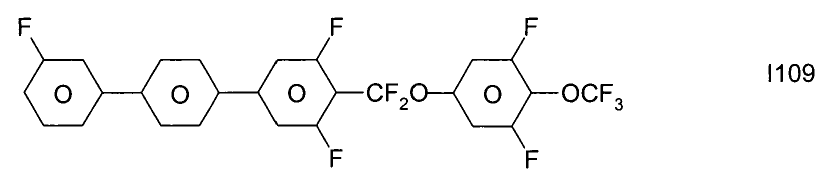

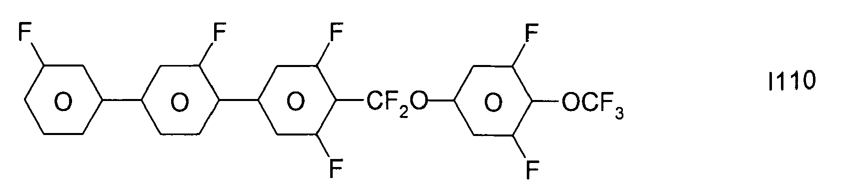

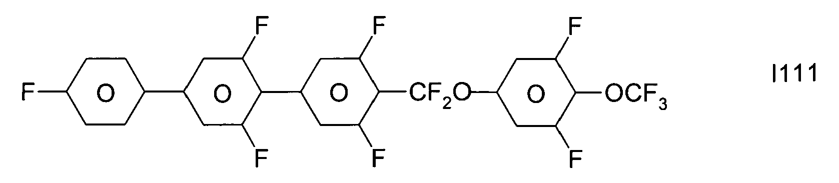

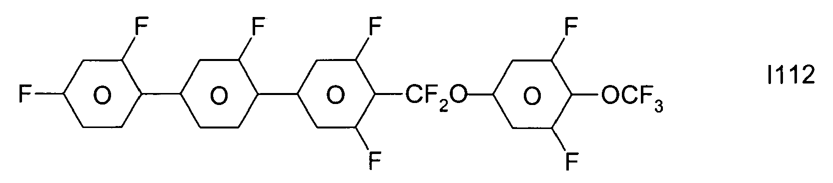

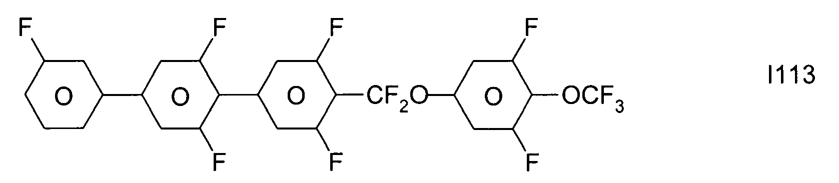

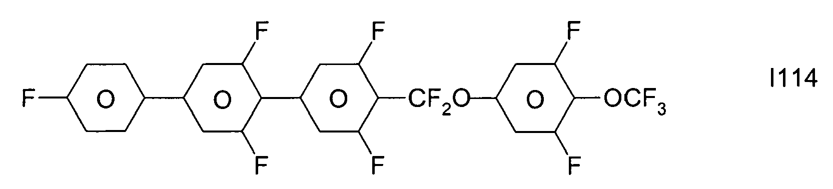

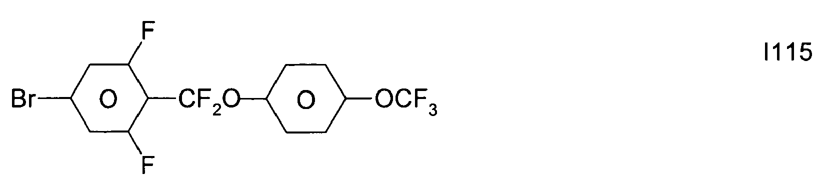

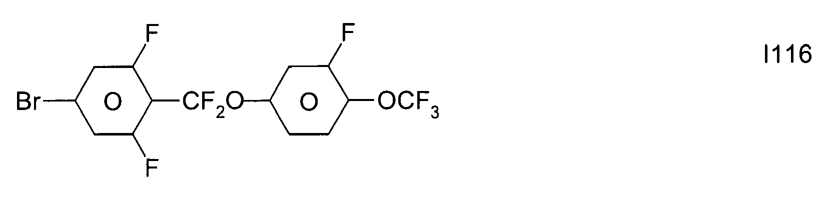

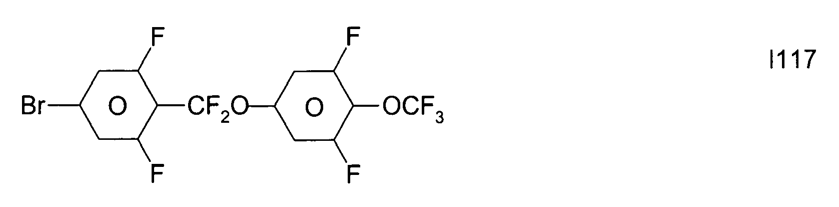

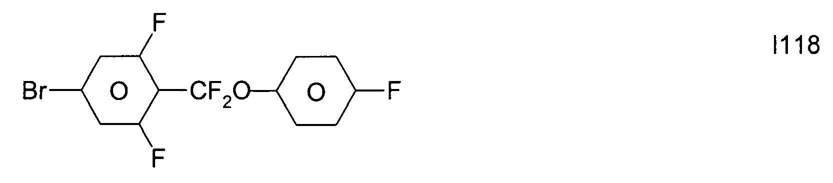

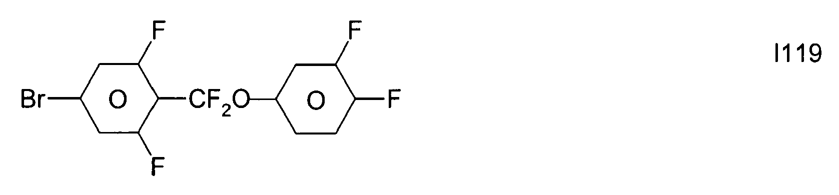

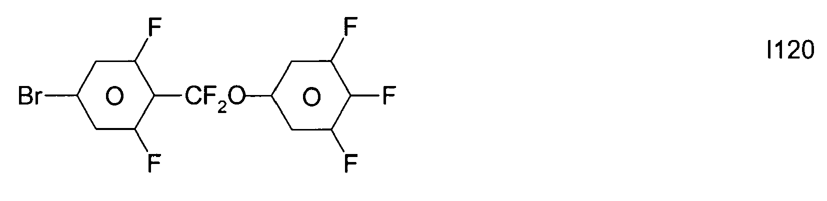

9. Milieu cristallin liquide comprenant au moins deux composés mésogènes, **caractérisé en ce qu'**il comprend au moins un composé de la formule I selon au moins l'une des revendications 1 à 8.

10. Milieu cristallin liquide selon la revendication 9, **caractérisé en ce qu'**il comprend un ou plusieurs composés choisis parmi le groupe constitué par les formules générales II à IX 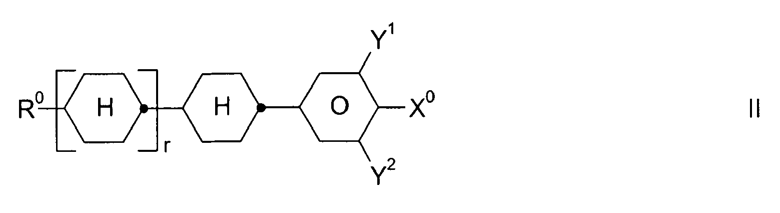 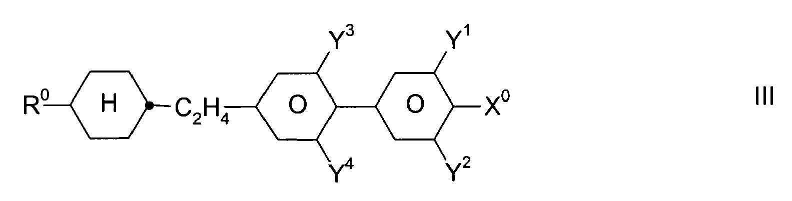 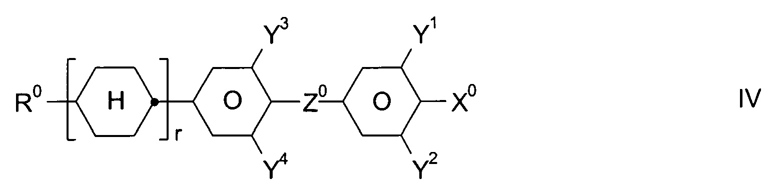 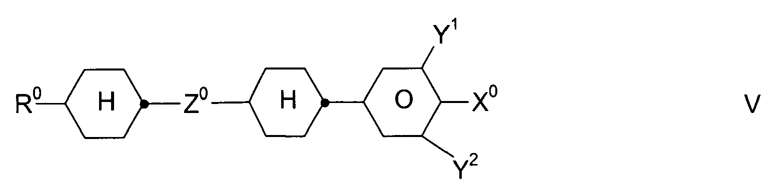 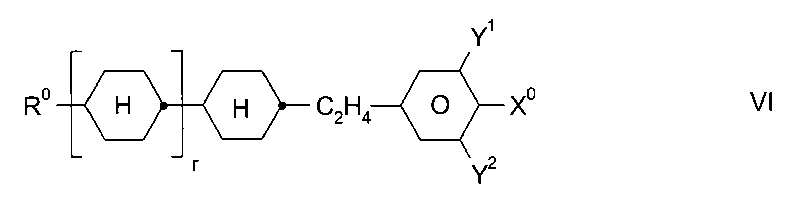 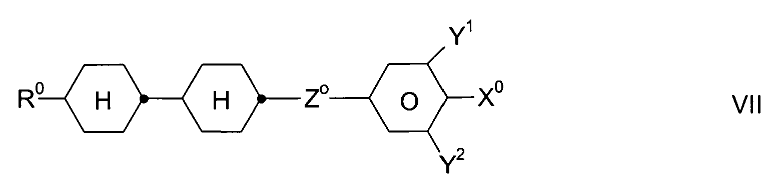 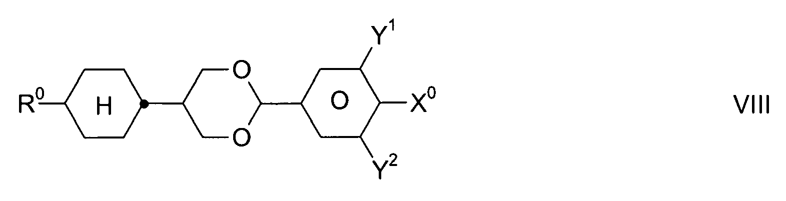 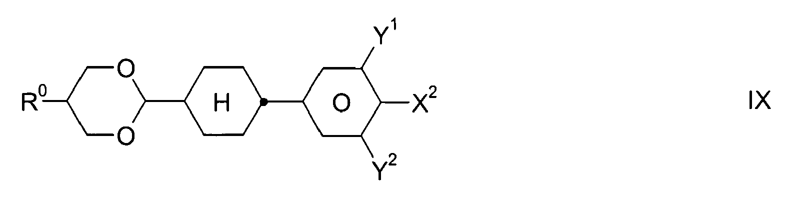 dans lesquelles
R⁰ représente H, n-alkyle, oxaalkyle, fluoroalkyle, alkényloxy ou alkényle dont chacun comporte jusqu'à 9 atomes de C,
X⁰ représente F, Cl, alkyle halogéné, alkényle halogéné, alkényloxy halogéné ou alcoxy halogéné comportant jusqu'à 7 atomes de C,
Z⁰ représente -CH=CH-, -C₂H₄-, -(CH₂)₄-, -C₂F₄-, -CH₂O-, -OCH₂-, -CF=CF-, -CF₂O-, -OCF₂- ou -COO-,
Y¹, Y², Y³ et Y⁴ chacun indépendamment des autres, représentent H ou F, et
r représente 0 ou 1.

11. Utilisation du milieu cristallin liquide selon la revendication 9 ou 10 à des fins électro-optiques.

12. Affichage à cristaux liquides électro-optique contenant un milieu cristallin liquide selon la revendication 9 ou 10.

13. Utilisation des composés cristallins liquides selon l'une des revendications 1 à 8 en tant que bloc de construction synthétique, en tant qu'agent de protection des cultures, pour la préparation d'un produit pharmaceutique et en tant que composant dans des milieux cristallins liquides.

14. Procédé pour la préparation de composés cristallins liquides, **caractérisé en ce qu'**un composé de la formule I selon au moins l'une des revendications 1 à 8 est utilisé en tant que bloc de construction synthétique.
